# EUROPEAN PATENT APPLICATION

(11) **EP 4 534 257 A1**
(43) Date of publication of application: **09.04.2025**
(21) Application number: 22944895.6
(22) Date of filing: 02.06.2022
(51) Int. Cl.: B25J 9/18

(54) **MEASUREMENT SYSTEM, PROCESSING SYSTEM, MEASUREMENT METHOD, AND PROCESSING METHOD**

(71) Applicant: NIKON CORPORATION, Tokyo 140-8601 (JP)
(72) Inventor: NAKAMURA, Takashi, Tokyo 140-8601 (JP); MIYAKAWA, Tomoki, Tokyo 140-8601 (JP)
(74) Representative: Arnold & Siedsma
(86) International application number: PCT/JP2022/022460
(87) International publication number: WO 2023/233613

(57) **Abstract**

A measurement system includes: a first measurement apparatus that is configured to measure a position of a measurement member attached to a movable part of a processing apparatus; and a measurement control apparatus that is configured to control the first measurement apparatus. The measurement control apparatus includes: an arithmetic unit that calculates position transformation information, based on first position information indicating the position of the measurement member measured by the first measurement apparatus in a first state, and based on second position information indicating the predetermined position; and a transmission unit that transmits the calculated position transformation information to a processing control apparatus configured to control a movement of the movable part of the processing apparatus. The transmission unit transmits, to the processing control apparatus, third position information indicating the position of the measurement member measured by the first measurement apparatus in a second state.

## Description

### Technical Field

The present invention relates to technical fields of a measurement system, a processing system, a measurement method, and a processing method.

### Background Art

For a method used in this type of system, a calibration method in which positions in two separated systems are associated with each other (see Patent Literature 1).

### Citation List

### Patent Literature

Patent Literature 1: U.S. Patent No. 5,007,006

### Summary of Invention

A first aspect provides a measurement system including: a first measurement apparatus that is configured to apply measurement light to a measurement member attached to a movable part of a processing apparatus configured to process a processing target, and that is configured to measure a position of the measurement member; and a measurement control apparatus that is configured to control the first measurement apparatus, wherein the measurement control apparatus includes: an arithmetic unit that calculates position transformation information, based on first position information indicating the position of the measurement member measured by the first measurement apparatus using the measurement light applied to the measurement member in a first state in which a tool center point of the processing apparatus is located at a predetermined position, and based on second position information indicating the predetermined position; and a transmission unit that transmits the calculated position transformation information to a processing control apparatus configured to control a movement of the movable part of the processing apparatus, and the transmission unit transmits, to the processing control apparatus, third position information indicating the position of the measurement member measured by the first measurement apparatus using the measurement light applied to the measurement member in a second state in which the tool center point is located at a position that is different from the predetermined position.

A second aspect provides a measurement system including: a first measurement apparatus that is configured to apply measurement light to a measurement member attached to a movable part of a processing apparatus configured to process a processing target, and that is configured to measure a position of the measurement member; and a measurement control apparatus that is configured to control the first measurement apparatus, wherein the measurement control apparatus includes: an arithmetic unit that transforms the position of the measurement member measured by the first measurement apparatus using the measurement light applied to the measurement member, to a position of a tool center point of the processing apparatus, based on position transformation information; a transmission unit that transmits sixth position information indicating the position of the tool center point, to a processing control apparatus configured to control a movement of the movable part, and the arithmetic unit calculates the position transformation information, based on the position of the measurement member measured by the first measurement apparatus using the measurement light applied to the measurement member in a first state in which the tool center point is located at a predetermined position.

A third aspect provides a measurement system including: a first measurement apparatus that is configured to apply measurement light to a measurement member attached to a movable part of a processing apparatus configured to process a processing target, and that is configured to measure a position of the measurement member, wherein the movable part is different from a position corresponding to a tool center point of the processing apparatus; a measurement control apparatus that is configured to control the first measurement apparatus; and a third measurement apparatus that is configured to measure the position of the tool center point, wherein the measurement control apparatus includes: an arithmetic unit that calculates position transformation information, based on the position of the measurement member measured by the first measurement apparatus using the measurement light applied to the measurement member in a state in which the third measurement apparatus measures the position of the tool center point, and based on the position of the tool center point measured by the third measurement apparatus; and a transmission unit that transmits, to a processing control apparatus configured to control a movement of the movable part, the position transformation information and third position information indicating the position of the measurement member measured by the first measurement apparatus using the measurement light applied to the measurement member in a state in which the third measurement apparatus does not measure the position of the tool center point.

A fourth aspect provides a measurement system including: a first measurement apparatus that is configured to apply measurement light to a measurement member attached to a movable part of a processing apparatus configured to process a processing target, and that is configured to measure a position of the measurement member, wherein the movable part is different from a position corresponding to a tool center point of the processing apparatus; a measurement control apparatus that is configured to control the first measurement apparatus; and a third measurement apparatus that is configured to measure the position of the tool center point, wherein the measurement control apparatus includes: an arithmetic unit that transforms the position of the measurement member measured by the first measurement apparatus using the measurement light applied to the measurement member in a state in which the third measurement apparatus does not measure the position of the tool center point, to the position of the tool center point, based on the position of the measurement member measured by the first measurement apparatus using the measurement light applied to the measurement member in a state in which the third measurement apparatus measures the position of the tool center point, and based on the position of the tool center point measured by the third measurement apparatus; and a transmission unit that transmits sixth position information indicating the transformed position of the tool center point, to a processing control apparatus configured to control a movement of the movable part.

A fifth aspect provides a measurement system including: a first measurement apparatus that is configured to apply measurement light to a second reference member moving according to a position of a movable part of a processing apparatus configured to process a processing target, thereby measuring a position of a tool center point of the processing apparatus moving according to a movement of the movable part, and that is configured to apply measurement light to a measurement member attached to the movable part that is different from the position corresponding to the tool center point, thereby measuring a position of the measurement member; and a measurement control apparatus that is configured to control the first measurement apparatus, wherein the measurement control apparatus includes: an arithmetic unit that calculates position transformation information, based on the position of the tool center point measured by the first measurement apparatus using the measurement light applied to the second reference member when a positional relation between the position of the measurement member and the position of the second reference member is a predetermined relation, and based on the position of the measurement member measured by the first measurement apparatus using the measurement light applied to the measurement member; and a transmission unit that transmits, to a processing control apparatus configured to control the movement of the movable part, the position transformation information and third position information indicating the position of the measurement member measured by the first measurement apparatus using the measurement light applied to the measurement member when the positional relation is different from the predetermined relation.

A sixth aspect provides a measurement system including: a first measurement apparatus that is configured to apply measurement light to a second reference member moving according to a position of a movable part of a processing apparatus configured to process a processing target, thereby measuring a position of a tool center point moving according to a movement of the movable part, and that is configured to apply measurement light to a measurement member attached to the movable part that is different from the position corresponding to the tool center point, thereby measuring a position of the measurement member; and a measurement control apparatus that is configured to control the first measurement apparatus, wherein the measurement control apparatus includes: an arithmetic unit that transforms the position of the measurement member measured by the first measurement apparatus using the measurement light applied to the measurement member when a positional relation between the position of the measurement member and a position of the second reference member and is not a predetermined relation, to a position of the tool center point, based on the position of the measurement member measured by the first measurement apparatus using the measurement light applied to the measurement member when the positional relation is the predetermined relation, and based on the position of the tool center point measured by the first measurement apparatus using the measurement light applied to the second reference member; and a transmission unit that transmits sixth position information indicating the transformed position of the tool center point, to a processing control apparatus configured to control the movement of the movable part.

A seventh aspect provides a processing system including: the measurement system according to the first aspect; the processing apparatus that is configured to process the processing target; and the processing control apparatus that is configured to control the movement of the movable part of the processing apparatus, wherein the processing control apparatus transforms the position of the measurement member indicated by the third position information to the position of the tool center point, based on the position transformation information, and controls the movement of the movable part, based on the transformed position of the tool center point, thereby moving the position of the tool center point.

An eighth aspect provides a processing system including: the measurement system according to the second aspect, the processing apparatus that is configured to process the processing target; and the processing control apparatus that is configured to control the movement of the movable part of the processing apparatus, wherein the processing control apparatus controls the movement of the movable part, based on the position of the tool center point indicated by the sixth position information transmitted by the transmission unit, thereby moving the position of the tool center point.

A ninth aspect provides a processing system including: the measurement system according to the third aspect; the processing apparatus that is configured to process the processing target; and the processing control apparatus that is configured to control the movement of the movable part of the processing apparatus, wherein the processing control apparatus transforms the position of the measurement member indicated by the third position information to the position of the tool center point, based on the position transformation information, and controls the movement of the movable part, based on the transformed position of the tool center point, thereby moving the position of the tool center point.

A tenth aspect provides a processing system including: the measurement system according to the fourth aspect; the processing apparatus that is configured to process the processing target; and the processing control apparatus that is configured to control the movement of the movable part of the processing apparatus, wherein the processing control apparatus controls the movement of the movable part, based on the sixth position information, thereby moving the position of the tool center point.

An eleventh aspect provides a processing system including: the measurement system according to the fifth aspect; the processing apparatus that is configured to process the processing target; and the processing control apparatus that is configured to control the movement of the movable part of the processing apparatus, wherein the processing control apparatus transforms the position of the measurement member indicated by the third position information to the position of the tool center point, based on the position transformation information, and moves the movable part, based on the transformed position of the tool center point, thereby moving the position of the tool center point.

A twelfth aspect provides a processing system including: the measurement system according to the sixth aspect; the processing apparatus that is configured to process the processing target; and the processing control apparatus that is configured to control the movement of the movable part of the processing apparatus, wherein the processing control apparatus controls the movement of the movable part, based on the position of the tool center point indicated by the sixth position information, thereby moving the position of the tool center point.

A thirteenth aspect provides a measurement method in a measurement system including: a first measurement apparatus that is configured to apply measurement light to a measurement member attached to a movable part of a processing apparatus configured to process a processing target, and that is configured to measure a position of the measurement member; and a measurement control apparatus that is configured to control the first measurement apparatus, the measurement method including: the measurement control apparatus calculating position transformation information, based on first position information indicating the position of the measurement member measured by the first measurement apparatus using the measurement light applied to the measurement member in a first state in which a tool center point of the processing apparatus is located at a predetermined position, and based on second position information indicating the predetermined position; the measurement control apparatus transmitting the calculated position transformation information to a processing control apparatus configured to control a movement of the movable part of the processing apparatus; and the measurement control apparatus transmitting, to the processing control apparatus, third position information indicating the position of the measurement member measured by the first measurement apparatus using the measurement light applied to the measurement member in a second state in which the tool center point is located at a position that is different from the predetermined position.

A fourteenth aspect provides a measurement method in a measurement system including: a first measurement apparatus that is configured to apply measurement light to a measurement member attached to a movable part of a processing apparatus configured to process a processing target, and that is configured to measure a position of the measurement member; and a measurement control apparatus that is configured to control the first measurement apparatus, the measurement method including: the measurement control apparatus transforming the position of the measurement member measured by the first measurement apparatus using the measurement light applied to the measurement member, to a position of a tool center point of the processing apparatus, based on position transformation information; the measurement control apparatus transmitting sixth position information indicating the position of the tool center point, to a processing control apparatus configured to control a movement of the movable part; and the measurement control apparatus calculating the position transformation information, based on the position of the measurement member measured by the first measurement apparatus using the measurement light applied to the measurement member in a first state in which the tool center point is located at a predetermined position.

A fifteenth aspect provides a measurement method in a measurement system including: a first measurement apparatus that is configured to apply measurement light to a measurement member attached to a movable part of a processing apparatus configured to process a processing target, and that is configured to measure a position of the measurement member, wherein the movable part is different from a position corresponding to a tool center point of the processing apparatus; a measurement control apparatus that is configured to control the first measurement apparatus; and a third measurement apparatus that is configured to measure the position of the tool center point, the measurement method including: the measurement control apparatus calculating position transformation information, based on the position of the measurement member measured by the first measurement apparatus using the measurement light applied to the measurement member in a state in which the third measurement apparatus measures the position of the tool center point, and based on the position of the tool center point measured by the third measurement apparatus; and the measurement control apparatus transmitting, to a processing control apparatus configured to control a movement of the movable part, the position transformation information and third position information indicating the position of the measurement member measured by the first measurement apparatus using the measurement light applied to the measurement member in a state in which the third measurement apparatus does not measure the position of the tool center point.

A sixteenth aspect provides a measurement method in a measurement system including: a first measurement apparatus that is configured to apply measurement light to a measurement member attached to a movable part of a processing apparatus configured to process a processing target, and that is configured to measure a position of the measurement member, wherein the movable part is different from a position corresponding to a tool center point of the processing apparatus; a measurement control apparatus that is configured to control the first measurement apparatus; and a third measurement apparatus that is configured to measure the position of the tool center point, the measurement method including: the measurement control apparatus transforming the position of the measurement member measured by the first measurement apparatus using the measurement light applied to the measurement member in a state in which the third measurement apparatus does not measure the position of the tool center point, to the position of the tool center point, based on the position of the measurement member measured by the first measurement apparatus using the measurement light applied to the measurement member in a state in which the third measurement apparatus measures the position of the tool center point, and based on the position of the tool center point measured by the third measurement apparatus; and the measurement control apparatus transmitting sixth position information indicating the transformed position of the tool center point, to a processing control apparatus configured to control a movement of the movable part.

A seventeenth aspect provides a measurement method in a measurement system including: a first measurement apparatus that is configured to apply measurement light to a second reference member moving according to a position of a movable part of a processing apparatus configured to process a processing target, thereby measuring a position of a tool center point of the processing apparatus moving according to a movement of the movable part, and that is configured to apply measurement light to a measurement member attached to the movable part that is different from the position corresponding to the tool center point, thereby measuring a position of the measurement member; and a measurement control apparatus that is configured to control the first measurement apparatus, the measurement method including: the measurement control apparatus calculating position transformation information, based on the position of the tool center point measured by the first measurement apparatus using the measurement light applied to the second reference member when a positional relation between the position of the measurement member and the position of the second reference member is a predetermined relation, and based on the position of the measurement member measured by the first measurement apparatus using the measurement light applied to the measurement member; and the measurement control apparatus transmitting, to a processing control apparatus configured to control the movement of the movable part, the position transformation information and third position information indicating the position of the measurement member measured by the first measurement apparatus using the measurement light applied to the measurement member when the positional relation is different from the predetermined relation.

An eighteenth aspect provides a measurement method in a measurement system including: a first measurement apparatus that is configured to apply measurement light to a second reference member moving according to a position of a movable part of a processing apparatus configured to process a processing target, thereby measuring a position of a tool center point moving according to a movement of the movable part, and that is configured to apply measurement light to a measurement member attached to the movable part that is different from the position corresponding to the tool center point, thereby measuring a position of the measurement member; and a measurement control apparatus that is configured to control the first measurement apparatus, the measurement method including: the measurement control apparatus transforming the position of the measurement member measured by the first measurement apparatus using the measurement light applied to the measurement member when a positional relation between the position of the measurement member and a position of the second reference member and is not a predetermined relation, to a position of the tool center point, based on the position of the measurement member measured by the first measurement apparatus using the measurement light applied to the measurement member when the positional relation is the predetermined relation, and based on the position of the tool center point measured by the first measurement apparatus using the measurement light applied to the second reference member; and the measurement control apparatus transmitting sixth position information indicating the transformed position of the tool center point, to a processing control apparatus configured to control the movement of the movable part.

A nineteenth aspect provides a processing system including: a processing apparatus that is configured to process a processing target; a first measurement apparatus that is configured to apply measurement light to a measurement member attached to the processing apparatus, and that is configured to measure a position of the measurement member; a measurement control apparatus that is configured to control the first measurement apparatus; and a processing control apparatus that is configured to control a movement of the processing apparatus, wherein the processing control apparatus includes a transmission unit that transmits, to the measurement control apparatus, first start position information indicating a first measurement start position that is a position at which the first measurement apparatus should start to measure the measurement member, and the measurement control apparatus changes an emission direction of the measurement light such that the measurement light is applied toward the first measurement start position indicated by the first start position information.

A twentieth aspect provides a processing system including: a processing apparatus that is configured to process a processing target; a first measurement apparatus that is configured to apply measurement light to a measurement member attached to the processing apparatus, and that is configured to measure a position of the measurement member; a measurement control apparatus that is configured to control the first measurement apparatus; and a processing control apparatus that is configured to control a movement of the processing apparatus, wherein the processing control apparatus includes a transmission unit that transmits, to the measurement control apparatus, a measurement start signal for causing the first measurement apparatus to start to measure the position of the measurement member, and the measurement control apparatus controls the first measurement apparatus to start to emit the measurement light, based on the measurement start signal.

A twenty-first aspect provides a processing system including: a processing apparatus that is configured to process a processing target; a first measurement apparatus that is configured to apply measurement light to a measurement member attached to the processing apparatus, and that is configured to measure a position of the measurement member; a measurement control apparatus that is configured to control the first measurement apparatus; and a processing control apparatus that is configured to control a movement of the processing apparatus, wherein the processing control apparatus includes a transmission unit that transmits, to the measurement control apparatus, timing information indicating timing in which the first measurement apparatus starts to measure the position of the measurement member, and the measurement control apparatus controls emission timing of the measurement light emitted from the first measurement apparatus, based on the timing information.

A twenty-second aspect provides a measurement system including: a first measurement apparatus that is configured to measure a position of a measurement member attached to a processing apparatus configured to process a processing target; and a measurement control apparatus that is configured to control the first measurement apparatus, wherein the measurement control apparatus includes: an arithmetic unit that calculates position transformation information for transforming the position of the measurement member to a position of a tool center point of the processing apparatus, based on the position of the measurement member measured by the first measurement apparatus; and a transmission unit that transmits the position transformation information to a processing control apparatus configured to control the processing apparatus.

A twenty-third aspect provides a measurement system including: a first measurement apparatus that is configured to measure a position of a measurement member attached to a processing apparatus configured to process a processing target; and a measurement control apparatus that is configured to control the first measurement apparatus, wherein the measurement control apparatus includes: an arithmetic unit that transforms the position of the measurement member to a position of a tool center point of the processing apparatus, based on the position of the measurement member measured by the first measurement apparatus; and a transmission unit that transmits sixth position information indicating the transformed position of the tool center point, to a processing control apparatus configured to control the processing apparatus.

A twenty-fourth aspect provides a measurement system including: a first measurement apparatus that is configured to measure a position of a measurement member attached to a processing apparatus configured to process a processing target; and a measurement control apparatus that is configured to control the first measurement apparatus, wherein the measurement control apparatus controls the first measurement apparatus, based on information about measurement by the first measurement apparatus transmitted from a processing control apparatus configured to control the processing apparatus.

### Brief Description of Drawings

[FIG. 1] FIG. 1 is a perspective view illustrating an outline of a system.
[FIG. 2] FIG. 2 is a block diagram illustrating a configuration of the system.
[FIG. 3] FIG. 3 is a block diagram illustrating a configuration of a measurement control apparatus.
[FIG. 4] FIG. 4 is a block diagram illustrating a configuration of a processing control apparatus.
[FIG. 5] FIG. 5 is a diagram illustrating a tip of a robot arm.
[FIG. 6] FIG. 6 is a flowchart illustrating an example of operation of an arithmetic apparatus of the measurement control apparatus.
[FIG. 7] FIG. 7 is a diagram illustrating an example of a positional relation between a measurement apparatus and a stereo camera.
[FIG. 8] FIG. 8 is a diagram illustrating a reflector module in a first modified example attached to the robot arm.
[FIG. 9] FIG. 9 is a diagram illustrating an example of arrangement of a plurality of antennas.
[FIG. 10] FIG. 10 is a diagram illustrating a reflector module in a second modified example attached to the robot arm.
[FIG. 11] FIG. 11 is a diagram illustrating an example of a reflector attached to the robot arm.
[FIG. 12] FIG. 12 is a diagram illustrating another example of the reflector attached to the robot arm.
[FIG. 13] FIG. 13 is a diagram illustrating an example of a method of measuring a position of a tool center point.
[FIG. 14] FIG. 14 is a diagram illustrating another example of the method of measuring the position of the tool center point.
[FIG. 15] FIG. 15 is a diagram illustrating another example of the method of measuring the position of the tool center point.
[FIG. 16] FIG. 16 is a diagram illustrating another example of the method of measuring the position of the tool center point.
[FIG. 17] FIG. 17 is a diagram illustrating another example of the method of measuring the position of the tool center point.
[FIG. 18] FIG. 18 is a diagram illustrating an example of a positional relation between the reflector attached to the robot arm and the tool center point.
[FIG. 19] FIG. 19 is a flowchart illustrating another example of operation of the arithmetic apparatus of the measurement control apparatus.
[FIG. 20] FIG. 20 is a perspective view illustrating an outline of a system in a modified example.
[FIG. 21] FIG. 21 is a block diagram illustrating a configuration of the system in the modified example.
[FIG. 22] FIG. 22 is a flowchart illustrating another example of operation of the arithmetic apparatus of the measurement control apparatus.
[FIG. 23] FIG. 23 is a diagram for explaining a concept of integration threshold processing.
[FIG. 24] FIG. 24 is a diagram for explaining the order of measurement of the reflector.
[FIG. 25] FIG. 25 is a diagram for explaining irradiation timing of measurement light.
[FIG. 26] FIG. 26 is a diagram illustrating an example of an irradiation method of applying the measurement light.
[FIG. 27] FIG. 27 is a diagram for explaining a concept of stationary state determination.
[FIG. 28] FIG. 28 is a diagram illustrating another example of the irradiation method of applying the measurement light.

### Example Embodiments

A measurement system, a processing system, a measurement method and a processing method according to an example embodiment will be described. The example embodiment below describes an example in which the measurement system, the processing system, the measurement method and the processing method are applied to a system 1.

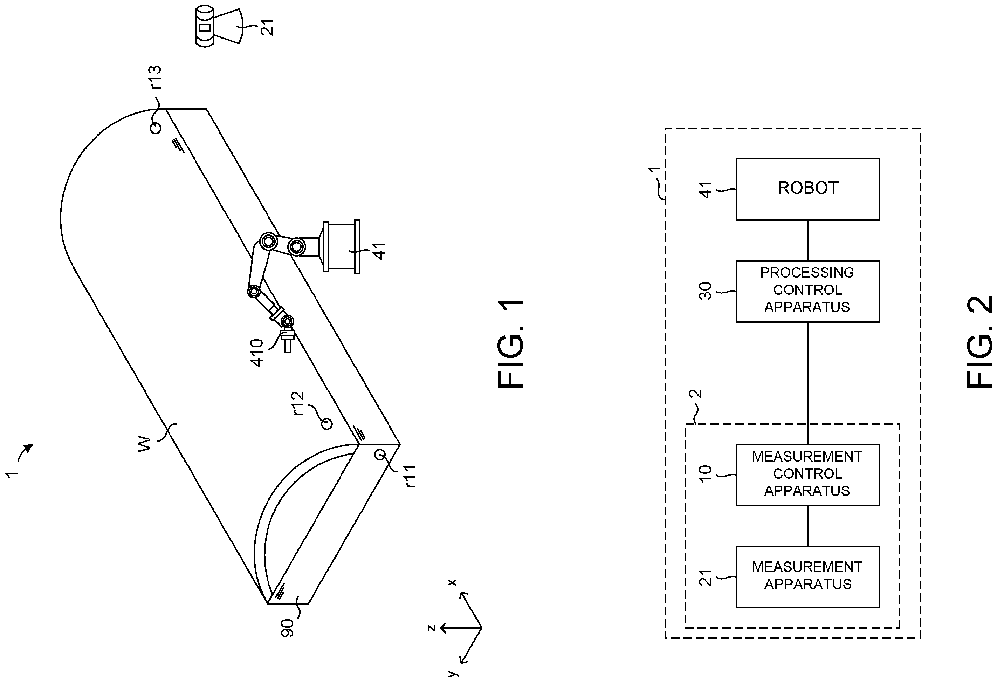

The system 1 according to the example embodiment will be described with reference to FIG. 1 to FIG. 28. The system 1 may be referred to as a processing system.

### (1) Outline of System 1

An outline of the system 1 will be described with reference to FIG. 1 and FIG. 2. In FIG. 1 and FIG. 2, the system 1 includes a measurement control apparatus 10, a measurement apparatus 21, a processing control apparatus 30, and a robot 41. The robot 41 may be referred to as a processing apparatus. The measurement control apparatus 10 controls the measurement apparatus 21. The processing control apparatus 30 controls the robot 41. The processing control apparatus 30 may be configured to control a movement of the robot 41 (e.g., a movement of a robot arm 410). The measurement control apparatus 10 and the processing control apparatus 30 are communicable with each another. The measurement control apparatus 10 and the measurement apparatus 21 may constitute a measurement system 2.

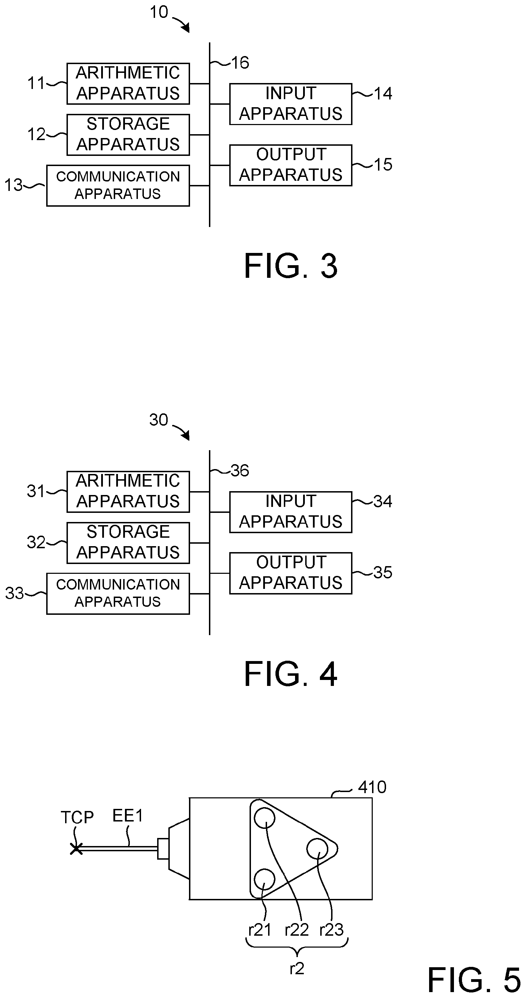

The measurement control apparatus 10 includes an arithmetic apparatus 11, a storage apparatus 12, a communication apparatus 13, an input apparatus 14, and an output apparatus 15, as illustrated in FIG. 3. The arithmetic apparatus 11, the storage apparatus 12, the communication apparatus 13, the input apparatus 14, and the output apparatus 15 may be connected via a data bus 16.

The processing control apparatus 30 includes an arithmetic apparatus 31, a storage apparatus 32, a communication apparatus 33, an input apparatus 34, and an output apparatus 35, as illustrated in FIG. 4. The arithmetic apparatus 31, the storage apparatus 32, the communication apparatus 33, the input apparatus 34, and the output apparatus 35 may be connected via a data bus 36.

The arithmetic apparatuses 11 and 31 may include at least one of a CPU (Central Processing Unit), a GPU (Graphics Processing Unit), and a FPGA (Field Programmable Gate Array), for example.

The storage apparatuses 12 and 32 may include at least one of a RAM (Random Access Memory), a ROM (Read Only Memory), a hard disk apparatus, a magneto-optical disk apparatus, a SSD (Solid State Drive), and a disk array apparatus., for example. That is, the storage apparatuses 12 and 32 may include a non-transitory storage medium.

The communication apparatus 13 is configured to communicate with each of the measurement apparatus 21 and the processing control apparatus 30. The communication apparatus 13 may be configured to communicate with another apparatus that is different from the measurement apparatus 21 and the processing control apparatus 30 via a not-illustrated communication network. The communication apparatus 33 is configured to communicate with each of the robot 41 and the measurement control apparatus 10. The communication apparatus 33 may be configured to communicate with another apparatus that is different from the robot 41 and the measurement control apparatus 10 via a not-illustrated communication network. The network may be wired or wireless.

The input apparatuses 14 and 34 may include, for example, at least one of a keyboard, a mouse, and a touch panel. The input apparatuses 14 and 34 may include a recording medium reading apparatus that is configured to read information recorded on a removable recording medium such as, for example, a USB (Universal Serial Bus) memory.

When information is inputted to the measurement control apparatus 10 via the communication apparatus 13 (in other words, when the measurement control apparatus 10 acquires information via the communication apparatus 13), the communication apparatus 13 may function as an input apparatus. When information is inputted to the processing control apparatus 30 via the communication apparatus 33 (in other words, when the processing control apparatus 30 acquires information via the communication apparatus 33), the communication apparatus 33 may function as an input apparatus.

The output apparatuses 15 and 35 may include, for example, at least one of a display, a speaker, and a printer. The output apparatuses 15 and 35 may be configured to output information to a removable storage medium such as, for example, a USB memory. When information is outputted from the measurement control apparatus 10 via the communication apparatus 13, the communication apparatus 13 may function as an output apparatus. When information is outputted from the processing control apparatus 30 via the communication apparatus 33, the communication apparatus 33 may function as an output apparatus.

In the system 1, the robot41 processes, as a processing target, a workpiece W held in a jig 90 (see FIG. 1). The processing control apparatus 30 controls the robot 41, based on a measurement result by the measurement apparatus 21 acquired from the measurement control apparatus 10. The processing control apparatus 30 controls the robot 41 such that an end effector attached to a tip of the robot arm 410 of the robot 41 moves to a target position, for example. By the processing control apparatus 30 controlling the robot 41, the workpiece W is processed by the robot 41. The control of the robot 41 may be the control of a movement aspect of the robot 41 (a movement aspect of a movable part of the robot 41). Furthermore, the jig 90 may be referred to as a holding tool, a mounting member, a fixing member, or a clamp.

### (2) Coordinate System Transformation

The measurement system 2 including the measurement apparatus 21 and the processing control apparatus 30 that controls the robot 41 use their own coordinate systems. Specifically, the measurement system 2 uses a first measurement coordinate system that is a coordinate system according to the measurement apparatus 21, while the processing control apparatus 30 uses a robot coordinate system that is a coordinate system according to the robot 41. That is, the measurement control apparatus 10 controls the measurement apparatus 21 in the first measurement coordinate system. The processing control apparatus 30 controls the movement of the robot 41 in the robot coordinate system.

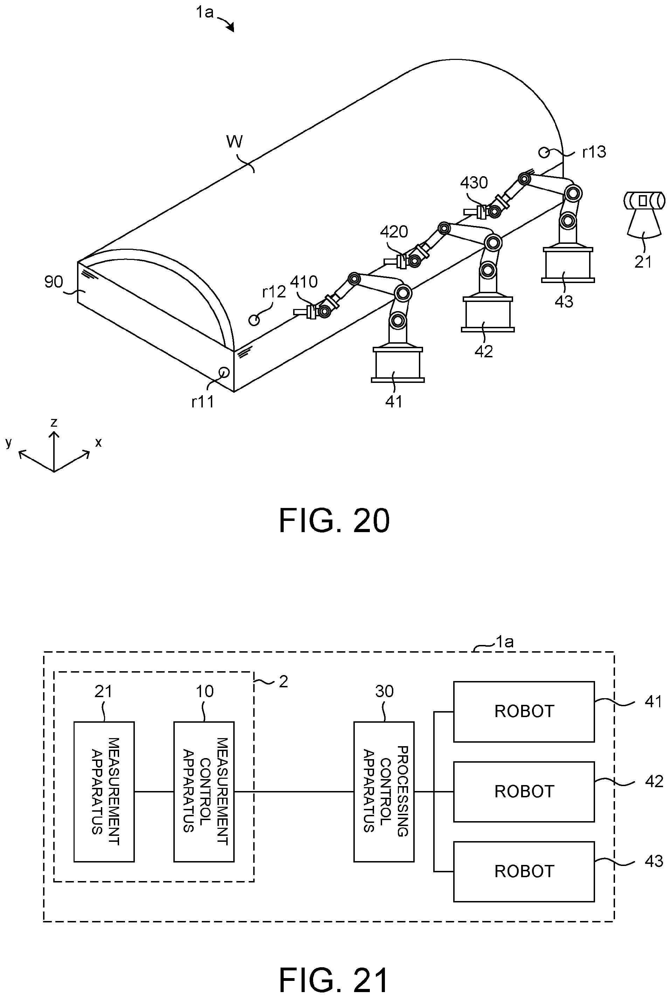

The processing control apparatus 30 may control the movement of the robot 41 in a measurement coordinate system. In a case where the system 1 includes a plurality of robots (e.g., see FIG. 20 and FIG. 21), the robot coordinate system may be a coordinate system common to the plurality of robots, or a robot coordinate system may be set for each robot (in this case, one robot coordinate system is set for one robot, and another robot coordinate system may be set for another robot).

Therefore, for example, in order that the measurement system 2 and the processing control apparatus 30 share the measurement result by the measurement apparatus 21 (in other words, in order to make the measurement system 2 cooperate with the processing control apparatus 30), it is necessary to transform between the first measurement coordinate system and the robot coordinate system. The robot coordinate system may be a rectangular coordinate system that is defined by an x-axis, a y-axis, and a z-axis that are perpendicular to one another, for example. The first measurement coordinate system may be a rectangular coordinate system that is defined by an x-axis, a y-axis, and a z-axis that are perpendicular to one another, for example. The robot coordinate system may be referred to as a processing coordinate system.

### (2-1) Measurement apparatus 21

The measurement apparatus 21 measures positions of the workpiece W and the robot 41, for example. Here, the workpiece W may be a relatively large structure such as, for example, an aircraft fuselage. The measurement apparatus 21 that measures, as a measurement target, the workpiece W, which is a relatively large structure, may be, for example, a three-dimensional measuring instrument capable of measuring a relatively wide space. An example of the measurement apparatus 21 includes a laser tracker. The laser tracker is an optical measuring instrument that applies laser light to a reflector (also referred to as a probe) in contact with the measurement target and that determines a three-dimensional position of the measurement target by the laser light reflected from the reflector returning to a light emitting source. The laser light may be referred to as measurement light.

In order to enable the measurement of the position by the measurement apparatus 21, for example, a reflector r11 is attached to the jig 90, and reflectors r12 and r13 are attached to the workpiece W (see FIG. 1). The reflectors r11, r12, and r13 may be referred to as a first reference member. That is, the first reference member may include the reflectors r11, r12, and r13 capable of reflecting the measurement light. The reflector may not be attached to the workpiece W, but at least three reflectors may be attached to the jig 90.

A reflector module r2 including reflectors r21, r22, and r23 is attached to the robot arm 410 of the robot 41 (see FIG. 5). The reflectors r21, r22, and r23 may be referred to as a measurement member. That is, the measurement member may include the reflectors r21, r22, and r23 capable of reflecting the measurement light. The robot arm 410 may be referred to as a movable part.

The measurement apparatus 21 is configured to irradiate each of the reflectors r11, r12, and r13 with the measurement light that may be, for example, laser light. The measurement apparatus 21 is configured to measure the position of each of the reflectors r11, r12, and r13 in the first measurement coordinate system, based on the measurement light applied to each of the reflectors r11, r12, and r13. Similarly, the measurement apparatus 21 is configured to irradiate the reflectors r21, r22, and r23 with the measurement light. The measurement apparatus 21 is configured to measure the position of each of the reflectors r21, r22, and r23 in the first measurement coordinate system, based on the measurement light applied to each of the reflectors r21, r22, and r23. That is, measuring the position of the workpiece W is not limited to directly measuring the position of a specific point on the workpiece W, but may include indirectly measuring the position, such as measuring the position of the reflector attached to the workpiece W and measuring the position of the reflector attached to the jig 90 for holding the workpiece W. Similarly, measuring the position of the robot 41 is not limited to directly measuring the position of a specific point in the robot 41, but may include indirectly measuring the position, such as measuring the position of the reflector attached to the robot 41.

"Based on the measurement light applied to each of the reflectors r11, r12, and r13" may be rephrased as "by the measurement apparatus 21 receiving the measurement light generated from each of the reflectors r11, r12, and r13 due to the measurement light applied to each of the reflectors r11, r12, and r13". Similarly, "based on the measurement light applied to each of the reflectors r21, r22, and r23" may be rephrased as "by the measurement apparatus 21 receiving the measurement light generated from each of the reflectors r21, r22, and r23 due to the measurement light applied to each of the reflectors r21, r22, and r23".

When the reflectors r11, r12, and r13 are rephrased as the first reference member, it can be said that the measurement apparatus 21, which may be referred to as a first measurement apparatus, is capable of applying the measurement light to the first reference member attached to at least one of the workpiece W, which may be referred to as the processing target, and the jig 90 for holding the workpiece W. It can be said that the measurement apparatus 21 is capable of measuring the position of the first reference member in the first measurement coordinate system. When the reflectors r21, r22, and r23 are rephrased as the measurement member, it can be said that the measurement apparatus 21 is capable of applying the measurement light to the measurement member attached to the robot arm 410 of the robot 41 capable of processing the workpiece W. It can be said that the measurement apparatus 21 is capable of measuring the position of the measurement apparatus.

The position of each of the reflector r11 attached to the jig 90 and the reflectors r12 and r13 attached to the workpiece W is managed by a user of the system 1 in many cases. Therefore, the position of each of reflectors r11, r12, and r13 is often known in the robot coordinate system.

The position of each of the reflectors r11, r12, and r13 may not be known. In this case, for example, the reflector may be used to define a feature such as a plane, a line, and a point, and the defined feature may be used to define the coordinate system. Specifically, the coordinate system may be constructed by disposing three reflectors on a first surface, disposing three reflectors on a second surface intersecting the first surface, disposing three reflectors on a third surface intersecting the first surface and the second surface, and defining each surface using the three reflectors disposed on each surface. For example, the coordinate system may be constructed by a combination of a plane defined by using three reflectors and a line defined by using two reflectors that are different from the three reflectors. For example, the coordinate system may be constructed by a combination of a plane defined by using three reflectors and a point defined by using one reflector that is different from the three reflectors. For example, the coordinate system may be constructed by a combination of a plane defined by using three reflectors, a line defined by using two reflectors, and a point defined by using one reflector.

The present example embodiment will be described on the assumption that the position of each of the reflectors r11, r12, and r13 in the robot coordinate system is known. In the present example embodiment, the reflectors r11, r12, and r13 function as members for defining a reference position. Therefore, the reflectors r11, r12, and r13 may be referred to as a reference reflector. The reflector r11 may be attached at a position indicating the reference of the jig 90. The position of the reflector r11 may be a position indicating the reference of the jig 90. The reflectors r12 and r13 may be attached to a position (e.g., a master hole) indicating a reference for the position of the workpiece W, which may be referred to as the processing target. The positions where the reflectors r12 and r13 are attached may be the reference for the position of the workpiece W.

### (2-2) Coordinate Transformation

The measurement apparatus 21 is configured to irradiate each of the reflectors r11, r12, and r13 with the measurement light, as described above. The measurement apparatus 21 measures the position of the reflector r11 in the first measurement coordinate system, based on the measurement light applied to the reflector r11. The measurement apparatus 21 measures the position of the reflector r12 in the first measurement coordinate system, based on the measurement light applied to the reflector r12. The measurement apparatus 21 measures the position of the reflector r13 in the first measurement coordinate system, based on the measurement light applied to the reflector r13.

The arithmetic apparatus 11 of the measurement control apparatus 10 acquires, from the measurement apparatus 21, first reference position information indicating the position of each of the reflectors r11, r12, and r13 in the first measurement coordinate system. The arithmetic apparatus 11 acquires second reference position information indicating the position of each of the reflectors r11, r12, and r13 in the robot coordinate system inputted via the input apparatus 14, for example. The first reference position information may be referred to as fourth position information. The second reference position information may be referred to as fifth position information. The position of each of the reflectors r11, r12, and r13 in the robot coordinate system may be automatically inputted to the measurement control apparatus 10 (i.e., it may not be inputted via the input apparatus 14). The arithmetic apparatus 11 may acquire the second reference position information, for example, by selecting the position of each of the reflectors r11, r12, and r13 in the robot coordinate system inputted to the processing control apparatus 30.

The arithmetic apparatus 11 may obtain a coordinate transformation matrix for transforming between the position in the first measurement coordinate system and the position in the robot coordinate system, based on the first reference position information and the second reference position information. The coordinate transformation matrix may be referred to as coordinate transformation information. The coordinate transformation matrix may include, for example, a rotation matrix that performs rotational transformation of the position, and a translational matrix that translates or moves the position in parallel. Since existing various aspects may be applied to a method of obtaining the coordinate transformation matrix, a detailed description of the method will be omitted. Obtaining the coordinate transformation matrix may be referred to as calculating the coordinate transformation matrix. The arithmetic apparatus 11 may obtain, as the coordinate transformation matrix, two matrices: a first coordinate transformation matrix for transforming the position in the robot coordinate system to the position in the first measurement coordinate system; and a second coordinate transformation matrix for transforming the position in the first measurement coordinate system to the position in the robot coordinate system. The first coordinate transformation matrix and the second coordinate transformation matrix may be referred to as first coordinate transformation information and second coordinate transformation information, respectively.

For example, the position of the reflector r11 in the first measurement coordinate system indicated by the first reference position information is set as (x_{r11M}, y_{r11M}, z_{r11M}), and the position of the reflector r11 in the robot coordinate system indicated by the second reference position information is set as (x_{r11R}, y_{r11R}, z_{r11R}). Similarly, the position of the reflector r12 in the first measurement coordinate system is set as (x_{r12M}, y_{r12M}, z_{r12M}), and the position of the reflector r12 in the robot coordinate system is set as (x_{r12R}, y_{r12R}, z_{r12R}). The position of the reflector r13 in the first measurement coordinate system is set as (x_{r13M}, y_{r13M}, z_{r13M}), and the position of the reflector r13 in the robot coordinate system is set as (x_{r13R}, y_{r13R}, z_{r13R}). The arithmetic apparatus 11 may obtain the first coordinate transformation matrix, for example, by obtaining R₁ and t₁, which satisfy three equations of "(x_{r11M}, y_{r11M}, z_{r11M})=R₁(X_{r11R}, y_{r11R}, z_{r11R})+t₁", "(x_{r12M}, y_{r12M}, z_{r12M})=R₁(x_{r12R}, y_{r12R}, Z_{r12R})+t₁", and "(x_{r13M}, y_{r13M}, Z_{r13M})=R₁(x_{r13R}, y_{r13R}, z_{r13R})+t₁". Furthermore, the arithmetic apparatus 11 may obtain the second coordinate transformation matrix, for example, by obtaining R₂ and t₂, which satisfy three equations of "(x_{r11R}, y_{r11R}, z_{r11R})=R₂(x_{r11M}, y_{r11M}, z_{r11M})+t₂", "(x_{r12R}, y_{r12R}, z_{r12R})=R₂(x_{r12M}, y_{r12M}, z_{r12M})+t₂", and "(x_{r13R}, y_{r13R}, z_{r13R})=R₂(x_{r13M}, y_{r13M}, z_{r13M})+t₂". Here, "R₁" and "R₂" are rotational matrices, and "t₁" and "t₂" are translational matrices. That is, the arithmetic apparatus 11 may obtain the first coordinate transformation matrix and the second coordinate transformation matrix, based on the first reference position information and the second reference position information.

The arithmetic apparatus 11 may not obtain the coordinate transformation matrix. In this case, the coordinate transformation matrix may be obtained by an apparatus that is different from the measurement control apparatus 10 such as, for example, the processing control apparatus 30. For example, the communication apparatus 13 of the measurement control apparatus 10 may transmit the first reference position information and the second reference position information to the processing control apparatus 30. The arithmetic apparatus 31 of the processing control apparatus 30 may obtain the coordinate transformation matrix, based on the first position reference information and the second reference position information. The communication apparatus 33 of the processing control apparatus 30 may transmit the coordinate transformation matrix to the measurement control apparatus 10. That is, the measurement control apparatus 10 may acquire the coordinate transformation matrix. The measurement control apparatus 10 may acquire the first coordinate transformation matrix, may acquire the second coordinate transformation matrix, or may acquire the first coordinate transformation matrix and the second coordinate transformation matrix, as the coordinate transformation matrix.

The arithmetic apparatus 11 may obtain only one of the first coordinate transformation matrix and the second coordinate transformation matrix, as the coordinate transformation matrix. For example, when the arithmetic apparatus 11 obtains only the first coordinate transformation matrix, the arithmetic apparatus 11 may transform the position in the robot coordinate system to the position in the first measurement coordinate system, by using the first coordinate transformation matrix. In this instance, the arithmetic apparatus 11 may inversely transform the position in the first measurement coordinate system to the position in the robot coordinate system, by using the first coordinate transformation matrix. For example, when the arithmetic apparatus 11 obtains only the second coordinate transformation matrix, the arithmetic apparatus 11 may transform the position in the first measurement coordinate system to the position in the robot coordinate system, by using the second coordinate transformation matrix. In this instance, the arithmetic apparatus 11 may inversely transform the position in the robot coordinate system to the position in the first measurement coordinate system, by using the second coordinate transformation matrix.

The measurement apparatus 21 is configured to irradiate each of the reflectors r21, r22, and r23 with the measurement light, as described above. The measurement apparatus 21 measures the position of the reflector r21 in the first measurement coordinate system, based on the measurement light applied to the reflector r21. The measurement apparatus 21 measures the position of the reflector r22 in the first measurement coordinate system, based on the measurement light applied to the reflector r22. The measurement apparatus 21 measures the position of the reflector r23 in the first measurement coordinate system, based on the measurement light applied to the reflector r23.

The arithmetic apparatus 11 may transform the position of each of the reflectors r21, r22, and r23 in the first measurement coordinate system to the position of each of the reflectors r21, r22, and r23 in the robot coordinate system, for example, by using the second coordinate transformation matrix. When the reflectors r21, r22, and r23 are rephrased as the measurement member, it can be said that the arithmetic apparatus 11, which may be referred to as an arithmetic unit, may transform the position of the measurement member in the first measurement coordinate system measured by the measurement apparatus 21 using the measurement light applied to the measurement member, to the position of the measurement member in the robot coordinate system, on the basis of the second transformation matrix. At this time, the communication apparatus 13, which may be referred to as a transmission unit, may transmit position information indicating the position of the measurement member in the robot coordinate system, to the processing control apparatus 30.

Furthermore, as described above, the coordinate transformation matrix (e.g., the first coordinate transformation matrix) is obtained based on the first reference position information and the second reference position information. When the reflectors r21, r22, and r23 are rephrased as the measurement member, it can be said that the arithmetic apparatus 11, which may be referred to as the arithmetic unit, may transform the position of the measurement member in the first measurement coordinate system measured by the measurement apparatus 21 using the measurement light applied to the measurement member, to the position of the measurement member in the robot coordinate system, on the basis of the first reference position information and the second reference position information. At this time, the communication apparatus 13, which may be referred to as the transmission unit, may transmit the position information indicating the position of the measurement member in the robot coordinate system, to the processing control apparatus 30.

The processing control apparatus 30 may control the robot 41 under the robot coordinate system, based on the position information indicating the position of the measurement member in the robot coordinate system. Furthermore, the arithmetic apparatus 11 may calculate the second coordinate transformation matrix for transforming the position of the measurement member in the first measurement coordinate system measured by the measurement apparatus 21 using the measurement light applied to the measurement member, to the position of the measurement member in the robot coordinate system, on the basis of the first reference position information and the second reference position information. The position information indicating the position of the measurement member in the robot coordinate system may be referred to as third position information.

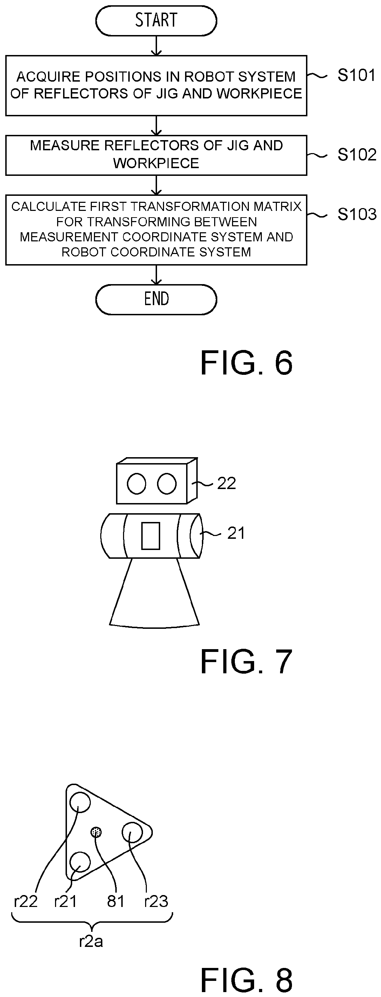

Here, the operation of the measurement system 2 will be described again with reference to a flowchart in FIG. 6. In FIG. 6, the arithmetic apparatus 11 acquires the second reference position information indicating the position of each of the reflectors r11, r12, and r13 in the robot coordinate system inputted via the input apparatus 14 (step S101). In parallel with the step S101, the measurement apparatus 21 measures the position of each of the reflectors r11, r12, and r13 in the first measurement coordinate system, based on the measurement light applied to each of the reflectors r11, r12, and r13 (step S102). At this time, the arithmetic apparatus 11 of the measurement control apparatus 10 acquires the first reference position information indicating the position of each of the reflectors r11, r12, and r13 in the first measurement coordinate system.

The arithmetic apparatus 11 obtains the coordinate transformation matrix for transforming between the position in the first measurement coordinate system and the position in the robot coordinate system, based on the first reference position information and the second reference position information (step S103). When an individual robot coordinate system is defined for each robot, the individual robot coordinate system may be realized by measuring the position of each of the reflectors r21, r22, and r23 attached to the robot 41 while changing a posture/attitude of the robot 41, for example. That is, the individual robot coordinate system may be realized by measuring the position of each of the reflectors r21, r22, and r23, for example, at three points, by changing the posture of the robot.

### (3) Contrivance in Reflector Measurement

The reflector, such as the reflector r11, is on the order of several centimeters, for example. That is, the reflector is significantly smaller in size than the workpiece W, for example. Therefore, for example, in a case where the measurement apparatus 21 measures the position of the reflector while scanning a space to be measured with the measurement light, a time required to measure the position of the reflector may be relatively long. Therefore, at least one of the following methods of (3-1) and (3-2) may be used to reduce the time required to measure the position of the reflector.

### (3-1) Method Using Stereo Camera

The measurement instrument 2 may include, for example, a stereo camera 22 in addition to the measurement apparatus 21. The stereo camera 22 may be disposed in the vicinity of the measurement apparatus 21, for example, as illustrated in FIG. 7. For example, the measurement apparatus 21 and the stereo camera 22 may be included in the same housing. Here, it is assumed that a positional relation between the measurement apparatus 21 and the stereo camera 22 is known. It is also assumed that the positional relation between the measurement apparatus 21 and the stereo camera 22 is unchanged. The positional relation between the measurement apparatus 21 and the stereo camera 22 may not be known. Furthermore, the positional relation between the measurement apparatus 21 and the stereo camera 22 may not be unchanged.

In the vicinity of each of the reflectors r11, r12, and r13, a not-illustrated light emitting body such as, for example, a LED (Light Emitting Diode) may be disposed. To the robot arm 410, a reflector module r2a including the reflectors r21, r22, and r23 and a light emitting body 81 such as, for example a LED as illustrated in FIG. 8, may be attached, instead of the reflector module r2 (see FIG. 5).

In an image captured by the stereo camera 22, a luminance value of a pixel corresponding to the light emitting body is higher than those of the other pixels. Therefore, when the light emitting body is disposed in the vicinity of the reflector as described above, the position of the light emitting body may be relatively easily identified from the image captured by the stereo camera 22. An example of a method of identifying the position of the light emitting body will be described later (see "(7) Method of Identifying Position of Light Emitting Body from Image").

Here, it is assumed that the positional relation between the measurement apparatus 21 and the stereo camera 22 is known and unchanged. Therefore, the measurement control apparatus 10 is capable of transforming the position of the light emitting body identified from the image captured by the stereo camera 22 (i.e., the position in a coordinate system according to the stereo camera 22) to the position in the first measurement coordinate system according to the measurement apparatus 21 (in other words, is capable of integrating the coordinate systems). This transformation may use, for example, the rotation matrix and the translational matrix, as in the transformation between the position in the first measurement coordinate system and the position in the robot coordinate system described above (see "(2-2) Coordinate Transformation"). The measurement control apparatus 10 may estimate the position in the first measurement coordinate system of the reflector serving as the measurement target of the measurement apparatus 21, based on the position of the light emitting body in the first measurement coordinate system.

The accuracy of the position of the light emitting body identified from the image captured by the stereo camera 22 varies depending on a pixel size of the stereo camera 22, a distance between the stereo camera 22 and the light emitting body, or the like. That is, the accuracy of the position of the light emitting body varies depending on a pixel size of an image sensor of the stereo camera 22 and a size of an image of the light emitting body on the image sensor of the stereo camera 22. In the space to be measured by the measurement apparatus 21, the accuracy of the position of the light emitting body identified from the image captured by the stereo camera 22 is coarser than the accuracy according to the measurement apparatus 21. That is, identifying the position of the light emitting body from the image captured by the stereo camera 22 has the same meaning as identifying the position of the reflector in the vicinity of the light emitting body, in view of the accuracy. When a positional relation between each of the reflectors r11, r12, and r13 and the light emitting body is known, the position of each of the reflectors r11, r12, and r13 may be identified in view of the positional relation.

The measurement control apparatus 10 may identify the position of the light emitting body disposed in the vicinity of the reflector r11, from the image captured by the stereo camera 22, for example. The measurement control apparatus 10 may estimate the position of the reflector r11, based on the identified position of the light emitting body. Then, the measurement control apparatus 10 may control the measurement apparatus 21 to measure the reflector r11, based on the estimated position of the reflector r11. This allows the measurement apparatus 21 to narrow down a range to be irradiated with the measurement light to measure the position of the reflector r11, for example. Therefore, it is possible to reduce the time required for the measurement of the position of the reflector r11 by the measurement apparatus 21. The same applies to the reflectors r12 and r13.

The measurement control apparatus 10 may identify, for example, the position of the light emitting body 81 included in the reflector module r2a, from the image captured by the stereo camera 22. The measurement control apparatus 10 may estimate the position of each of the reflectors r21, r22, and r23 included in the reflector module r2a, based on the identified position of the light emitting body 81. Then, the measurement control apparatus 10 may control the measurement apparatus 21 to measure the reflectors r21, r22, and r23, based on the estimated position of each of the reflectors r21, r22 and the r23. This allows the measurement apparatus 21to narrow down a range to be irradiated with the measurement light to measure the position of each of the reflectors r21, r22, and r23, for example. Therefore, it is possible to reduce the time required for the measurement of the position of each of the reflectors r21, r22, and r23 by the measurement apparatus 21.

The light emitting body may be disposed only in the vicinity of each of the reflectors r11, r12, and r13. In this instance, the measurement control apparatus 10 may identify the position of the light emitting body from the image captured by the stereo camera 22, only when the measurement apparatus 21 measures the position of each of the reflectors r11, r12, and r13.

Alternatively, the light emitting body may be disposed only on the robot arm 410. In this instance, the measurement control apparatus 10 may identify the position of the light emitting body 81 from the image captured by the stereo camera 22, only when the measurement apparatus 21 measures the position of each of the reflectors r21, r22, and r23 included in the reflector module r2a.

When the reflectors r21, r22, and r23 are rephrased as the measurement member, it can be said that the measurement system 2 may include the stereo camera 22 that may be referred to as an imaging apparatus configured to image the measurement member. Alternatively, it can be said that the measurement system 2 may include the stereo camera 22 that may be referred to as a second measurement apparatus configured to measure the measurement member with the accuracy coarser than that of the measurement apparatus 21, which may be referred to as the first measurement apparatus. The measurement control apparatus 10 may control the measurement of the measurement member by the measurement apparatus 21, based on a measurement result by the stereo camera 22.

### (3-2) Method Using Wireless Communication

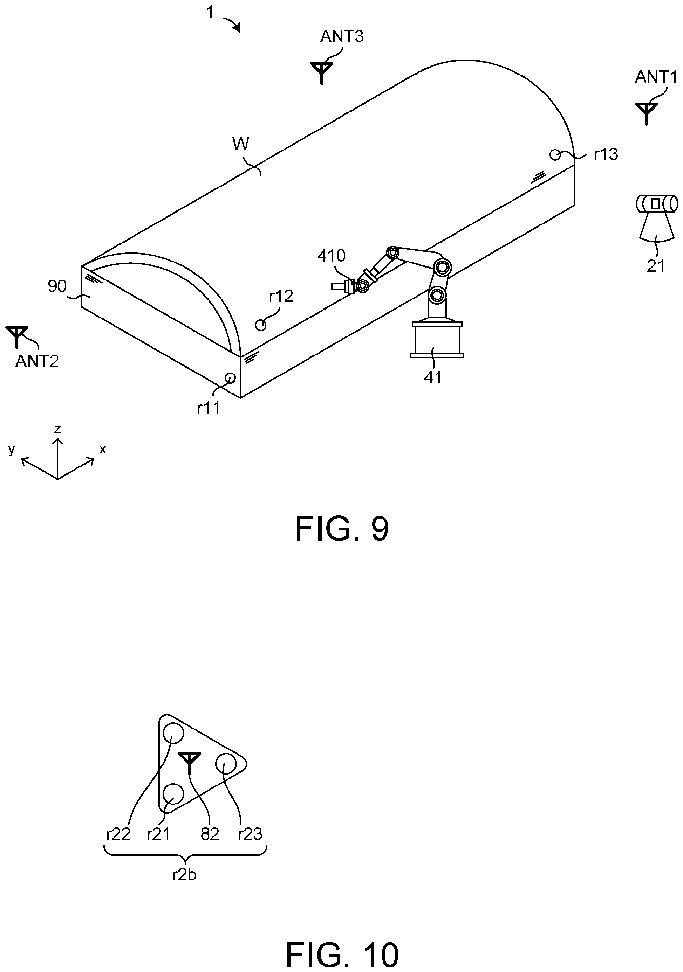

The measurement instrument 2 may include antennas ANT1, ANT2 and ANT3 that are wirelessly communicable, in addition to the measurement apparatus 21. Each of the antennas ANT1, ANT2 and ANT3 may be disposed around the workpiece W, as illustrated in FIG. 9, for example.

Here, it is assumed that a positional relation between the measurement apparatus 21 and each of the antennas ANT1, ANT2 and ANT3 is known. It is also assumed that the positional relation between the measurement apparatus 21 and each of the antennas ANT1, ANT2 and ANT3 is unchanged. That is, as in the case of using the stereo camera, the measurement apparatus 21 is capable of transforming a position in a coordinate system according to the antennas ANT1, ANT2 and ANT3 to the position in the first measurement coordinate system according to the measurement apparatus 21 (in other words, is capable of integrating the coordinate systems). The positional relation between the measurement apparatus 21 and each of the antennas ANT1, ANT2 and ANT3 may not be known. Furthermore, the positional relation between the measurement apparatus 21 and each of the antennas ANT1, ANT2 and ANT3 may not be unchanged.

In the vicinity of each of the reflectors r11, r12, and r13, a not-illustrated wirelessly communicable ranging/distance measurement antenna may be disposed. To the robot arm 410, a reflector module r2b including the reflectors r21, r22, and r23 and a wirelessly communicable ranging antenna 82 as illustrated in FIG. 10, may be attached, instead of the reflector module r2 (see FIG. 5).

The antennas ANT1, ANT2 and ANT3 transmit radio waves. For example, a case where the position of the ranging antenna 82 is identified by the antennas ANT1, ANT2 and ANT3 will be described. The antenna ANT1 is capable of transmitting two or more radio waves with different frequencies. The ranging antenna 82 is configured to receive the two or more radio waves transmitted from the antenna ANT1. From a difference in phase of each of the two or more radio waves received by the ranging antenna 82, a distance between the antenna ANT1 and the ranging antenna 82 is estimated. Since the two or more radio waves transmitted from the antenna ANT1 have different frequencies, the phase difference between the two or more radio waves varies depending on the distance between the antenna ANT1 and the ranging antenna 82. Similarly, a distance from the antenna ANT2 to the ranging antenna 82, and a distance from the antenna ANT3 to the ranging antenna 82 are estimated.

For example, it is possible to identify the position of the ranging antenna 82 by obtaining an intersection of: a sphere centered on the antenna ANT1 with a radius that is the distance from the antenna ANT1 to the ranging antenna 82; a sphere centered on the antenna ANT2 with a radius that is the distance from the antenna ANT2 to the ranging antenna 82 ; and a sphere centered on the antenna ANT3 with a radius that is the distance from the antenna ANT3 to the ranging antenna 82. An error in the distance measured by using wireless communication (in other words, measured based on the phase difference of the radio waves) is, for example, about 10 centimeters. For example, the accuracy of the position of the ranging antenna 82 identified by using wireless communications is coarser than the accuracy according to the measurement apparatus 21. That is, identifying the position of the ranging antenna (e.g., the ranging antenna 82) by using wireless communication has the same meaning as identifying the position of the reflector in the vicinity of the ranging antenna, in view of the accuracy.

The measurement control apparatus 10 may transform, for example, the position of the ranging antenna 82 measured by using wireless communication, to the position of the ranging antenna 82 in the first measurement coordinate system. The measurement control apparatus 10 may estimate, for example, the position of each of the reflectors r21, r22, and r23 included in the reflector module r2b, based on the position of the ranging antenna 82 in the first measurement coordinate system. The measurement control apparatus 10 may control the measurement apparatus 21 to measure the reflectors r21, r22, and r23, respectively, based on the estimated positions of the reflectors r21, r22, and r23. This allows the measurement apparatus 21 to narrow down a range to be irradiated with the measurement light to measure the position of each of the reflectors r21, r22, and r23 (i.e., a scanning range of the measurement light to find the reflector), for example. Therefore, it is possible to reduce the time required for the measurement of the position of each of the reflectors r21, r22, and r23 by the measurement apparatus 21.

The measurement control apparatus 10 may estimate the position of the reflector r11, for example, based on the position of the ranging antenna disposed in the vicinity of the reflector r11 identified by a similar technique. The measurement control apparatus 10 may control the measurement apparatus 21 to measure the reflector r11, based on the estimated position of the reflector r11. This allows the measurement apparatus 21 to narrow down a range to be irradiated with the measurement light to measure the position of the reflector r11 (i.e., a scanning range of the measurement light to find the reflector), for example. Therefore, it is possible to reduce the time required for the measurement of the position of the reflector r11 by the measurement apparatus 21. The same applies to the reflectors r12 and r13.

The ranging antenna may be disposed only in the vicinity of each of the reflectors r11, r12, and r13. In this instance, the measurement control apparatus 10 may identify the position of the ranging antenna from the distance to the ranging antenna identified by each of the antennas ANT1, ANT2 and ANT3, only when the measurement apparatus 21 measures the position of each of the reflectors r11, r12, and r13.

Alternatively, the ranging antenna may be disposed only on the robot arm 410. In this instance, the measurement control apparatus 10 may identify the position of the ranging antenna 82 from the distance to the ranging antenna 82 identified by each of the antennas ANT1, ANT2 and ANT3, only when the measurement apparatus 21 measures the position of each of the reflectors r21, r22, and r23 included in the reflector module r2b.

When the reflectors r21, r22, and r23 are rephrased as the measurement member, it can be said that the measurement system 2 may include the antennas ANT1, ANT2 and ANT3 that may be referred to as the second measurement apparatus configured to measure the measurement member with the accuracy coarser than that of the measurement apparatus 21, which may be referred to as the first measurement apparatus. The measurement control apparatus 10 may control the measurement of the measurement member by the measurement apparatus 21, based on a measurement result by the antennas ANT1, ANT2 and ANT3.

### (4) Tool Center Point

When the processing control apparatus 30 controls the robot 41, the processing control apparatus 30 sets a route/path in which one point on the robot arm 410 of the robot 41 moves. The one point on the robot arm 410 is referred to as a so-called "tool center point" (hereinafter referred to as "TCP" as appropriate). The TCP roughly identifies the position of a part acting on a processing target, of an end effector (in other words, a tool) attached to the tip of the robot arm 410. The TCP is a part serving as a reference when the processing control apparatus 30 controls the robot 41. Therefore, the tool center point may be referred to as a reference part.

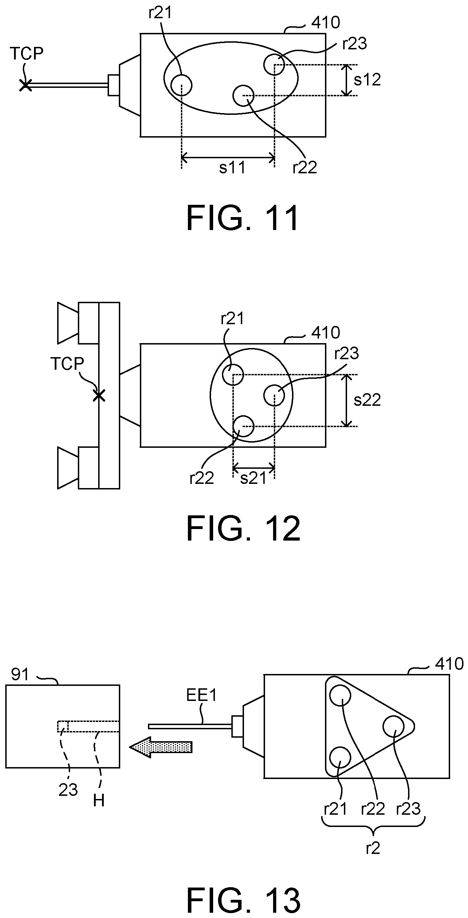

The TCP varies depending on the application of the end effector, or the like. That is, in a case where the end effector is changed, the TCP of the robot arm 410 also changes. For example, in the case of a rod-shaped end effector EE1, as illustrated in FIG. 5, the TCP may be positioned at the tip of the end effector EE1. For example, in a case where the end effector is a suction hand having a plurality of suction pads, the TCP may be positioned in one of the plurality of suction pads, or may be positioned in the middle of the plurality of suction pads (e.g., see FIG. 12). For example, in a case where the end effector is a grasping hand having a plurality of finger parts or claw parts, the TCP may be positioned in one of the plurality of finger parts or claw parts, or may be positioned in the middle of the plurality of finger parts or claw parts. For example, in a case where a suction hand or a gripping hand is attached to the robot arm 410, the robot 41 may be referred to as a pick-up apparatus. The end effector attached to the robot arm 410 is not limited to those.

For example, as illustrated in FIG. 5, the position of the reflector module r2 attached to the robot arm 410 is different from the position of the TCP. That is, the positions where the reflectors r21, r22, and r23, which may be referred to as the measurement member, are attached, are differ from the position of the TCP. As described above, since the TCP corresponds to the part acting on the processing target, it is hard to attach a member for measurement such as a reflector, to the TCP.

On the other hand, the reflector module r2 is attached at a predetermined position on the robot arm 410 such that a positional relation between the reflector module r2 and the TCP does not change. That is, the position of each of the reflectors r21, r22, and r23 included in the reflector module r2 is the predetermined position with respect to the TCP, which may be referred to as the reference part, on the robot arm 410. In other words, the reflector module r2 including at least three reflectors (e.g., the reflectors r21, r22 and r23) is disposed at the predetermined position with respect to the TCP of the robot 41. That is, at the predetermined position with respect to the TCP of the robot 41, the reflectors r21, r22 and r23 capable of reflecting the measurement light are disposed. Therefore, by the measurement apparatus 21 measuring the position of each of the reflectors r21, r22, and r23 using the positional relation between each of the reflectors r21, r22 and r23 and the TCP, it is possible to identify the position of the TCP.

The arrangement of the reflectors r21, r22, and r23 attached to the robot arm 410 may be changed according to a shape of the end effector attached to the tip of the robot arm 410 or the like. In a case where the end effector is a rod-shaped end effector extending in a longitudinal direction of the robot arm 410, the reflectors r21, r22, and r23 may be arranged, for example, as illustrated in FIG. 11. That is, a space/interval s11 between the reflector r21 and the reflector r23 on the robot arm 410 (i.e., a space in a longitudinal direction of the robot arm 410, which may be referred to as a first direction) may be longer than a space s12 between the reflector r22 and the reflector r23 (i.e., a space in a second direction intersecting the first direction). In other words, the space s11 in the first direction of the plurality of reflectors on the robot arm 410 in which the plurality of reflectors are disposed, may be longer than the space s12 in the second direction intersecting the first direction. In this way, when the position and posture of the TCP are calculated from the position of each of reflectors r21, r22, and r23 (see "(5) Calculation of Position of the TCP"), it is possible to obtain an inclination in the longitudinal direction of the robot arm 410 (in other words, an axis of the rod-shaped end effector), relatively accurately.

In a case where the end effector is a suction hand having a branched tip, the reflectors r21, r22, and r23 may be arranged, for example, as illustrated in FIG. 12. That is, a space s21 between the reflector r21 and the reflector r23 on the robot arm 410 (i.e., a space in the longitudinal direction of the robot arm 410, which may be referred to as the first direction) may be shorter than a space s22 between the reflector r22 and the reflector r23 (i.e., a space in the second direction intersecting the first direction). In other words, the space s21 in the first direction of the plurality of reflectors on the robot arm 410 in which the plurality of reflectors are disposed, may be shorter than the space s22 in the second direction intersecting the first direction. In this way, when the position and posture of the TCP are calculated from the position of each of the reflectors r21, r22, and r23, it is possible to obtain a degree of rotation (e.g., a rotation angle) around the longitudinal direction of the robot arm 410 (in other words, the axis of the rod-shaped end effector), relatively accurately. The first direction may be rephrased as a direction along a rotation axis of the end effector, which may be referred to as a processing tool, of the robot arm 410. For example, in a case where the end effector is a laser processing head capable of performing laser processing on the processing target, the first direction may be rephrased as a direction along an optical axis of laser light (i.e., processing light) emitted from the laser processing head.

### (4-1) Measurement of TCP

A specific measurement method of measuring the TCP will be described with reference to FIG. 13 to FIG. 17. The measurement method of measuring the TCP is not limited to the method described below, but various existing aspects are applicable thereto.

### (4-1-1) Method Using Contact Sensor

In FIG. 13, a hole H into which the rod-shaped end effector EE1 is inserted is formed in the jig 91. On a bottom surface of the hole H, a sensor 23 for measuring the end effector EE1 is disposed. The jig 91 is fixed so as not to change its position. The position of the sensor 23, in other words, the position of the bottom surface of the hole H of the jig 91 is assumed to be known. The position of the sensor 23 may be represented as the position in the robot coordinate system.

In this instance, when the tip of the end effector EE1 contacts with the sensor 23 (in other words, when the sensor 23 measures the tip of the end effector EE1), the position of the TCP of the end effector EE1 is identified as the position of the sensor 23. The position of the TCP of the end effector EE1 identified in this manner may be inputted to the measurement control apparatus 10 via the input apparatus 14. At this time, the position of the TCP may be the position of the TCP in the robot coordinate system. The sensor 23 may be disposed not only in the bottom surface of the hole H, but also on a side surface of the hole H, for example. The sensor 23 may be referred to as a third measurement apparatus.

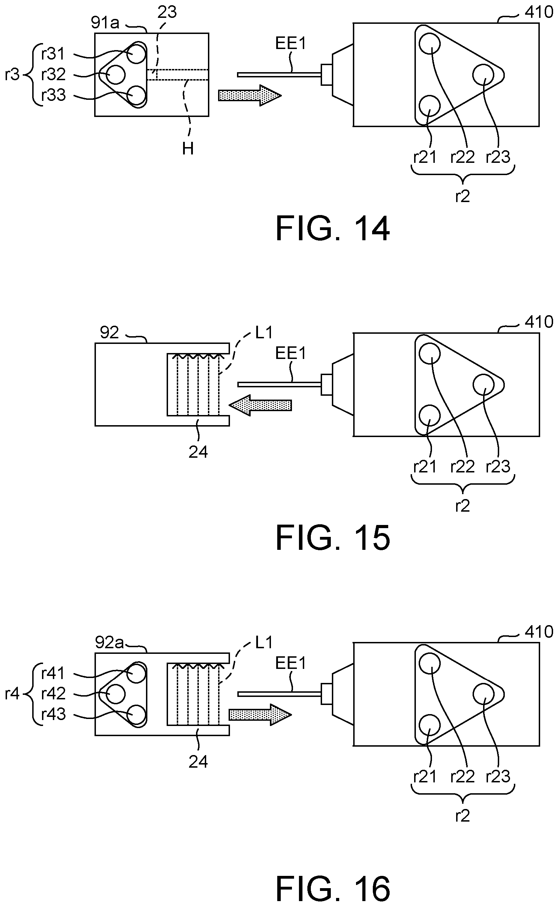

In FIG. 14, the hole H into which the rod-shaped end effector EE1 is inserted, is formed in a jig 91a. On the bottom surface of the hole H, the sensor 23 for measuring the end effector EE1 is disposed. To the jig 91a, a reflector module r3 including reflectors r31, r32 and r33 is attached. The jig 91a may be moved (i.e., the position of the jig 91a may change) such that the end effector EE1 is inserted into the hole H. A positional relation between the sensor 23 and each of the reflectors r31, r32 and r33 is assumed to be known. For example, it is assumed that a transformation matrix for transforming the position of each of the reflectors r31, r32 and r33 to the position of the sensor 23 is known. The reflector module r3 or the reflectors r31, r32 and r33 may be referred to as a second reference member.

In this case, in a state in which the tip of the end effector EE1 contacts with the sensor 23 (i.e., in a state in which the end effector EE1 is inserted in the hole H of the jig 91a), the measurement apparatus 21 irradiates each of the reflectors r31, r32 and r33 with the measurement light. The measurement apparatus 21 measures the position of each of the reflectors r31, r32 and r33 in the first measurement coordinate system, based on the measurement light applied to each of the reflectors r31, r32 and r33. The measurement control apparatus 10 identifies the position of the TCP of the end effector EE1, based on the position of each of the reflectors r31, r32 and r33 in the first measurement coordinate system and the positional relation between the sensor 23 and each of the reflectors r31, r32 and r33. Since the positional relation between the sensor 23 and each of the reflectors r31, r32 and r33 is known, the arithmetic apparatus 11 of the measurement control apparatus 10 may transform the position of each of the reflectors r31, r32 and r33 in the first measurement coordinate system measured by the measurement apparatus 21, to the position of the sensor 23 in the first measurement coordinate system, based on the transformation matrix for transforming the position of each of the reflectors r31, r32 and r33 in the first measurement coordinate system to the position of the sensor 23, for example. Here, since the position of the sensor 23 corresponds to the position of the TCP of the end effector EE1, the position of the TCP (e.g., the position of the TCP in the first measurement coordinate system) is identified by the arithmetic apparatus 11 transforming the position of each of the reflectors r31, r32 and r33 in the first measurement coordinate system to the position of the sensor 23 in the first measurement coordinate system.

### (4-1-2) Method Using Non-Contact Sensor

In FIG. 15, a sensor 24 for measuring a measurement subject by an optical cutting method is attached to a jig 92. Here, the sensor 24 is configured to emit light L1. The jig 92 is fixed so as not to change its position. For example, it is assumed that the position in the robot coordinate system corresponding to a reference point according to the sensor 24 is known. In this instance, the position of the TCP of the end effector EE1 measured by the sensor 24 may be transformed to the position in the robot coordinate system, based on a relation between the reference point according to the sensor 24 and the position in the robot coordinate system corresponding to the reference point. For example, it is assumed that a coordinate system according to the sensor 24 is a second measurement coordinate system. Since the reference point according to the sensor 24 (i.e., the reference point in the second measurement coordinate system) and the position in the robot coordinate system corresponding to the reference point are known, for example, the arithmetic apparatus 11 of the measurement control apparatus 10 may calculate a transformation matrix for transforming the position in the second measurement coordinate system to the position in the robot coordinate system. Based on the transformation matrix, the arithmetic apparatus 11 may transform the position of the TCP measured by the sensor 24 (i.e., the position in the second measurement coordinate system) to the position of the TCP in the robot coordinate system. The position of the TCP of the end effector EE1 measured in this way, may be inputted to the measurement control apparatus 10 via the input apparatus 14. The sensor 24 may be referred to as the third measurement apparatus.

In FIG. 16, the sensor 24 is attached to a jig 92a. To the jig 92a, a reflector module r4 including reflectors r41, r42 and r43 is attached. The jig 92a may be moved such that the sensor 24 approaches the end effector EE1. A positional relation between the reference point according to the sensor 24 and each of the reflectors r41, r42 and r43 is assumed to be known. For example, it is assumed that a transformation matrix for transforming the position of each of the reflectors r41, r42 and r43 to the reference point according to sensor 24 is known. The reflector module r4 or the reflectors r41, r42 and r43 may be referred to as the second reference member.

In this case, in a state in which the TCP of the end effector EE1 is measured by the sensor 24, the measurement apparatus 21 irradiates each of the reflectors r41, r42 and r43 with the measurement light. The measurement apparatus 21 measures the position of each of the reflectors r41, r42 and r43 in the first measurement coordinate system, based on the measurement light applied to each of the reflectors r41, r42 and r43. The measurement control apparatus 10 identifies the position of the TCP of the end effector EE1, based on the positional relation between the reference point according to the sensor 24 and each of the reflectors r41, r42 and r43, the position of the TCP of the end effector EE1 measured by the sensor 24, and the position of each of the reflectors r41, r42 and r43 in the first measurement coordinate system. Since the positional relation between the reference point according to the sensor 24 and each of the reflectors r41, r42 and r43 is known, the arithmetic apparatus 11 of the measurement control apparatus 10 may transform the position of each of the reflectors r41, r42, and r43 in the first measurement coordinate system measured by the measurement apparatus 21, to the reference point in the first measurement coordinate system, based on the transformation matrix for transforming the position of each of the reflectors r41, r42, and r43 in the first measurement coordinate system to the reference point in the first measurement coordinate system, for example. The arithmetic apparatus 11 may obtain a transformation matrix for transforming the position in the second measurement coordinate system to the position in the first measurement coordinate system, based on the reference point in the first measurement coordinate system and the reference point in the second measurement coordinate system (i.e., the reference point according to the sensor 24 in the coordinate system according to the sensor 24). The arithmetic apparatus 11 may transform the position of the TCP measured by the sensor 24 (i.e., the position in the second measurement coordinate system) to the position of the TCP in the first measurement coordinate system, based on the transformation matrix.

The arithmetic apparatus 11 may not obtain "the transformation matrix for transforming the position in the second measurement coordinate system to the position in the first measurement coordinate system" described above. In this instance, the transformation matrix may be inputted via the input apparatus 14 of the measurement control apparatus 10, for example, by a manager/administrator of the system 1. That is, the measurement control apparatus 10 may acquire the transformation matrix. "The transformation matrix for transforming the position in the second measurement coordinate system to the position in the first measurement coordinate system" may be referred to as third coordinate transformation information. Instead of the sensor 24, a non-contact sensor such as, for example, a stereo camera and a laser scanner may be used to measure the TCP.

### (4-1-3) Others

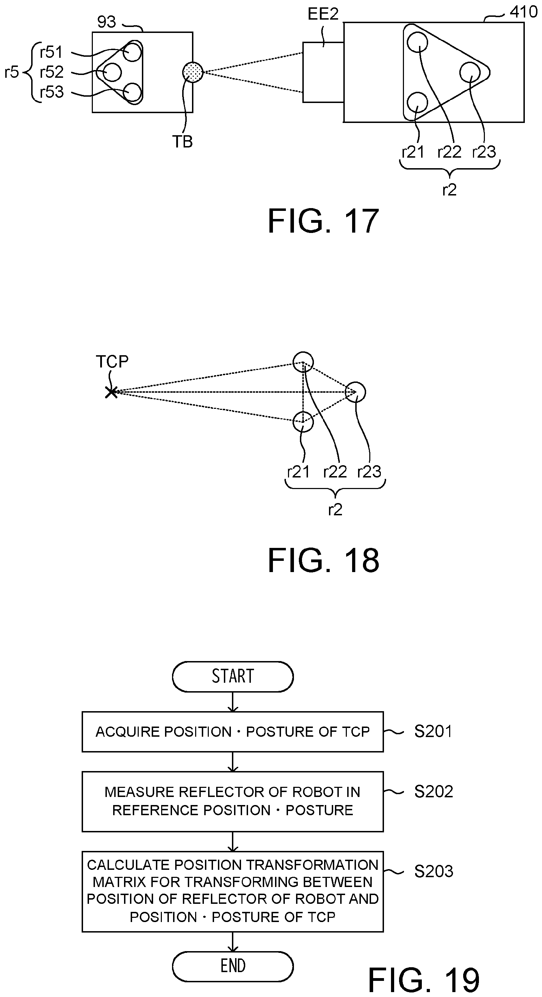

In FIG. 17, for example, an end effector EE2 that is an optical sensor, is attached to the tip of robot arm 410. A tool ball TB is attached to a jig 93. To the jig 93, a reflector module r5 including reflectors r51, r52 and r53 is attached. The position of the jig 93 (in other words, the position of the tool ball TB) may be changeable. A positional relation between a center of the tool ball TB and each of the reflectors r51, r52 and r53 is assumed to be known. The positional relation between the center of the tool ball TB and each of the reflectors r51, r52 and r53 may not be known. The reflector module r5 or the reflectors r51, r52 and r53 may be referred to as the second reference member.

In this case, in a state in which a sensor serving as the end effector EE2 measures the center of the tool ball TB, the measurement apparatus 21 irradiates each of the reflectors r51, r52 and r53 with the measurement light. The measurement apparatus 21 measures the position of each of the reflectors r51, r52 and r53 in the first measurement coordinate system, based on the measurement light applied to each of the reflectors r51, r52 and r53. The measurement control apparatus 10 compares the position of each of the reflectors r51, r52 and r53 in the first measurement coordinate system, with the center of the tool ball TB measured by the sensor serving as the end effector EE2. Such operation is performed a plurality of times (e.g., three times or more) while changing a relative positional relation between the end effector EE2 and the jig 93 (i.e., the tool ball TB). Consequently, the position of the TCP of the end effector EE2 is identified. At this time, the position of the TCP may be the position of the TCP in the first measurement coordinate system. Instead of the tool ball TB, a corner cube may be used.

### (4-2) Measurement of Reflector Module r2

For example, in FIG. 13, in a state in which the TCP of the end effector EE1 is measured, in other words, in a state in which the position of the TCP of the end effector EE1 is identified, the measurement apparatus 21 applies the measurement light to each of the reflectors r21, r22, and r23 included in the reflector module r2 attached to the robot arm 410. The measurement apparatus 21 measures the position of each of the reflectors r21, r22, and r23 in the first measurement coordinate system, based on the measurement light applied to each of the reflectors r21, r22, and r23.

Consequently, in a state in which the position and posture of the robot arm 410 do not change, the position of each of the reflectors r21, r22, and r23 and the position of the TCP are identified (measured). The position and posture of the robot arm 410 at this time are hereinafter referred to as "a reference position and a reference posture" as appropriate. When the robot arm 410 is in the reference position and the reference posture, the position of each of the reflectors r21, r22, and r23 and the position of the TCP may be represented as the positions in the first measurement coordinate system, or may be represented as the positions in the robot coordinate system.

Let us assume that the positions of the reflectors r21, r22, and r23 in the first measurement coordinate system and the position of the TCP when the robot arm 410 is in the reference position and the reference posture, are (x_{r21M}, y_{r21M}, z_{r21M}), (x_{r22M}, y_{r22M}, z_{r22M}), (x_{r23M}, y_{r23M}, z_{r23M}), and (x_{tM}, y_{tM}, z_{tM}), respectively. The arithmetic apparatus 11 may transform the position of the TCP in the robot coordinate system to the position of the TCP in the first measurement coordinate system, based on the first coordinate transformation matrix described above, for example.

The arithmetic apparatus 11 may calculate a posture corresponding to the reference posture of the robot arm 410, based on the position of each of the reflectors r21, r22, and r23 in the first measurement coordinate system. The calculated posture may be represented as (W_{M}, P_{M}, R_{M}), for example. Here, "W_{M}" is an angle around the x-axis of the first measurement coordinate system, "P_{M}" is an angle around the y-axis of the first measurement coordinate system, "R_{M}" may be an angle around the z-axis of the first measurement coordinate system. In other words, "W_{M}" is an amount of rotation of the robot arm 410 about the x-axis of the first measurement coordinate system, "P_{M}" is an amount of rotation of the robot arm 410 about the y-axis of the first measurement coordinate system, and "R_{M}" is an amount of rotation of the robot arm 410 about the z-axis in the first measurement coordinate system.

The posture of a vector extending along a direction in which the end effector EE1 extends (a so-called Tool Axis Vector) is regarded as the posture of the TCP. Here, the posture of the vector and the posture of the robot arm 410 may be regarded as the same. Therefore, the arithmetic apparatus 11 sets the position and posture of the TCP when the position and posture of the robot arm 410 are the reference position and the reference posture, to be (x_{tM}, y_{tM}, z_{tM}, W_{M}, P_{M}, R_{M}) for example. The arithmetic apparatus 11 may store, in the storage apparatus 12, the position and posture of the TCP when the position and posture of the robot arm 410 are the reference position and the reference posture, and the position of each of the reflectors r21, r22, and r23, in association with each other.

Let us assume that the positions of the reflectors r21, r22, and r23 in the robot coordinate system and the position of the TCP when the robot arm 410 is in the reference position and the reference posture, are (x_{r21R}, y_{r21R}, z_{r21R}), (x_{r22R}, y_{r22R}, z_{r22R}), (x_{r23R}, y_{r23R}, z_{r23R}), and (x_{tR}, y_{tR}, z_{tR}), respectively. The arithmetic apparatus 11 may transform the position of each of the reflectors r21, r22, and r23 in the first measurement coordinate system measured by the measurement apparatus 21, to the position of each of the reflectors r21, r22, and r23 in the robot coordinate system, based on the second coordinate transformation matrix described above, for example. Furthermore, the arithmetic apparatus 11 may transform the position of the TCP in the first measurement coordinate system to the position of the TCP in the robot coordinate system, based on the second coordinate transformation matrix described above, for example.

The arithmetic apparatus 11 may calculate the posture corresponding to the reference posture of the robot arm 410, based on position of each of the reflectors r21, r22, and r23 in the robot coordinate system. The calculated posture may be represented as (W_{R},P_{R},R_{R}), for example. Here, "W_{R}" is an angle about the x-axis of the robot coordinate system, "P_{R}" is an angle about the y-axis of the robot coordinate system, and "R_{R}" may be an angle about the z-axis of the robot coordinate system. In other words, "W_{R}" is an amount of rotation of robot arm 410 about the x-axis of the robot coordinate system, "P_{R}" is an amount of rotation of robot arm 410 about the y-axis of the robot coordinate system, and "R_{R}" is an amount of rotation of robot arm 410 about the z-axis in the robot coordinate system.

The arithmetic apparatus 11 sets the position and posture of the TCP when the position and posture of the robot arm 410 are the reference position and the reference posture, to be (x_{tR}, y_{tR}, z_{tR}, W_{R}, P_{R}, R_{R}), for example. The arithmetic apparatus 11 may store, in the storage apparatus 12, the position and posture of the TCP when the position and posture of the robot arm 410 are the reference position and the reference posture, and the position of each of the reflectors r21, r22, and r23, in association with each other.

### (4-3) Position Transformation

The arithmetic apparatus 11 may obtain a position transformation matrix for transforming the position of each of the reflectors r21, r22, and r23 to the position and posture of the TCP, based on the position and posture of the TCP and the position of each of the reflectors r21, r22, and r23, which are stored in the storage apparatus 12 in association with each other. The position transformation matrix may include a matrix for obtaining the position of the TCP based on the position of each of the reflectors r21, r22, and r23, and a matrix for obtaining the posture of the TCP based on the position of each of the reflectors r21, r22, and r23, for example. The position transformation matrix may be referred to as position transformation information.

The arithmetic apparatus 11 may obtain the position transformation matrix, based on the position of each of the reflectors r21, r22, and r23 in the first measurement coordinate system and the position of the TCP when the robot arm 410 is in the reference position and the reference posture (i.e., when the position of each of the reflectors and the position of the TCP are associated with each other), for example. The position transformation matrix in the first measurement coordinate system may be referred to as first position transformation information.

The arithmetic apparatus 11 may obtain the position transformation matrix, based on the position of each of the reflectors r21, r22, and r23 in the robot coordinate system and the position of the TCP when the robot arm 410 is in the reference position and the reference posture (i.e., when the position of each of the reflectors and the position of the TCP are associated with each other), for example. The position transformation matrix in the robot coordinate system may be referred to as second position transformation information.

Here, whether the position of each of the reflectors r21, r22, and r23, and the position of the TCP when the robot arm 410 is in the reference position and the reference posture are represented as the positions in the robot coordinate system or the positions in the first measurement coordinate system, a physical positional relation between the reflectors r21, r22, and r23 and the TCP does not change (e.g., see FIG. 18). Therefore, the first position transformation matrix and the second position transformation matrix are substantially the same. For this reason, in the following description, "the first position transformation matrix" and "the second position transformation matrix" are expressed as a "position transformation matrix". That is, "the position transformation matrix" is a concept including "the first position transformation matrix" and "the second position transformation matrix".

Here, the operation of the measurement system 2 will be described again with reference to a flowchart in FIG. 19. In FIG. 19, the arithmetic apparatus 11 acquires the position of the TCP of the robot 41, when the robot arm 410 is in the reference position and the reference posture. At this time, the arithmetic apparatus 11 calculates the posture corresponding to the reference posture of the robot arm 410, based on the position of each of the reflectors r21, r22, and r23. The arithmetic apparatus 11 acquires the position and posture of the TCP by setting the calculated posture to be the posture of the TCP (step S201).

In parallel with the step S201, the measurement apparatus 21 measures the position of each of the reflectors r21, r22, and r23 in the first measurement coordinate system, based on the measurement light applied to each of the reflectors r21, r22, and r23, when the robot arm 410 of the robot 41 is in the reference position and the reference posture (step S202). At this time, the arithmetic apparatus 11 of the measurement control apparatus 10 acquires position information indicating the position of each of the reflectors r21, r22, and r23 in the first measurement coordinate system.

The arithmetic apparatus 11 obtains the position transformation matrix for transforming between the position of each of the reflectors r21, r22, and r23 and the position and posture of the TCP, based on the position and posture of the TCP acquired in the step S201 and the position information acquired in the step S202(step S203).

The position transformation matrix may be obtained, for example, as follows. First, when the position and posture of the robot arm 410 are the reference position and the reference posture, the position of each of the reflectors r21, r22, and r23 is obtained, and the posture of a plane defined by the reflectors r21, r22 and r23 is measured based on the measured position. Then, the processing control apparatus 30 controls the robot 41 such that the position and the posture of the TCP are a predetermined position and a predetermined posture. As a result, the position and posture of the robot arm 410 are changed. Thereafter, the position of each of the reflectors r21, r22, and r23 is measured, and the posture of the plane defined by the reflectors r21, r22, and r23 is measured based on the measured position. At this time, the predetermined position and posture of the TCP are determined by the processing control apparatus 30 (i.e., is known). Based on a result of repeating the above-described operation a plurality of times, the position transformation matrix may be statistically determined.

For example, in FIG. 13, when the position of the TCP of the end effector EE1 is measured, the position and posture of the robot arm 410 are the reference position and the reference posture, and it can be thus said that TCP is at the predetermined position. The position of each of the reflectors r21, r22, and r23 used to determine the position transformation matrix is measured in a state in which the TCP of the end effector EE1 is measured.

"The state in which the robot arm 410 is in the reference position and the reference posture" may be rephrased as "a state in which the TCP of the robot 41, which may be referred to as the processing apparatus, is at the predetermined position". Here, "the state in which the TCP of the robot 41, which may be referred to as the processing apparatus, is at the predetermined position" may be referred to as a first state. "The position of each of the reflectors r21, r22, and r23 in the state in which the robot arm 410 is in the reference position and the reference posture" may be rephrased as " the position of the measurement member measured by the measurement apparatus 21, which may be referred to as the first measurement apparatus, using the measurement light applied to the measurement member in the first state," when the reflectors r21, r22 and r23 are rephrased as the measurement member. "The state in which the robot arm 410 is in the reference position and the reference posture" may be rephrased as "the state in which the third measurement apparatus measures the position of the TCP," when the sensors 23 and 24 are rephrased as the third measurement apparatus.

For example, as illustrated in FIG. 14 and FIG. 16, in a case where a jig for measuring the position of the TCP of the end effector EE1 (e.g., see the jig 91a and the jig 92a) is movable and the reflector is attached to the jig, the position of the reflector attached to the jig may move according to the position of the end effector EE1 (i.e., the position of the robot arm 410). Furthermore, it can be said that a positional relation between the reflector attached to the jig and the reflectors r21, r22, and r23 attached to the robot arm 410 (in other words, the measurement member) is a predetermined relation when the position of the TCP is measured. In this situation, the measurement apparatus 21 is capable of identifying the position of the TCP by measuring the position of the reflector attached to the jig (see "(4-1) Measurement of TCP " described above).

When the reflector attached to the jig is rephrased as the second reference member, it can be said that the measurement apparatus 21, which may be referred to as the first measurement apparatus, is capable of measuring the position of the TCP of the robot 41 that moves in accordance with the movement of the robot arm 410, by measuring the position of the second reference member by applying the measurement light to the second reference member that moves in accordance with the position of the robot arm 410.

From the above-described matters, it is possible to make the measurement system 2 including the measurement control apparatus 10 and the measurement apparatus 21 cooperate with the processing control apparatus 30. That is, the measurement result by the measurement apparatus 21 may be used for the control of the robot 41 by the processing control apparatus 30.

For example, when the position and posture of the robot arm 410 are different from the reference position and the reference posture, it is possible to transform the position of each of the reflectors r21, r22, and r23 in the measurement coordinate system measured by the measurement apparatus 21, to the position of the TCP in the robot coordinate system, by using the coordinate transformation matrix and the position transformation matrix. The position of the TCP in the robot coordinate system is used when the processing control apparatus 30 controls the robot 41.

The communication apparatus 13 of the measurement control apparatus 10 may transmit, to the processing control apparatus 30, for example, the position and posture of the TCP in the robot coordinate system and the position of each of the reflectors r21, r22, and r23 in the robot coordinate system when the robot arm 410 is in the reference position and the reference posture, in association with each other. The processing control apparatus 30 may store, in the storage apparatus 32, for example, the position and posture of the TCP in the robot coordinate system and the position of each of the reflectors r21, r22, and r23 in the robot coordinate system when the robot arm 410 is in the reference position and the reference posture, in association with each other.

For example, in a case where the TCP of the end effector EE1 is measured, the processing control apparatus 30 controls the robot 41 such that the position and posture of the robot arm 410 are the reference position and the reference posture. At this time, a position set as a target position by the processing control apparatus 30 (i.e., the position of the TCP when the TCP is measured) is different from an actual position of the TCP in some cases. Therefore, the processing control apparatus 30 may calibrate the origin of the robot coordinate system such that the position set as the target position matches the actual position of the TCP, for example, based on the position and posture of the TCP in the robot coordinate system when the robot arm 410 is in the reference position and the reference posture. Specifically, at least one of rotation and translation of the origin of the robot coordinate system may be performed.

The posture of the TCP when the posture of the robot arm 410 is the reference posture, may be calculated based on the position of each of the reflectors r21, r22, and r23, as described above. Therefore, a situation where the processing control apparatus 30 calibrates the origin of the robot coordinate system based on the position and posture of the TCP in the robot coordinate system, may be rephrased as a situation where the processing control apparatus 30 calibrates the origin of the robot coordinate system based on the position of each of the reflectors r21, r22 and r23.

### (5) Calculation of Position of TCP

By using the above-described coordinate transformation matrix (i.e., transformation information for transforming between the position in the measurement coordinate system and the position in the robot coordinate system) and the coordinate transformation matrix (i.e., transformation information for transforming the position of each of the reflectors r21, r22 and r23 to the position of the TCP), it is possible to transform the position of each of the reflectors r21, r22, and r23 measured by the measurement apparatus 21 in a state in which the position and posture of the robot arm 410 are different from the reference position and the reference posture described above, to the position and posture of the TCP.

As described in "(4-3) Position Transformation", the position transformation matrix is calculated based on (x_{tR}, y_{tR}, z_{tR}, W_{R}, P_{R}, R_{R}), which is the position and posture of the TCP, and (x_{r21R}, y_{r21R}, z_{r21R}), (x_{r22R}, y_{r22R}, z_{r22R}) and (x_{r23R}, y_{r23R}, z_{r23R}), which are the positions of the reflectors r21, r22, and r23, for example. Therefore, by using the position transformation matrix, it is possible to calculate the position and posture of the TCP from the position of each of the reflectors r21, r22, and r23. In order to avoid complexity, the position and posture of the TCP are referred to as "the position of the TCP" as appropriate.

The amount of rotation W_{R} about the x-axis of the robot coordinate system may be rephrased as a position in a rotational direction about the x-axis of the robot coordinate system. The amount of rotation P_{R} about the y-axis of the robot coordinate system may be rephrased as a position in a rotational direction about the y-axis of the robot coordinate system. The amount of rotation R_{R} about the z-axis of the robot coordinate system may be rephrased as a position in a rotational direction about the z-axis of the robot coordinate system. Then, it can be said that the position and posture of the TCP is expressed by the position in the x-axis direction of the robot coordinate system, the position in the y-axis direction of the robot coordinate system, the position in the direction of the z-axis of the robot coordinate system, the position in the rotational direction around the x-axis of the robot coordinate system, the position in the rotational direction around the y-axis of the robot coordinate system, and the position in the rotational direction around the z-axis of the robot coordinate system. That is, the TCP is capable of moving along each of the x-axis direction, the y-axis direction and the z-axis direction in a three-dimensional space and is capable of rotating around each of the x-axis, the y-axis and the z-axis. That is, it can be said that the TCP has six degrees of freedom of movement (so-called 6DoF).

Here, the calculation of the position of the TCP may be performed in the arithmetic apparatus 11 of the measurement control apparatus 10, or may be performed in the arithmetic apparatus 31 of the processing control apparatus 30. The calculation of the position of the TCP may be divided and performed in the arithmetic apparatuses 11 and 31. Furthermore, in consideration of the transformation between the position in the measurement coordinate system and the position in the robot coordinate system, there may be the following four methods.

(i) In a state in which the position and posture of the robot arm 410 are different from the reference position and the reference posture, the measurement apparatus 21 may irradiate each of the reflectors r21, r22, and r23 with the measurement light. The measurement apparatus 21 may measure the position of each of the reflectors r21, r22, and r23 in the first measurement coordinate system, based on the measurement light applied to each of the reflectors r21, r22, and r23.

The arithmetic apparatus 11 of the measurement control apparatus 10 may transform the position of each of the reflectors r21, r22, and r23 in the first measurement coordinate system measured by the measurement apparatus 21, to the position of each of the reflectors r21, r22, and r23 in the robot coordinate system, by using the coordinate transformation matrix. The arithmetic apparatus 11 may further transform the position of each of the reflectors r21, r22, and r23 in the robot coordinate system to the position of the TCP in the robot coordinate system, by using the position transformation matrix.

Alternatively, the arithmetic apparatus 11 may transform the position of each of the reflectors r21, r22, and r23 in the first measurement coordinate system to the position and posture of the TCP in the first measurement coordinate system, by using the position transformation matrix. The arithmetic apparatus 11 may further transform the position of the TCP in the first measurement coordinate system to the position of the TCP in the robot coordinate system, by using the coordinate transformation matrix. The communication apparatus 13 of the measurement control apparatus 10 may transmit position information indicating the position of the TCP in the robot coordinate system, to the processing control apparatus 30.

(ii) In a state in which the position and posture of the robot arm 410 are different from the reference position and the reference posture, the measurement apparatus 21 may irradiate each of the reflectors r21, r22, and r23 with the measurement light. The measurement apparatus 21 may measure the position of each of the reflectors r21, r22, and r23 in the first measurement coordinate system, based on the measurement light applied to each of the reflectors r21, r22, and r23.

The arithmetic apparatus 11 of the measurement control apparatus 10 may transform the position of each of the reflectors r21, r22, and r23 in the first measurement coordinate system measured by the measurement apparatus 21, to the position of each of the reflectors r21, r22, and r23 in the robot coordinate system, by using the coordinate transformation matrix. The communication apparatus 13 of the measurement control apparatus 10 may transmit position information indicating the position of each of the reflectors r21, r22, and r23 in the robot coordinate system and the position transformation matrix, to the processing control apparatus 30. The arithmetic apparatus 31 of the processing control apparatus 30 may transform the position of each of the reflectors r21, r22, and r23 in the robot coordinate system to the position of the TCP in the robot coordinate system, by using the position transformation matrix.

(iii) In a state in which the position and posture of the robot arm 410 are different from the reference position and the reference posture, the measurement apparatus 21 may irradiate each of the reflectors r21, r22, and r23 with the measurement light. The measurement apparatus 21 may measure the position of each of the reflectors r21, r22, and r23 in the first measurement coordinate system, based on the measurement light applied to each of the reflectors r21, r22, and r23.

The arithmetic apparatus 11 of the measurement control apparatus 10 may transform the position of each of the reflectors r21, r22, and r23 in the first measurement coordinate system measured by the measurement apparatus 21, to the position of the TCP in the first measurement coordinate system, by using the position transformation matrix. The communication apparatus 13 of the measurement control apparatus 10 may transmit position information indicating the position of the TCP in the first measurement coordinate system and the coordinate transformation matrix, to the processing control apparatus 30. The arithmetic apparatus 31 of the processing control apparatus 30 may transform the position of the TCP in the first measurement coordinate system to the position of the TCP in the robot coordinate system, by using the coordinate transformation matrix.

(iv) In a state in which the position and posture of the robot arm 410 are different from the reference position and the reference posture, the measurement apparatus 21 may irradiate each of the reflectors r21, r22, and r23 with the measurement light. The measurement apparatus 21 may measure the position of each of the reflectors r21, r22, and r23 in the first measurement coordinate system, based on the measurement light applied to each of the reflectors r21, r22, and r23.

The communication apparatus 13 of the measurement control apparatus 10 may transmit the position information indicating the position of each of the reflectors r21, r22, and r23 in the first measurement coordinate system measured by the measurement apparatus 21, the coordinate transformation information, and the position transformation information, to the processing control apparatus 30. The arithmetic apparatus 31 of the processing control apparatus 30 may transform the position of each of the reflectors r21, r22, and r23 in the first measurement coordinate system to the position of each of the reflectors r21, r22, and r23 in the robot coordinate system, by using the coordinate transformation matrix. The arithmetic apparatus 31 may further transform the position of each of the reflectors r21, r22, and r23 in the robot coordinate system to the position of the TCP in the robot coordinate system, by using the position transformation matrix.

Alternatively, the arithmetic apparatus 31 may transform the position of each of the reflectors r21, r22, and r23 in the first measurement coordinate system indicated by the position information, to the position and posture of the TCP in the first measurement coordinate system, by using the position transformation matrix. The arithmetic apparatus 31 may further transform the position of the TCP in the first measurement coordinate system to the position of the TCP in the robot coordinate system, by using the coordinate transformation matrix.

Here, focusing on the operation of the measurement control apparatus 10, the above (i) to (iv) are divided into a case where the measurement control apparatus 10 transmits the position transformation information to the processing control apparatus 30 and a case where the measurement control apparatus 10 transmits the position information indicating the position of the TCP to the processing control apparatus 30.

### (5-1) In Case Where Measurement Control Apparatus 10 Transmits Position Transformation Information to Processing Control Apparatus 30

In this case, the communication apparatus 13 of the measurement control apparatus 10 transmits the position information indicating the position of each of the reflectors r21, r22, and r23 in the robot coordinate system (see the above (ii)), or the position information indicating the position of each of the reflectors r21, r22, and r23 in the first measurement coordinate system (see the above (iv)), to the processing control apparatus 30, in addition to the position transformation information.

When the reflectors r21, r22, and r23 are rephrased as the measurement member, the position information indicating the position of each of the reflectors r21, r22, and r23 in the robot coordinate system and the position information indicating the position of each of the reflectors r21, r22, and r23 in the first measurement coordinate system, may be rephrased as "position information indicating the position of the measurement member". That is, "the position information indicating the position of the measurement member" is a concept including the position information indicating the position of the measurement member in the robot coordinate system and the position information indicating the position of the measurement member in the first measurement coordinate system. Furthermore, "the state in which the position and the posture of the robot arm 410 are different from the reference position and the reference posture" may be rephrased as "a state in which the TCP of the robot 41, which may be referred to as the processing apparatus, is at a position that is different from the predetermined position."

From these, the following aspect is derived for the above (ii) and (iv). The communication apparatus 13, which may be referred to as the transmission unit, may transmit the position transformation matrix to the processing control apparatus 30, and the communication apparatus 13 further may transmit, to the processing control apparatus 30, the position information indicating the position of the measurement member measured by the measurement apparatus 21, which may be referred to as the first measurement apparatus, using the measurement light applied to the measurement member in a second state in which the TCP is at a position that is different from the predetermined position.

Furthermore, "the state in which the position and the posture of the robot arm 410 are different from the reference position and the reference posture" may be rephrased as "a state in which the third measurement apparatus does not measure the position of the TCP," when the sensors 23 and 24 are rephrased as the third measurement apparatus, for example. From this, the following aspect is derived for the above (ii) and (iv). The communication apparatus 13, which may be referred to as the transmission unit, may transmit, to the processing control apparatus 30, the position transformation matrix and the position information indicating the position of the measurement member measured by the measurement apparatus 21, which may be referred to as the first measurement apparatus, using the measurement light applied to the measurement member in a state in which the third measurement apparatus does not measure the position of the TCP.

For example, as illustrated in FIG. 14 and FIG. 16, in a case where a jig for measuring the position of the TCP of the end effector EE1 (e.g., see the jig 91a and the jig 92a) is movable and the reflector is attached to the jig, it can be said that the positional relation between the reflector attached to the jig and the reflectors r21, r22, and r23 attached to the robot arm 410 (in other words, the measurement member) is the predetermined relation when the position of the TCP is measured.

Here, when "the position and the posture of the robot arm 410 are different from the reference position and the reference posture", may be rephrased as when "the position of the TCP is not measured by the jig (e.g., by the sensor 23 or 24)". Therefore, in a case where the position of the TCP is not measured, it can be said that the positional relation between the reflector attached to the jig and the reflectors r21, r22, and r23 attached to the robot arm 410 is a relation that is different from the predetermined relation.

From these, the following aspect is derived for the above (ii) and (iv). The communication apparatus 13, which may be referred to as the transmission unit, may transmit, to the processing control apparatus 30, the position transformation matrix and the position information indicating the position of the measurement member measured by the measurement apparatus 21, which may be referred to as the first measurement apparatus, using the measurement light applied to the measurement member when the positional relation between the measurement member and the second reference member is a relation that is different from a predetermined positional relation. In the above, the reflector attached to the jig is rephrased as the second reference member.

### (5-2) In Case Where Measurement Control Apparatus 10 Transmits Position Information Indicating Position of TCP to Processing Control Apparatus 30

In this instance, the arithmetic apparatus 11 of the measurement control apparatus 10 may transform the position of each of the reflectors r21, r22, and r23 measured by the measurement apparatus 21 to the position of the TCP, based on the position transformation matrix. The transformed position of the TCP may be the position of the TCP in the robot coordinate system (see the above (i)), or may be the position of the TCP in the first measurement coordinate system (see the above (iii)).

When the reflectors r21, r22, and r23 are rephrased as the measurement member, it can be said that the arithmetic apparatus 11, which may be referred to as the arithmetic unit, may transform the position of the measurement member measured by the measurement apparatus 21, which may be referred to as the first measurement apparatus, using the measurement light applied to the measurement member to the position of the TCP of the robot 41, based on the position transformation matrix.

Alternatively, considering that the position transformation matrix is calculated based on the position of the measurement member measured by the measurement apparatus 21 (see "(4-3) Position Transformation"), it can be said that the arithmetic apparatus 11, which may be referred to as the arithmetic unit, may transform the position of the measurement member to the position of the TCP of the robot 41, based on the position of the measurement member measured by the measurement apparatus 21, which may be referred to as the first measurement apparatus.

"The state in which the position and the posture of the robot arm 410 are different from the reference position and the reference posture" may be rephrased as "a state in which the third measurement apparatus does not measure the position of the TCP", when the sensors 23 and 24 are rephrased as the third measurement apparatus, for example. From this, the following aspect is derived for the above (i) and (iii). The arithmetic apparatus 11, which may be referred to as the arithmetic unit, may transform the position of the measurement member measured by the measurement apparatus 21, which may be referred to as the first measurement apparatus, using the measurement light applied to the measurement member in a state in which the third measurement apparatus does not measure the position of the TCP, to the position of the TCP, on the basis of the position transformation matrix.

Furthermore, "the position transformation matrix" may be calculated on the basis of: the position of the measurement member measured by the measurement apparatus 21 using the measurement light applied to the measurement member in a state in which the third measurement apparatus measures the position of the TCP; and the position of the TCP measured by the third measurement apparatus (see "(4-3) Position Transformation"). From this, the following aspect is derived. The arithmetic apparatus 11, which may be referred to as the arithmetic unit, may transform the position of the measurement member measured by the measurement apparatus 21 using the measurement light applied to the measurement member in a state in which the third measurement apparatus does not measure the position of the TCP, to the position of the TCP, on the basis of the position of the measurement member measured by the measurement apparatus 21, which may be referred to as the first measurement apparatus, using the measurement light applied to the measurement member in a state where the third measurement TCP measures the position of the TCP, and the position of the TCP measured by the third measurement apparatus.

For example, as illustrated in FIG. 14 and FIG. 16, in a case where a jig for measuring the position of the TCP of the end effector EE1 (e.g., see the jig 91a and the jig 92a) is movable and the reflector is attached to the jig, it can be said that the positional relation between the reflector attached to the jig and the reflectors r21, r22, and r23 attached to the robot arm 410 (in other words, the measurement member) is the predetermined relation when the position of the TCP is measured. Then, when the position of the TCP is not measured, i.e., when the position and the posture of the robot arm 410 are different from the reference position and the reference posture, it can be said that the above positional relation is different from the above predetermined relation.

From this, the following aspect is derived for the above (i) and (iii). The arithmetic apparatus 11, which may be referred to as the arithmetic unit, may transform the position of the measurement member measured by the measurement apparatus 21, which may be referred to as the first measurement apparatus, using the measurement light applied to the measurement member when the positional relation between the measurement member and the second reference member is a relation that is different from the predetermined positional relation, to the position of the TCP, on the basis of the position transformation matrix. In the above, the reflector attached to the jig is rephrased as the second reference member.

Furthermore, "the position transformation matrix", may be calculated on the basis of: the position of the TCP measured by the measurement apparatus 21 using the measurement light applied to the second reference member when the positional relation between the position and of the measurement member and the position of the second reference member is the predetermined relation; and the position of the measurement member measured by the measurement apparatus 21 using the measurement light applied to the measurement member, (see "(4-3) Position Transformation"). From this, the following aspect is derived. The arithmetic apparatus 11, which may be referred to as the arithmetic unit, may transform the position of the measurement member measured by the measurement apparatus 21 using the measurement light applied to the measurement member when the positional relation between the measurement member and the second reference member is a relation that is different from the predetermined positional relation, on the basis of: the position of the measurement member measured by the measurement apparatus 21, which may be referred to as the first measurement apparatus, using the measurement light applied to the measurement member when the positional relation between the position and of the measurement member and the position of the second reference member is the predetermined relation; and the position of the TCP measured by the measurement apparatus 21 using the measurement light applied to the second reference member.

### (6) In Case Where There are a Plurality of Robots Capable of Processing Workpiece W

The workpiece W, which may be referred to as the processing target, may be processed by a plurality of robots. For example, a system 1a illustrated in FIG. 20 and FIG. 21 includes the measurement control apparatus 10, the measurement apparatus 21, the processing control apparatus 30, and robots 41, 42, and 43. In the system 1a, the processing control apparatus 30 controls the robots 41, 42 and 43.

To the robot arm 410 of the robot 41, the reflector module r2 including the reflectors r21, r22, and r23 illustrated in FIG. 5 is attached. FIG. 20, however, omits the illustration of the reflector module r2. Similarly, a reflector module including three reflectors is attached to a robot arm 420 of the robot 42. A reflector module including three reflectors is attached to a robot arm 430 of the robot 43.

The measurement apparatus 21 is configured to apply the measurement light to each of the reflectors r21, r22, and r23 included in the reflector module r2 attached to the robot arm 410. The measurement apparatus 21 measures the position of each of the reflectors r21, r22, and r23 in the first measurement coordinate system, based on the measurement light applied to each of the reflectors r21, r22, and r23. The arithmetic apparatus 11 of the measurement control apparatus 10 transforms the position of each of the reflectors r21, r22, and r23 in the first measurement coordinate system, to the position of each of the reflectors r21, r22, and r23 in the robot coordinate system, by using the coordinate transformation matrix.

The measurement apparatus 21 is configured to apply the measurement light to each of the three reflectors included in the reflector module attached to the robot arm 420. The measurement apparatus 21 measures the position of each of the three reflectors in the first measurement coordinate system, based on the measurement light applied to each of the three reflectors. The arithmetic apparatus 11 transforms the position of each of the three reflectors attached to the robot arm 420 in the first measurement coordinate system, to the position of each of the three reflectors in the robot coordinate system, by using the coordinate transformation matrix.

The measurement apparatus 21 is configured to apply the measurement light to each of the three reflectors included in the reflector module attached to the robot arm 430. The measurement apparatus 21 measures the position of each of the three reflectors in the first measurement coordinate system, based on the measurement light applied to each of the three reflectors. The arithmetic apparatus 11 transforms the position of each of the three reflectors attached to the robot arm 430 in the first measurement coordinate system, to the position of each of the three reflectors in the robot coordinate system, by using the coordinate transformation matrix.

When the reflector attached to each of the robot arms 410, 420, and 430 is rephrased as the measurement member, the arithmetic apparatus 11, which may be referred to as the arithmetic unit, is configured to calculate the position in the robot coordinate system of each of the respective measurement members attached to each of the robots 41, 42, and 43 capable of processing the workpiece W. In addition, the arithmetic apparatus 11 may calculate the position of the TCP of each of the robots 41, 42, and 43, based on the position transformation matrix, for example. The arithmetic apparatus 11 may calculate, as the coordinate transformation matrix, the second coordinate transformation matrix for transforming the position of the measurement member in the first measurement coordinate system measured by the measurement apparatus 21 using the measurement light applied to the measurement member, to the position of the measurement member in the robot coordinate system, on the basis of the first reference position information and the second reference position information (see "(2-2) Coordinate Transformation"). The second coordinate transformation matrix may be shared to calculate the position in the robot coordinate system of each of the plurality of measurement members attached to each of the robots 41, 42, and 43.

### (7) Method of Identifying Position of Light Emitting Body from Image

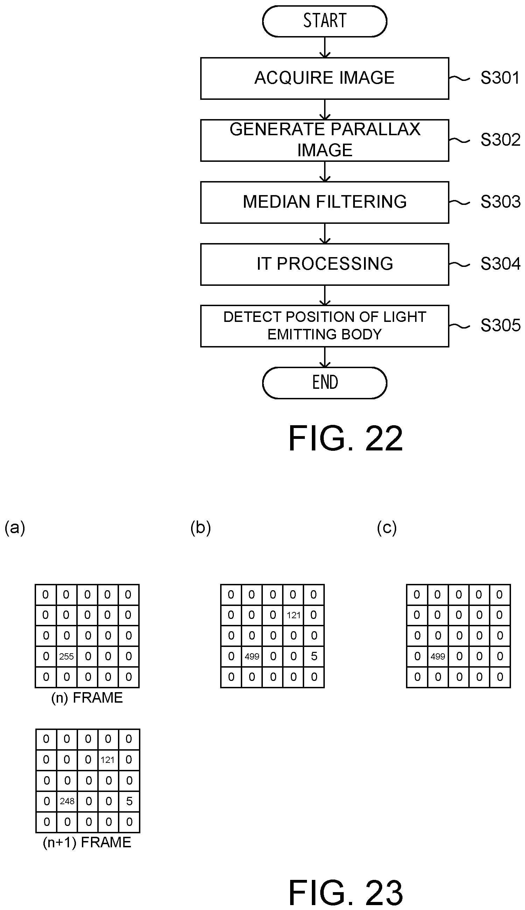

With reference to FIG. 22 and FIG. 23, a description will be given to a specific example of the method of identifying the position of the light emitting body such as, for example, the light emitting body 81, by using the stereo camera 22 described in "(3-1) Method Using Stereo Camera".

The image captured by the stereo camera 22 often includes a noise. When the noise is included in the image, the noise may cause misrecognition of the position of the light emitting body. Therefore, for example, by performing processing illustrated by a flowchart in FIG. 22 and removing the noise, it is possible to reduce or prevent the misrecognition. The processing described below is an example, and is not limited thereto.

In FIG. 22, the arithmetic apparatus 11 of the measurement control apparatus 10 acquires the image captured by the stereo camera 22 (i.e., an image captured by each of two cameras included in the stereo camera 22) (step S301). The arithmetic apparatus 11 generates a parallax image based on the image acquired in the step S301 (step S302). Since various existing aspects can be applied to a method of generating the parallax image, a detailed description of the method will be omitted.

The arithmetic apparatus 11 performs median filtering on the parallax image generated in the step S302 (step S303). The arithmetic apparatus 11 performs integration threshold (IT) processing on the image subjected to the median filter processing (step S304).

The integration threshold processing is processing of integrating or averaging values (e.g., luminance values) of pixels in the parallax image in a time direction and excluding the value of a pixel that is less than or equal to a predetermined value (e.g., setting it to 0). "Integrating or averaging the values of the pixels in the time direction" means integrating or averaging the values of the pixels over a plurality of parallax images continuous in time. The predetermined value may be referred to as a threshold.

The pixel with the value that relatively increases due to the noise is random (i.e., varies for each image). When the values of the pixels are integrated or averaged in the time direction, the value of the pixel corresponding to the noise becomes relatively small. Therefore, it is possible to remove the noise by excluding the value of the pixel that is less than or equal to the predetermined value.

The integration threshold processing will be described with reference to FIG. 23. Here, the description will be given by using a 5×5-pixel frame image. For example, a numerical value such as "0" and "255", indicates the luminance value of the pixel.

In the integration threshold processing, a new image is generated by adding (integrating) the luminance values of pixels that constitute an (n) frame, which is an n-th image, and the luminance values of pixels that constitute an (n+1) frame, which is (n+1)-th image following the (n) frame (see FIG. 23(b)). In the case of averaging, the luminance values of the pixel that constitute the (n) frame and the luminance values of the pixels that constitute the (n+1) frame are averaged.

Then, the threshold is obtained by multiplying the maximum luminance value (in this case, "499") by a predetermined ratio (e.g., 50%) in the generated new image. Then, in the generated new image, the luminance value of the pixel in which the luminance value is less than or equal to the threshold, is set to "0" (see FIG. 23(c)).

A new image may be generated by adding (integrating) the luminance values of pixels that constitute an image in FIG. 23(c) and the luminance values of pixels that constitute an (n+2) frame, which is an (n+2)-th image following the (n+1) frame. That is, the integration threshold processing may be performed by using a plurality of images continuous in time.

Returning to FIG. 22, the arithmetic apparatus 11 detects the position of the light emitting body from the parallax image subjected to the integration threshold processing in the step S304 (step S305).

Instead of performing the processing regarding noise elimination such as, for example, the median filtering and the integration threshold processing, on the parallax image, the arithmetic apparatus 11 may perform the processing regarding noise elimination on the image acquired in the step S301 (i.e., the image captured by the stereo camera 22).

Instead of or in addition to the above method, the following method may be used. Here, one of the two cameras included in the stereo camera 22, may be provided with a band-pass filter. The band-pass filter may be configured such that the transmittance of a wavelength band of light emitted from the light emitting body 81 (see FIG. 8) such as, for example, a LED, is relatively high and that the transmittance of the other wavelength band is relatively low. In the image captured by one of the two cameras included in the stereo camera 22, the luminance value of a part where the light emitting body 81 is captured, is relatively high, while the luminance value of the other part is relatively low. Therefore, by referring to the image captured by the one camera, it is possible to relatively easily estimate the position of the light emitting body 81. Thereafter, based on the position of the light emitting body 81 estimated from the image captured by the one camera, an approximate position of the light emitting body 81 in the image captured by the other of the two cameras included in the stereoscopic camera 22 may be identified. Then, based on the identified approximate position, a characteristic part of the light emitting body 81 is searched for from the image captured by the other camera, for example, by which the position of the light emitting body 81 may be identified. According to this method, for example, it is possible to reduce the time required for searching for the characteristic part of the light emitting body 81 and to reduce or prevent the misrecognition.

### (8) Measurement in Operation of Robot 41

From the viewpoint of improving the processing accuracy of the workpiece W by the robot 41, it is desirable that the position of each of the reflectors r21, r22, and r23 included in the reflector module r2 attached the robot arm 410 is measured by the measurement apparatus 21 in operation of the robot 41.

On the other hand, in a case where the robot arm 410 moves, for example, a first time point at which the position of the reflector r21 is measured, is different from a second time point at which the position of the reflector r22 is measured, and consequently, the position and posture of the robot arm 410 at the first time point may be different from the position and posture of the robot arm 410 at the second time point.

Thus, the movement of the robot arm 410 may be temporarily stopped to measure the position of each of the reflectors r21, r22, and r23. From the viewpoint of operational efficiency of the robot 41, however, it is desirable to make a time as short as possible to stop the movement of the robot arm 410 to measure the position of each of the reflectors r21, r22, and r23. In a case where a scanning velocity of the measurement light is sufficiently large compared to a moving velocity of the robot arm 410, a measurement error may be ignored. In this instance, the movement of the robot arm 410 may not be temporarily stopped to measure the position of each of the reflectors r21, r22, and r23. In measuring the position of each of the reflectors r21, r22, and r23, the moving velocity of the robot arm 410 may be reduced.

The robot 41 is controlled by the processing control apparatus 30. Therefore, in operation of the robot 41, the measurement control apparatus 10 controls the measurement of the reflectors r21, r22, and r23 by the measurement apparatus 21, in accordance with a signal outputted from the processing control apparatus 30.

The arithmetic apparatus 31 of the processing control apparatus 30 may determine the position and posture of the TCP when the reflectors r21, r22, and r23 included in the reflector module r2 attached to the robot arm 410 are measured, for example. Thereafter, the arithmetic apparatus 31 generates a measurement start signal for causing the measurement apparatus 21 to start the measurement. The communication apparatus 33 may transmit the measurement start signal to the measurement control apparatus 10. Here, the measurement start signal may include information for the measurement control apparatus 10 controlling the measurement apparatus 21.

(i) For example, the measurement start signal may include the position information indicating the position and posture of the TCP when the reflectors r21, r22, and r23 are measured (hereinafter referred to as "a position of the TCP at the time of measurement" as appropriate). Specifically, it may include the position information indicating the position of the TCP at the time of measurement in the robot coordinate system determined by the arithmetic apparatus 31 of the processing control apparatus 30.

In this case, for example, the arithmetic apparatus 11 of the measurement control apparatus 10 may transform the position of the TCP at the time of measurement in the robot coordinate system indicated by the position information included in the measurement start signal, to the position of the TCP at the time of measurement in the first measurement coordinate system, by using the coordinate transformation matrix. The arithmetic apparatus 11 may further transform the position of the TCP at the time of measurement in the first measurement coordinate system to the position of each of the reflectors r21, r22, and r23 in the first measurement coordinate system, by using the position transformation matrix.

Alternatively, the arithmetic apparatus 11 may transform the position of the TCP at the time of measurement in the robot coordinate system to the position of each of the reflectors r21, r22, and r23 in the robot coordinate system, by using the position transformation matrix. The arithmetic apparatus 11 may further transform the position of each of the reflectors r21, r22, and r23 in the robot coordinate system to the position of each of the reflectors r21, r22, and r23 in the first measurement coordinate system, by using the coordinate transformation matrix.

The measurement control apparatus 10 may control the measurement of the reflectors r21, r22, and r23 by the measurement apparatus 21, based on the position of each of the reflectors r21, r22, and r23 in the first measurement coordinate system.

(ii) For example, the measurement start signal may include the position information indicating the position of each of the reflectors r21, r22, and r23 in the robot coordinate system. In this instance, the arithmetic apparatus 31 of the processing control apparatus 30 may determine the position of the TCP at the time of measurement in the robot coordinate system. The arithmetic apparatus 31 may transform the position of the TCP at the time of measurement in the robot coordinate system to the position of each of the reflectors r21, r22, and r23 in the robot coordinate system, by using the position transformation matrix. The communication apparatus 33 may transmit, to the measurement control apparatus 10, the measurement start signal including the position information indicating the position of each of the reflectors r21, r22, and r23 in the robot coordinate system.

The arithmetic apparatus 11 of the measurement control apparatus 10 may transform the position of each of the reflectors r21, r22, and r23 in the robot coordinate system indicated by the position information included in the measurement start signal, to the position of each of the reflectors r21, r22, and r23 in the first measurement coordinate system, by using the coordinate transformation matrix. The measurement control apparatus 10 may control the measurement of the reflectors r21, r22, and r23 by the measurement apparatus 21, based on the position of each of the reflectors r21, r22, and r23 in the first measurement coordinate system.

(iii) For example, the measurement start signal may include a position signal indicating the position of the TCP at the time of measurement in the first measurement coordinate system. In this instance, the arithmetic apparatus 31 of the processing control apparatus 30 may determine the position of the TCP at the time of measurement in the robot coordinate system. The arithmetic apparatus 31 may transform the position of the TCP at the time of measurement in the robot coordinate system to the position of the TCP at the time of measurement in the first measurement coordinate system, by using the coordinate transformation matrix. The communication apparatus 33 may transmit, to the measurement control apparatus 10, the measurement start signal including the position information indicating the position of the TCP at the time of measurement in the first measurement coordinate system.

The arithmetic apparatus 11 of the measurement control apparatus 10 may transform the position of the TCP at the time of measurement in the first measurement coordinate system indicated by the position information included in the measurement start signal, to the position of each of the reflectors r21, r22, and r23 in the first measurement coordinate system, by using the position transformation matrix. The measurement control apparatus 10 may control the measurement of the reflectors r21, r22, and r23 by the measurement apparatus 21, based on the position of each of the reflectors r21, r22, and r23 in the first measurement coordinate system.

(iv) For example, the measurement start signal may include the position information indicating the position of each of the reflectors r21, r22, and r23 in the first measurement coordinate system. In this instance, the arithmetic apparatus 31 of the processing control apparatus 30 may determine the position of the TCP at the time of measurement in the robot coordinate system. The arithmetic apparatus 31 may transform the position of the TCP at the time of measurement in the robot coordinate system to the position of the TCP at the time of measurement in the first measurement coordinate system, by using the coordinate transformation matrix. The arithmetic apparatus 31 may further transform the position of the TCP at the time of measurement in the first measurement coordinate system to the position of each of the reflectors r21, r22, and r23 in the first measurement coordinate system, by using the position transformation matrix.

Alternatively, the arithmetic apparatus 31 may transform the position of the TCP at the time of measurement in the robot coordinate system to the position of each of the reflectors r21, r22, and r23 in the robot coordinate system, by using the position transformation matrix. The arithmetic apparatus 31 may further transform the position of each of the reflectors r21, r22, and r23 in the robot coordinate system to the position of each of the reflectors r21, r22, and r23 in the first measurement coordinate system, by using the coordinate transformation.

The communication apparatus 33 may transmit, to the measurement control apparatus 10, the measurement start signal including the position information indicating the position of each of the reflectors r21, r22, and r23 in the first measurement coordinate system. The measurement control apparatus 10 may control the measurement of the reflectors r21, r22, and r23 by the measurement apparatus 21, based on the position of each of the reflectors r21, r22, and r23 in the first measurement coordinate system indicated by the position information included in the measurement start signal.

The measurement start signal may include a first measurement start signal including the position information and a second measurement start signal instructing the measurement control apparatus 10 to perform measurement. In this instance, the communication apparatus 33 of the processing control apparatus 30 may first transmit the first measurement start signal to the measurement control apparatus 10. At this time, the processing control apparatus 30 may control the robot 41 such that the robot arm 410 moves to the predetermined position indicated by the position information included in the first measurement start signal. The communication apparatus 33 of the processing control apparatus 30 that receives from the robot 41 a signal indicating the completion of the movement of the robot arm 410 to the predetermined position, may transmit the second measurement start signal to the measurement control apparatus 10. Consequently, the measurement of the position of each of the reflectors r21, r22, and r23 may be started.

In this instance, the measurement control apparatus 10 may estimate the position of each of the reflectors r21, r22, and r23 at the time of measurement, based on the position information included in the first measurement start signal. Then, the measurement control apparatus 10 may change in advance an emission direction of the measurement light of the measurement apparatus 21 such that the estimated position is irradiated with the measurement light. Alternatively, the measurement control apparatus 10 may change in advance the emission direction of the measurement light of the measurement apparatus 21 such that the measurement light is applied at the position indicated by the position information included in the first measurement start signal. Thereafter, the measurement control apparatus 10 may be in a standby state until it receives the second measurement start signal. At this time, the measurement apparatus 21 waits in a state of being capable of measuring the position of each of the reflectors r21, r22, and r23. When the measurement control apparatus 10 receives the second measurement start signal, the measurement control apparatus 10 may start to measure the position of each of the reflectors r21, r22, and r23.

As described above, the communication apparatus 33 of the processing control apparatus 30 may transmit the measurement start signal to the measurement control apparatus 10. In other words, the communication apparatus 13 of the measurement control apparatus 10 may receive the measurement start signal from the processing control apparatus 30. That is, the processing control apparatus 30 may include the communication apparatus 33 that may be referred to as the transmission unit that transmits, to the measurement control apparatus 10, the measurement start signal for causing the measurement apparatus 21, which may be referred to as the first measurement apparatus, to start the measurement. The measurement control apparatus 10 may include the communication apparatus 13 that may be referred to as a receiving unit that receives, from the processing control apparatus 30, the measurement start signal for causing the measurement apparatus 21, which may be referred to as the first measurement apparatus, to start the measurement.

In the above cases (i) to (iii), transforming the position indicated by the position information included in the measurement start signal, to the position of each of the reflectors r21, r22, and r23 in the first measurement coordinate system, by the arithmetic apparatus 11 of the measurement control apparatus 10, may be referred to as estimating the position of each of the reflectors r21, r22, and r23. Therefore, the arithmetic apparatus 11 may be referred to as an estimation unit.

As described above, the measurement control apparatus 10 may control the measurement of the reflectors r21, r22, and r23 by the measurement apparatus 21, based on the position of each of the reflectors r21, r22, and r23 in the first measurement coordinate system indicated by the position information included in the measurement start signal. Here, "control(ling) the measurement of the reflectors r21, r22, and r23 by the measurement apparatus 21" may include changing a direction of the measurement light (i.e., the emission direction). The measurement control apparatus 10 may change the direction of the measurement light such that the measurement light emitted from the measurement apparatus 21 is applied to the position of each of the reflectors r21, r22, and r23 estimated by the arithmetic apparatus 11, which may be referred to as the estimation unit. Here, the measurement apparatus 21 may include a not-illustrated tracking apparatus that is configured to track the position of each of the reflectors r21, r22, and r23 that move according to the operation of the robot 41. In this instance, the measurement control apparatus 10 may change the direction of the measurement light by transmitting, to the tracking apparatus, a signal indicating the position of each of the reflectors r21, r22, and r23 in the first measurement coordinate system.

The arithmetic apparatus 31 of the processing control apparatus 30 may determine timing in which the measurement apparatus 21 starts to measure each of the reflectors r21, r22, and r23. The arithmetic apparatus 31 may generate timing information (in other words, a timing signal) indicating the determined timing. The communication apparatus 33 of the processing control apparatus 30 may transmit the timing information to the measurement control apparatus 10, in addition to or instead of the measurement start signal. In other words, the communication apparatus 13 of the measurement control apparatus 10 may receive the timing information. That is, the processing control apparatus 30 may include the communication apparatus 33 that may be referred to as the transmission unit that transmits, to the measurement control apparatus 10, the timing information indicating the timing in which the measurement apparatus 21, which may be referred to as the first measurement apparatus, starts to measure the position of the measurement member. The communication apparatus 13, which may be referred to as the receiving unit, may receive the timing information indicating the timing of starting the measurement. The timing signal may correspond to "the second measurement start signal" described above.

The measurement start signal may not include the position information. In this instance, the communication apparatus 33 of the processing control apparatus 30 may transmit the position information to the measurement control apparatus 30, apart from the measurement start signal. As described above, the position information may indicate: (i) the position of the TCP at the time of measurement in the robot coordinate system; (ii) the position of each of the reflectors r21, r22, and r23 in the robot coordinate system; (iii) the position of the TCP at the time of measurement in the first measurement coordinate system; or (iv) the position of each of the reflectors r21, r22, and r23 in the first measurement coordinate system. It can be said that the position indicated by the position information is a position at which the measurement apparatus 21 should start to measure the reflectors r21, r22 and 23. When the reflectors r21, r22, and r23 are rephrased as the measurement member, it can be said that the processing control apparatus 30 may include the communication apparatus 33 that may be referred to as the transmission unit that transmits, to the measurement control apparatus 10, first start position information indicating a first measurement start position that is a position at which the measurement apparatus 21, which may be referred to as the first measurement apparatus, should start to measure the measurement member. The processing control apparatus 30 may transmit the first start position information and the measurement start signal to the measurement control apparatus 10. The processing control apparatus 30 may transmit the first start position information and the timing information to the measurement control apparatus 10. Alternatively, the processing control apparatus 30 may transmit the first start position information, the measurement start signal, and the timing information, to the measurement control apparatus 10.

When the measurement control apparatus 10 receives the first start position information, the measurement control apparatus 10 may change the emission direction of the measurement light such that the measurement light is applied toward the first measurement start position indicated by the first start position information. In a case where the measurement control apparatus 10 receives the measurement start signal in addition to the first start position information, the measurement control apparatus 10 may change the emission direction of the measurement light such that the measurement light is applied toward the first measurement start position, after receiving the measurement start signal and before the position of the measurement member moving with the movement of the robot 41 is located at the first measurement start position indicated by the first start position information. Alternatively, in a case where the measurement control apparatus 10 receives the timing information in addition to the first start position information, the measurement control apparatus 10 may change the emission direction of the measurement light such that the measurement light is applied toward the first measurement start position, after receiving the timing information and before the position of the measurement member moving with the movement of the robot 41 is located at the first measurement start position indicated by the first start position information.

### (8-1) Example of Changing Emission Direction of Measurement Light

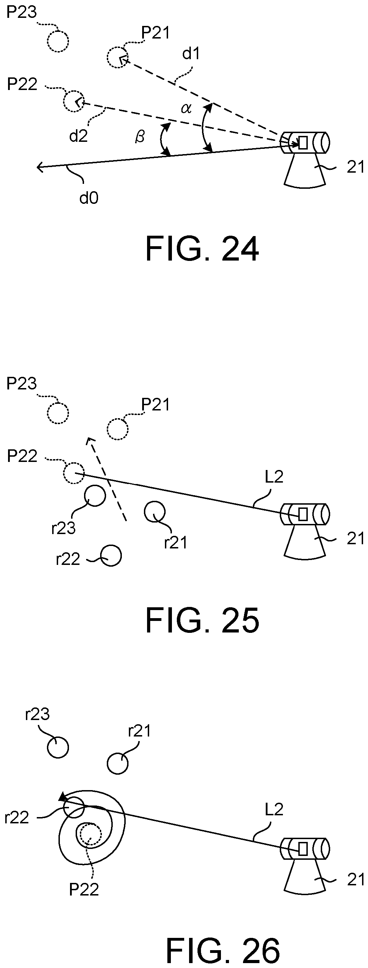

With reference to FIG. 24, a description will be given to a specific example of a method of changing the emission direction of the measurement light. For example, in a case where the angle of a mirror that reflects the measurement light is changed in the measurement apparatus 21 to change the emission direction of the measurement light, the measurement control apparatus 10 controls a motor that changes the angle of the mirror included in the measurement apparatus 21, by which the emission direction is changed.

In this case, for example, due to a mechanical response delay of the motor, it takes a certain amount of time from when the measurement control apparatus 30 starts to control the motor to when the emission direction of the measurement light becomes a desired emission direction.

In FIG. 24, a dotted circle indicates the position of each of the reflectors r21, r22, and r23 (i.e., a position at which each of the reflectors r21, r22, and r23 is measured). "P21" indicates the position of the reflector r21, "P22" indicates the position of the reflector r22, and "P23" indicates the position of the reflector r23. The positions P21, P22 and P23 may respectively correspond to the positions of the reflectors r21, r22, and r23 in the first measurement coordinate system indicated by the position information included in the measurement start signal, for example.

A solid arrow extending from the measurement apparatus 21 indicates a present emission direction d0 of the measurement light. For example, in a case where the measurement apparatus 21 firstly measures the reflector r21 illustrated in FIG. 24, a difference α between the present emission direction d0 and a target emission direction d1 of the measurement light is relatively large. In this instance, it takes a relatively long time from when the measurement control apparatus 10 starts to control the measurement apparatus 21 to when the measurement of the reflector r21 is actually started.

In contrast, for example, in a case where the measurement apparatus 21 firstly measures the reflector r22 illustrated in FIG. 24, a difference β between the present emission direction d0 and a target emission direction d2 of the measurement light is relatively small. In this instance, it takes a relatively short time from when the measurement control apparatus 30 starts to control the measurement apparatus 21 to when the measurement of the reflector r22 is actually started.

The measurement control apparatus 10 may determine the order of measurement of the reflectors r21, r22, and r23 so as to suppress or reduce an amount of change in the emission direction of the measurement light, on the basis of: the position of each of the reflectors r21, r22, and r23 in the first measurement coordinate system based on the position information included in the measurement start signal; and the present emission direction d0 of the measurement light of the measurement apparatus 21, for example. In this way, it is possible to reduce the time required for the measurement apparatus 21 to measure the reflectors r21, r22, and r23. In the case illustrated in FIG. 24, the measurement control apparatus 10 may determine the order of measurement such that the reflector r22 is firstly measured, the reflector r23 is then measured, and the reflector r21 is lastly measured.

"The position of each of the reflectors r21, r22, and r23 in the first measurement coordinate system based on the position information included in the measurement start signal" is not limited to "the position of each of the reflectors r21, r22, and r23 in the first measurement coordinate system indicated by the position information", but is also a concept including "the position of each of the reflectors r21, r22, and r23 in the first measurement coordinate system in which the position indicated by the position information is transformed by the arithmetic apparatus 11 of the measurement control apparatus 10 using at least one of the coordinate transformation matrix and the position transformation matrix".

### (8-2) Method of Measuring Reflector

### (8-2-1) Measurement Timing

From the viewpoint of reducing the time required to measure the reflectors r21, r22, and r23, it is desirable that the emission direction is changed in advance such that an emission direction of measurement light L2 of the measurement apparatus 21 is a direction of the position of the reflector r21, r22 or r23. For example, the measurement control apparatus 10 may change the emission direction of the measurement light L2 such that the measurement light L2 is applied toward the positions where the reflectors r21, r22, and r23 are measured by the measurement apparatus 21, after receiving the measurement start signal and before the reflectors r21, r22, and r23 are located at the positions where the reflectors r21, r22, and r23 are measured by the measurement apparatus 21 (e.g., see the positions P21, P22 and P23 in FIG. 24). Furthermore, the measurement control apparatus 10 may change the emission direction of the measurement light L2 such that the measurement light L2 is applied from the measurement apparatus 21 toward the positions where the reflectors r21, r22, and r23 are measured by the measurement apparatus 21, after receiving the timing information and before the reflectors r21, r22, and r23 are located at the positions where the reflectors r21, r22, and r23 are measured by the measurement apparatus 21. The positions where the reflectors r21, r22, and r23 are measured by the measurement apparatus 21, may be referred to as a target position.

On the other hand, in a case where the measurement light L2 is emitted toward the position is emitted toward the position at which the reflector r21, r22 or r23 is measured by the measurement apparatus 21 before the reflectors r21, r22, and r23 are located at the positions where the reflectors r21, r22, and r23 are measured by the measurement apparatus 21, the measurement light L2 may be applied to a reflector that is different from the reflector to be measured.

For example, it is assumed that the reflector module r2 attached to robot arm 410 moves along a trajectory illustrated by a dashed arrow in FIG. 25. The emission direction of the measurement light L2 of the measurement apparatus 21 is assumed to be a direction of the position P22 where the reflector r22 is measured. In this instance, before the reflector r22 is located at the position P22, the reflector r23 passes near the position P22. In a case where the measurement light L2 is emitted from the measurement apparatus 21 before the reflector r22 is located at the position P22, the measurement light L2 may be applied to the reflector r23. Then, a measurement result based on the measurement light L2 applied to the reflector r23 may be outputted from the measurement apparatus 21 as a measurement result according to the reflector r22. That is, the misrecognition of the reflector may occur.

To reduce or prevent the occurrence of such misrecognition, the measurement start signal may include, for example, information indicating a standby time. The standby time may be, for example, a time from when the measurement control apparatus 10 receives the measurement start signal, to when the measurement apparatus 21 starts to emit the measurement light L2. The standby time may be set based on a time required to control the robot arm 410, in order to realize the position and posture of the TCP at the time of measurement of the reflectors r21, r22, and r23 determined by the arithmetic apparatus 31 of the acceleration control apparatus 30, for example.

In a case where the processing control apparatus 30 transmits the timing information to the measurement control apparatus 10 in addition to the measurement start signal, the measurement start signal may not include the information indicating the standby time, for example. In this instance, the timing information may indicate a time point at which the measurement apparatus 21 should start the measurement. The time point indicated by the timing information may be set, for example, based on a time point at which the position and posture of the TCP determined by the arithmetic apparatus 31 (i.e., the position and posture of the TCP when the reflectors r21, r22, and r23 are measured) are realized by controlling the robot arm 410. Alternatively, the timing information may indicate the standby time, as the timing in which the measurement apparatus 21 starts the measurement.

In this way, it is possible to prevent that the measurement light L2 is emitted from the measurement apparatus 21 before the reflector to be measured by the measurement apparatus 21 is located at the position at which the reflector is measured. As a result, it is possible to reduce or prevent the occurrence of the misrecognition of the reflector. While the measurement light L2 is emitted from the measurement apparatus 21, a light receiving sensor of the measurement apparatus 21 may be kept off until the timing in which the measurement apparatus 21 should start the measurement, or a measurement value may not be calculate based on an output from the light receiving sensor. Even in this case, it is possible to reduce or prevent the occurrence of the misrecognition of the reflector.

### (8-2-2) Irradiation Method of Applying Measurement Light

In a case where the reflectors r21, r22, and r23 are measured by the measurement apparatus 21, the position of each of the reflectors r21, r22, and r23 in the first measurement coordinate system (e.g., see the positions P21, P22, and P23 in FIG. 24) is calculated (estimated), based on the position and posture of the TCP at the time of measurement of the reflectors r21, r22, and r23 (i.e., the position of the TCP at the time of measurement) determined by the arithmetic apparatus 31 of the processing control apparatus 30. This "position of each of the reflectors r21, r22, and r23 in the first measurement coordinate system" will be hereinafter referred to as "an estimated measurement position of each of the reflectors r21, r22, and r23" as appropriate.

The estimated measurement position of each of the reflectors r21, r22, and r23 may be different from an actual position of each of the reflectors r21, r22, and r23 at the time of measurement. In this case, even if the measurement apparatus 21 emits the measurement light L2 toward the position of the reflector serving as the measurement target, out of the estimated measurement positions of the reflectors r21, r22, and r23, the reflector serving as the measurement target is not irradiated with the measurement light L2. In other words, it is not possible to measure the position of the reflector serving as the measurement target.

Therefore, the measurement apparatus 21 may emit the measurement light L2 such that the trajectory of the measurement light L2 is a spiral trajectory centered on the position of the reflector serving as the measurement target, out of the estimated measurement positions of the reflectors r21, r22, and r23, for example. For example, when the reflector r22 is the reflector serving as the measurement target, as illustrated in FIG. 26, the measurement apparatus 21 may emit the measurement light L2 such that the trajectory of the measurement light L2 is a spiral trajectory centered on the position P22 that is the estimated measurement position of the reflector r22. The trajectory of the measurement light L2 is not limited to the spiral trajectory, and may be a trajectory such as, for example, a raster scan.

In this way, even when the estimated measurement position of each of the reflectors r21, r22, and r23 is different from the actual position of each of the reflectors r21, r22, and r23 at the time of measurement, the measurement apparatus 21 is capable of applying the measurement light L2 to the reflector serving as the measurement target. That is, the measurement apparatus 21 is capable of measuring the position of the reflector serving as the measurement target.

### (8-2-3) Correction of Estimated Position

As described above, the estimated measurement position of each of the reflectors r21, r22, and r23 may be different from the actual position of each of the reflectors r21, r22, and r23 at the time of measurement

Let us assume, for example, that the measurement apparatus 21 firstly measures the position of the reflector r22, then measures the position of the reflector r23, and finally measures the position of the reflector r21. In this case, the arithmetic apparatus 11 of the measurement control apparatus 10 may compare the estimated measurement position of the reflector r22 with the actual position of the reflector r22 measured by the measurement apparatus 21, after the measurement of the position of the reflector r22 is performed by the measurement apparatus 21, and before the measurement of the position of the reflector r23 is performed by the measurement apparatus 21. The arithmetic apparatus 11 may correct the estimated measurement position of each of the reflectors r23 and r21, based on a comparison result. That is, on the basis of the estimated position of one reflector serving as the measurement target and the position of one reflector serving as the measurement target measured by the measurement apparatus 21 based on the measurement light L2 applied to the one reflector serving the measurement target, the arithmetic apparatus 11, which may be referred to as the estimation unit, may correct the position of another reflector serving as the measurement target.

When the position of each of the reflector r23 and r21 is measured, if the measurement control apparatus 10 controls the emission direction of the measurement light L2 of the measurement apparatus 21, based on the corrected measurement position of each of the reflectors r23 and r21, then, it is possible to reduce the time required to measure the position of each of the reflectors r23 and r21.

### (8-2-4) Stationary State Determination

Even when the processing control apparatus 30 completes the control of the robot 41 such that the position and posture of the TCP are the position and posture when the reflectors r21, r22, and r23 are measured, the robot arm 410 may vibrate due to a reaction when mechanisms that constitute the robot 41 are stopped, for example.

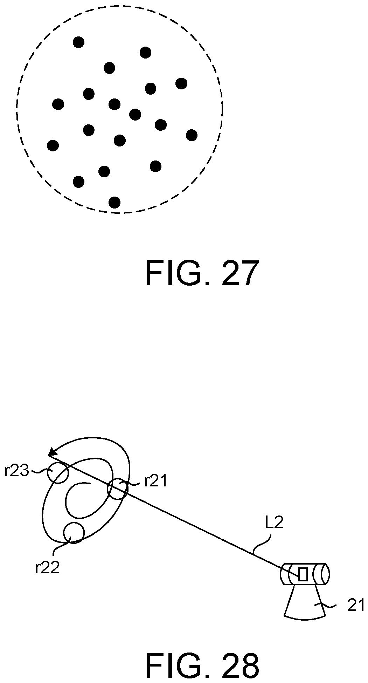

The measurement apparatus 21 may measure the position of one reflector serving the measurement target a plurality of times, out of the reflectors r21, r22, and r23. The arithmetic apparatus 11 of the measurement control apparatus 10 may determine that the robot arm 410 is stationary when a variation in a plurality of positions respectively indicated by a plurality of measurements for one reflector serving the measurement target in a predetermined time period (e.g., several hundred milliseconds to several seconds) is in a predetermined range (e.g., in a range of a dashed circle illustrated in FIG. 27). In this way, it is possible to reduce or prevent a reduction in accuracy of the position measured by the measurement apparatus 21 due to the vibration of the robot arm 410. The predetermined range may be set based on an allowable error of the position measurement by the measurement apparatus 21, in other words, measurement accuracy required for the position measurement by the measurement apparatus 21, for example.

### (8-2-5) Anther Method of Applying Measurement Light

The measurement control apparatus 10 may control the measurement apparatus 21 such that the trajectory of the measurement light L2 of the measurement apparatus 21 is a spiral trajectory in a range including the reflectors r21, r22, and r23, as illustrated in FIG. 28, based on the estimated measurement position of each of the reflectors r21, r22, and r23, for example.

### (8-2-6) Measurement Result

In operation of the robot 41, the position of each of the reflectors r21, r22, and r23 in the first measurement coordinate system measured by the measurement apparatus 21 may be transformed to position of each of the reflectors r21, r22, and r23 in the robot coordinate system by the arithmetic apparatus 11 of the measurement control apparatus 10, or may be transformed to position of each of the reflectors r21, r22, and r23 in the robot coordinate system by the arithmetic apparatus 11 of the processing control apparatus 30.

### (9) Others

(9-1) The end effector attached to the robot 41 may be an end effector for applications other than processing. The end effector for applications other than processing includes, for example, a pick-up hand (specifically, a suction hand, a gripping hand, etc.), a CMM (Coordinate Measuring Machine), and the like. The CMM may be for non-contact measurement such as, for example, a scanned laser probe type and an optical type. For example, in a case where the CMM is attached to the robot 41 as the end effector and the workpiece W (see FIG. 1) is measured by the CMM, the robot 41 may be referred to as the processing apparatus, and the workpiece W may be referred to as the processing target.

(9-2) The storage apparatus 12 of the measurement control apparatus 10 may store therein one or a plurality of programs for realizing the functions of the measurement control apparatus 10. The functions of the arithmetic apparatus 11 described above may be realized by the arithmetic apparatus 11 executing at least one of the one or plurality of programs stored in the storage apparatus 12.

The storage apparatus 32 of the processing control apparatus 30 may store therein one or a plurality of programs for realizing the functions of the processing control apparatus 30. The functions of the arithmetic apparatus 31 described above may be realized by the arithmetic apparatus 31 executing at least one of the one or plurality of programs stored in the storage apparatus 32.

(9-3) For example, when the measurement apparatus 21 measures the reflector r11 attached to the jig 90, the measurement result is outputted from the measurement apparatus 21 to the measurement control apparatus 10. Similarly, when the measurement apparatus 21 measures the reflectors r21, r22, and r23 attached to the robot arm 410 of the robot 41, the measurement result is outputted from the measurement apparatus 21 to the measurement control apparatus 10.

The following aspect is derived from these. The measurement method according to the measurement system 2 may include: the measurement apparatus 21 receiving the measurement light generated from the first reference member attached to the jig 90 for holding the processing target by the measurement light being applied to the first reference member, and outputting first member position information indicating the position of the first reference member; and the measurement apparatus 21 receiving the measurement light generated from the measurement member by the measurement light being applied to the measurement member attached to the robot arm 410 of the robot 41 capable of processing the processing target, and outputting second member position information indicating the position of the measurement member. In the above, the reflector r11 is rephrased as the first reference member, and the reflectors r21, r22, and r23 are rephrased as the measurement member. The first member position information (i.e., the position of the reflector r11) and the second member position information (i.e., the position of each of the reflectors r21, r22, and r23) may be used to control the movement of the robot arm 410 of the robot 41, as described above.

In addition, as described in "(3-1) Method of Using Stereo Camera," the measurement of the measurement apparatus 21 may be controlled, based on the measurement result by the stereo camera 22. Here, controlling the measurement of the measurement apparatus 21 may include controlling the direction of the measurement light (e.g., an irradiation direction). The following aspect is derived from these. The measurement method according to the measurement system 2 including the measurement apparatus 21 and the stereo camera 22, may include: the stereo camera 22, which may be referred to as the imaging apparatus, imaging the first reference member and the measurement member; the irradiation direction of the measurement light applied to the first reference member from the measurement apparatus 21 being controlled based on an output from the stereo camera 22; and the irradiation direction of the measurement light applied to the measurement member from the measurement apparatus 21 being controlled based on the output from the stereo camera 22.

(9-4) The positional relation between the TCP and the reflector such as, for example, the reflectors r21, r22 and r23 may not be obtained by calculation or arithmetic operation. In this instance, the positional relation between the TCP and the reflector may be inputted, for example, by the user of the system 1. That is, the positional relation between the TCP and the reflector may be remembered by the measurement system 2 and/or the system 1, which may be referred to as the processing system.

### <Supplementary Notes>

With respect to the example embodiment described above, the following Supplementary Notes are further disclosed.

### (Supplementary Note 1)

A processing method in a processing system including: a processing apparatus that is configured to process a processing target; a first measurement apparatus that is configured to apply measurement light to a measurement member attached to a movable part of the processing apparatus, and that is configured to measure a position of the measurement member; a measurement control apparatus that is configured to control the first measurement apparatus; and a processing control apparatus that is configured to control a movement of the movable part,
the processing method including:
the measurement control apparatus calculating position transformation information, based on first position information indicating the position of the measurement member measured by the first measurement apparatus using the measurement light applied to the measurement member in a first state in which a tool center point of the processing apparatus is located at a predetermined position, and based on second position information indicating the predetermined position;
the measurement control apparatus transmitting the calculated position transformation information to the processing control apparatus;
the measurement control apparatus transmitting, to the processing control apparatus, third position information indicating the position of the measurement member measured by the first measurement apparatus using the measurement light applied to the measurement member in a second state in which the tool center point is located at a position that is different from the predetermined position; and
the processing control apparatus transforming the position of the measurement member indicated by the third position information to the position of the tool center point, based on the position transformation information, and controlling the movement of the movable part, based on the transformed position of the tool center point, thereby moving the position of the tool center point.

### (Supplementary Note 2)

A processing method in a processing system including: a processing apparatus that is configured to process a processing target; a first measurement apparatus that is configured to apply measurement light to a measurement member attached to a movable part of the processing apparatus, and that is configured to measure a position of the measurement member; a measurement control apparatus that is configured to control the first measurement apparatus; and a processing control apparatus that is configured to control a movement of the movable part,
the processing method including:
the measurement control apparatus transforming the position of the measurement member measured by the first measurement apparatus using the measurement light applied to the measurement member, to a position of a tool center point of the processing apparatus, based on position transformation information;
the measurement control apparatus transmitting sixth position information indicating the position of the tool center point, to the processing control apparatus;
the measurement control apparatus calculating the position transformation information, based on the position of the measurement member measured by the first measurement apparatus using the measurement light applied to the measurement member in a first state in which the tool center point is located at a predetermined position; and
the processing control apparatus controlling the movement of the movable part, based on the position of the tool center point indicated by the sixth position information transmitted by the transmission unit, thereby moving the position of the tool center point.

### (Supplementary Note 3)

A processing method in a processing system including: a processing apparatus that is configured to process a processing target; a first measurement apparatus that is configured to apply measurement light to a measurement member attached to a movable part of the processing apparatus, and that is configured to measure a position of the measurement member, wherein the movable part is different from a position corresponding to a tool center point of the processing apparatus; a measurement control apparatus that is configured to control the first measurement apparatus; a processing control apparatus that is configured to control a movement of the movable part; and a third measurement apparatus that is configured to measure the position of the tool center point,
the processing method including:
the measurement control apparatus calculating position transformation information, based on the position of the measurement member measured by the first measurement apparatus using the measurement light applied to the measurement member in a state in which the third measurement apparatus measures the position of the tool center point, and based on the position of the tool center point measured by the third measurement apparatus;
the measurement control apparatus transmitting, to the processing control apparatus, the position transformation information and third position information indicating the position of the measurement member measured by the first measurement apparatus using the measurement light applied to the measurement member in a state in which the third measurement apparatus does not measure the position of the tool center point; and
the processing control apparatus transforming the position of the measurement member indicated by the third position information to the position of the tool center point, based on the position transformation information, and controlling the movement of the movable part, based on the transformed position of the tool center point, thereby moving the position of the tool center point.

### (Supplementary Note 4)

A processing method in a processing system including: a processing apparatus that is configured to process a processing target; a first measurement apparatus that is configured to apply measurement light to a measurement member attached to a movable part of the processing apparatus, and that is configured to measure a position of the measurement member, wherein the movable part is different from a position corresponding to a tool center point of the processing apparatus; a measurement control apparatus that is configured to control the first measurement apparatus; a processing control apparatus that is configured to control a movement of the movable part; and a third measurement apparatus that is configured to measure the position of the tool center point,
the processing method including:
the measurement control apparatus transforming the position of the measurement member measured by the first measurement apparatus using the measurement light applied to the measurement member in a state in which the third measurement apparatus does not measure the position of the tool center point, to the position of the tool center point, based on the position of the measurement member measured by the first measurement apparatus using the measurement light applied to the measurement member in a state in which the third measurement apparatus measures the position of the tool center point, and based on the position of the tool center point measured by the third measurement apparatus;
the measurement control apparatus transmitting sixth position information indicating the transformed position of the tool center point, to the processing control apparatus; and
the processing control apparatus controlling the movement of the movable part, based on the sixth position information, thereby moving the position of the tool center point.

### (Supplementary Note 5)

A processing method in a processing system including: a processing apparatus that is configured to process a processing target; a first measurement apparatus that is configured to apply measurement light to a second reference member moving according to a position of a movable part of the processing apparatus, thereby measuring a position of a tool center point of the processing apparatus moving according to a movement of the movable part, and that is configured to apply measurement light to a measurement member attached to the movable part that is different from the position corresponding to the tool center point, thereby measuring a position of the measurement member; a measurement control apparatus that is configured to control the first measurement apparatus; and a processing control apparatus that is configured to control the movement of the movable part,
the processing method including:
the measurement control apparatus calculating position transformation information, based on the position of the tool center point measured by the first measurement apparatus using the measurement light applied to the second reference member when a positional relation between the position of the measurement member and the position of the second reference member is a predetermined relation, and based on the position of the measurement member measured by the first measurement apparatus using the measurement light applied to the measurement member;
the measurement control apparatus transmitting, to the processing control apparatus, the position transformation information and third position information indicating the position of the measurement member measured by the first measurement apparatus using the measurement light applied to the measurement member when the positional relation is different from the predetermined relation; and
the processing control apparatus transforming the position of the measurement member indicated by the third position information to the position of the tool center point, based on the position transformation information, and moving the movable part, based on the transformed position of the tool center point, thereby moving the position of the tool center point.

### (Supplementary Note 6)

A processing method in a processing system including: a processing apparatus that is configured to process a processing target; a first measurement apparatus that is configured to apply measurement light to a second reference member moving according to a position of a movable part of the processing apparatus, thereby measuring a position of a tool center point moving according to a movement of the movable part, and that is configured to apply measurement light to a measurement member attached to the movable part that is different from the position corresponding to the tool center point, thereby measuring a position of the measurement member; a measurement control apparatus that is configured to control the first measurement apparatus; and a processing control apparatus that is configured to control the movement of the movable part,
the processing method including:
the measurement control apparatus transforming the position of the measurement member measured by the first measurement apparatus using the measurement light applied to the measurement member when a positional relation between the position of the measurement member and a position of the second reference member and is not a predetermined relation, to a position of the tool center point, based on the position of the measurement member measured by the first measurement apparatus using the measurement light applied to the measurement member when the positional relation is the predetermined relation, and based on the position of the tool center point measured by the first measurement apparatus using the measurement light applied to the second reference member;
the measurement control apparatus transmitting sixth position information indicating the transformed position of the tool center point, to the processing control apparatus; and
the processing control apparatus controlling the movement of the movable part, based on the position of the tool center point indicated by the sixth position information, thereby moving the position of the tool center point.

### (Supplementary Note 7)

A processing method in a processing system including: a processing apparatus that is configured to process a processing target; a first measurement apparatus that is configured to apply measurement light to a measurement member attached to the processing apparatus, and that is configured to measure a position of the measurement member; a measurement control apparatus that is configured to control the first measurement apparatus; and a processing control apparatus that is configured to control a movement of the processing apparatus,
the processing method including:
the processing control apparatus transmitting, to the measurement control apparatus, first start position information indicating a first measurement start position that is a position at which the first measurement apparatus should start to measure the measurement member; and
the measurement control apparatus changing an emission direction of the measurement light such that the measurement light is applied toward the first measurement start position indicated by the first start position information.

### (Supplementary Note 8)

A processing method in a processing system including: a processing apparatus that is configured to process a processing target; a first measurement apparatus that is configured to apply measurement light to a measurement member attached to the processing apparatus, and that is configured to measure a position of the measurement member; a measurement control apparatus that is configured to control the first measurement apparatus; and a processing control apparatus that is configured to control a movement of the processing apparatus,
the processing method including:
the processing control apparatus transmitting, to the measurement control apparatus, a measurement start signal for causing the first measurement apparatus to start to measure the position of the measurement member; and
the measurement control apparatus controlling the first measurement apparatus to start to emit the measurement light, based on the measurement start signal.

### (Supplementary Note 9)

A processing method in a processing system including: a processing apparatus that is configured to process a processing target; a first measurement apparatus that is configured to apply measurement light to a measurement member attached to the processing apparatus, and that is configured to measure a position of the measurement member; a measurement control apparatus that is configured to control the first measurement apparatus; and a processing control apparatus that is configured to control a movement of the processing apparatus,
the processing method including:
the processing control apparatus transmitting, to the measurement control apparatus, timing information indicating timing in which the first measurement apparatus starts to measure the position of the measurement member; and
the measurement control apparatus controlling emission timing of the measurement light emitted from the first measurement apparatus, based on the timing information.

### (Supplementary Note 10)

A measurement method in a measurement system including: a first measurement apparatus that is configured to measure a position of a measurement member attached to a processing apparatus configured to process a processing target; and a measurement control apparatus that is configured to control the first measurement apparatus,
the measurement method including:
the measurement control apparatus calculating position transformation information for transforming the position of the measurement member to a position of a tool center point of the processing apparatus, based on the position of the measurement member measured by the first measurement apparatus; and
the measurement control apparatus transmitting the position transformation information to a processing control apparatus configured to control the processing apparatus.

### (Supplementary Note 11)

A measurement method in a measurement system including: a first measurement apparatus that is configured to measure a position of a measurement member attached to a processing apparatus configured to process a processing target; and a measurement control apparatus that is configured to control the first measurement apparatus,
the measurement method including:
the measurement control apparatus transforming the position of the measurement member to a position of a tool center point of the processing apparatus, based on the position of the measurement member measured by the first measurement apparatus; and
the measurement control apparatus transmitting sixth position information indicating the transformed position of the tool center point, to a processing control apparatus configured to control the processing apparatus.

### (Supplementary Note 12)

A processing system including:
a processing apparatus that is configured to process a processing target; and
a processing control apparatus that is configured to control the processing apparatus, wherein
the processing control apparatus includes a transmission unit that transmits information about measurement by the first measurement apparatus, to a measurement control apparatus configured to control a first measurement apparatus configured to measure the processing apparatus.

### (Supplementary Note 13)

A processing method in a processing system including: a processing apparatus that is configured to process a processing target; and a processing control apparatus that is configured to control the processing apparatus,
the processing method including:
the processing control apparatus transmitting information about measurement by the first measurement apparatus, to a measurement control apparatus configured to control a first measurement apparatus configured to measure the processing apparatus.

### (Supplementary Note 14)

A measurement method in a measurement system including:
a first measurement apparatus that is configured to measure a position of a measurement member attached to a processing apparatus configured to process a processing target; and
a measurement control apparatus that is configured to control the first measurement apparatus,
the measurement method including:
   the measurement control apparatus controlling the first measurement apparatus, based on information about measurement by the first measurement apparatus transmitted from a processing control apparatus configured to control the processing apparatus.

### (Supplementary Note 15)

A measurement method including:
a first measurement apparatus receiving measurement light generated from a first reference member attached to a jig for holding a processing target by the measurement light being applied to the first reference member, and outputting reference member position information indicating a position of the first reference member; and
the measurement apparatus receiving the measurement light generated from a measurement member attached to a movable part of a processing apparatus configured to process the processing target by the measurement light being applied to the measurement member, and outputting measurement member position information indicating a position of the measurement member, wherein
the reference member position information and the measurement member position information outputted from the first measurement apparatus are used to control a movement of the movable part of the processing apparatus.

### (Supplementary Note 16)

The measurement method according to Supplementary Note 15, including:
an imaging apparatus imaging the first reference member and the measurement member;
an irradiation direction of the measurement light applied to the first reference member from the first measurement apparatus being controlled based on an output from the imaging apparatus; and
the irradiation direction of the measurement light applied to the measurement member from the first measurement apparatus being controlled based on the output from the imaging apparatus.

The present invention is not limited to the example embodiments described above and is allowed to be changed, if desired, without departing from the essence or spirit of the invention which can be read from the claims and the entire specification. A measurement system, a processing system, a measurement method, and a processing method, which involve such changes, are also intended to be within the technical scope of the present invention.

### Description of Reference Codes

1, 1a... system 2,... measurement system 10... measurement control apparatus, 21... the measurement apparatus, 22... stereo camera, 23, 24... sensor, 30... processing control apparatus, 41, 42, 43... robot, 90... jig, W... workpiece, r11, r12, r13, r21, r22, r23... reflector

## Claims

1. A measurement system comprising:
a first measurement apparatus that is configured to apply measurement light to a measurement member attached to a movable part of a processing apparatus configured to process a processing target, and that is configured to measure a position of the measurement member; and
a measurement control apparatus that is configured to control the first measurement apparatus, wherein
the measurement control apparatus includes:
an arithmetic unit that calculates position transformation information, based on first position information indicating the position of the measurement member measured by the first measurement apparatus using the measurement light applied to the measurement member in a first state in which a tool center point of the processing apparatus is located at a predetermined position, and based on second position information indicating the predetermined position; and
a transmission unit that transmits the calculated position transformation information to a processing control apparatus configured to control a movement of the movable part of the processing apparatus, and
the transmission unit transmits, to the processing control apparatus, third position information indicating the position of the measurement member measured by the first measurement apparatus using the measurement light applied to the measurement member in a second state in which the tool center point is located at a position that is different from the predetermined position.

2. The measurement system according to claim 1, wherein the measurement control apparatus acquires the third position information after acquiring the first position information.

3. The measurement system according to claim 1 or 2, wherein the position transformation information is information for transforming the position of the measurement member indicated by the third position information to a position of the tool center point.

4. The measurement system according to any one of claims 1 to 3, wherein
the arithmetic unit acquires coordinate transformation information for transforming between a processing coordinate system that is a coordinate system according to the processing apparatus and a first measurement coordinate system that is a coordinate system according to the first measurement apparatus,
the second position information indicates the predetermined position in the processing coordinate system,
the arithmetic unit transforms the predetermined position in the processing coordinate system indicated by the second position information to the predetermined position in the first measurement coordinate system, based on the coordinate transformation information,
the first position information indicates the position of the measurement member in the first measurement coordinate system in the first state, and
the arithmetic unit calculates first position transformation information that is position transformation information in the first measurement coordinate system, as the position transformation information, based on the predetermined position in the first measurement coordinate system, and based on the position of the measurement member in the first measurement coordinate system indicated by the first position information.

5. The measurement system according to any one of claims 1 to 3, wherein
the arithmetic unit acquires: first coordinate transformation information for transforming a processing coordinate system that is a coordinate system according to the processing apparatus to a first measurement coordinate system that is a coordinate system according to the first measurement apparatus; and second coordinate transformation information for transforming the first measurement coordinate system to the processing coordinate system,
the second position information indicates the predetermined position in the processing coordinate system,
the arithmetic unit transforms the predetermined position in the processing coordinate system indicated by the second position information, to the predetermined position in the first measurement coordinate system, based on the first coordinate transformation information,
the first position information indicates the position of the measurement member in the first measurement coordinate system in the first state,
the arithmetic unit calculates second position transformation information that is position transformation information in the processing coordinate system, as the position transformation information, based on the predetermined position in the first measurement coordinate system, based on the position of the measurement member in the first measurement coordinate system indicated by the first position information, and based on the second coordinate transformation information, and
the transmission unit transmits the second transformation information to the processing control apparatus, as the position transformation information.

6. The measurement system according to any one of claims 1 to 5, wherein
the measurement member includes a plurality of reflectors, and
on the movable part in which the plurality of reflectors are arranged, a space in a first direction between the plurality of reflectors is longer than a space in a second direction intersecting the first direction.

7. The measurement system according to any one of claims 1 to 5, wherein
the measurement member includes a plurality of reflectors, and
on the movable part in which the plurality of reflectors are arranged, a space in a first direction between the plurality of reflectors is shorter than a space in a second direction intersecting the first direction.

8. The measurement system according to claim 6 or 7, wherein
the movable part is a robot arm, and
the first direction is a longitudinal direction of the robot arm.

9. The measurement system according to claim 6 or 7, wherein
the movable part is a robot arm, and
the first direction is a direction along a rotation axis of a processing tool of the robot arm, or an optical axis of processing light.

10. A measurement system comprising:
a first measurement apparatus that is configured to apply measurement light to a measurement member attached to a movable part of a processing apparatus configured to process a processing target, and that is configured to measure a position of the measurement member; and
a measurement control apparatus that is configured to control the first measurement apparatus, wherein
the measurement control apparatus includes:
an arithmetic unit that transforms the position of the measurement member measured by the first measurement apparatus using the measurement light applied to the measurement member, to a position of a tool center point of the processing apparatus, based on position transformation information;
a transmission unit that transmits sixth position information indicating the position of the tool center point, to a processing control apparatus configured to control a movement of the movable part, and
the arithmetic unit calculates the position transformation information, based on the position of the measurement member measured by the first measurement apparatus using the measurement light applied to the measurement member in a first state in which the tool center point is located at a predetermined position.

11. The measurement system according to claim 10, wherein the measurement control apparatus acquires the position of the measurement member measured by the he first measurement apparatus using the measurement light applied to the measurement member in the first state, and then acquires the position of the measurement member measured by the first measurement apparatus using the measurement light applied to the measurement member in a second state in which the tool center point is located at a position that is different from the predetermined position.

12. The measurement system according to claim 10 or 11, wherein the position transformation information is information for transforming the position of the measurement member measured by the first measurement apparatus using the measurement light applied to the measurement member, to the position of the tool center point, in a second state in which the tool center point is located at a position that is different from the predetermined position.

13. The measurement system according to any one of claims 10 to 12, wherein
the arithmetic unit acquires coordinate transformation information for transforming between a processing coordinate system that is a coordinate system according to the processing apparatus and a first measurement coordinate system that is a coordinate system according to the first measurement apparatus,
the arithmetic unit transforms the predetermined position in the processing coordinate system to the predetermined position in the first measurement coordinate system, based on the coordinate transformation information, and
the arithmetic unit calculates first position transformation information that is position transformation information in the first measurement coordinate system, as the position transformation information, based on the predetermined position in the first measurement coordinate system, and based on the position of the measurement member in the first measurement coordinate system measured by the first measurement apparatus using the measurement light applied to the measurement member in the first state.

14. The measurement system according to any one of claims 10 to 12, wherein
the arithmetic unit acquires: first coordinate transformation information for transforming a processing coordinate system that is a coordinate system according to the processing apparatus to a first measurement coordinate system that is a coordinate system according to the first measurement apparatus; and second coordinate transformation information for transforming the first measurement coordinate system to the processing coordinate system,
the arithmetic unit transforms the predetermined position in the processing coordinate system to the predetermined position in the first measurement coordinate system, based on the first coordinate transformation information,
the arithmetic unit calculates second position transformation information that is position transformation information in the processing coordinate system, as the position transformation information, based on the predetermined position in the first measurement coordinate system, based on the position of the measurement member in the first measurement coordinate system measured by the first measurement apparatus using the measurement light applied to the measurement member in the first state, and based on the second coordinate transformation information, and
the transmission unit transmits the second position transformation information to the processing control apparatus.

15. The measurement system according to claim 14, wherein
the arithmetic unit transforms the position of the measurement member in the first measurement coordinate system measured by the first measurement apparatus using the measurement light applied to the measurement member, to the position of the measurement member in the processing coordinate system, based on the second coordinate transformation information, and
the transmission unit transmits, to the processing control apparatus, third position information indicating the position of the measurement member in the processing coordinate system.

16. A measurement system comprising:
a first measurement apparatus that is configured to apply measurement light to a measurement member attached to a movable part of a processing apparatus configured to process a processing target, and that is configured to measure a position of the measurement member, wherein the movable part is different from a position corresponding to a tool center point of the processing apparatus;
a measurement control apparatus that is configured to control the first measurement apparatus; and
a third measurement apparatus that is configured to measure the position of the tool center point, wherein
the measurement control apparatus includes:
an arithmetic unit that calculates position transformation information, based on the position of the measurement member measured by the first measurement apparatus using the measurement light applied to the measurement member in a state in which the third measurement apparatus measures the position of the tool center point, and based on the position of the tool center point measured by the third measurement apparatus; and
a transmission unit that transmits, to a processing control apparatus configured to control a movement of the movable part, the position transformation information and third position information indicating the position of the measurement member measured by the first measurement apparatus using the measurement light applied to the measurement member in a state in which the third measurement apparatus does not measure the position of the tool center point.

17. The measurement system according to claim 16, wherein the measurement control apparatus acquires the position of the measurement member measured by the first measurement apparatus using the measurement light applied to the measurement member in the state in which the third measurement apparatus measures the position of the tool center point, and then acquires the position of the measurement member measured by the first measurement apparatus using the measurement light applied to the measurement member in the state in which the third measurement apparatus does not measure the position of the tool center point.

18. The measurement system according to claim 16 or 17, wherein the position transformation information is information for transforming the position of the measurement member measured by the first measurement apparatus using the measurement light applied to the measurement member, to the position of the tool center point in the state in which the third measurement apparatus does not measure the position of the tool center point.

19. The measurement system according to any one of claims 16 to 18, wherein
the arithmetic unit acquires third coordinate transformation information for transforming a second measurement coordinate system that is a coordinate system according to the third measurement apparatus to a first measurement coordinate system that is a coordinate system according to the first measurement apparatus,
the arithmetic unit transforms, based on the third coordinate transformation information, the position of the tool center point in the second measurement coordinate system measured by the third measurement apparatus, to the position of the tool center point in the first measurement coordinate system in the state in which the third measurement apparatus measures the position of the tool center point, and
the arithmetic unit calculates first position transformation information that is the position transformation information in the first measurement coordinate system, as the position transformation information, based on the position of the measurement member in the first measurement coordinate system measured by the first measurement apparatus in the state in which the third measurement apparatus measures the position of the tool center point, and based on the position of the tool center point in the first measurement coordinate system.

20. The measurement system according to any one of claims 16 to 18, wherein
the arithmetic unit acquires: second coordinate transformation information for transforming a first measurement coordinate system that is a coordinate system according to the first measurement apparatus to a processing coordinate system that is a coordinate system according to the processing apparatus; and third coordinate transformation information for transforming a second measurement coordinate system that is a coordinate system according to the third measurement apparatus to the first measurement coordinate system,
the arithmetic unit transforms, based on the third coordinate transformation information, the position of the tool center point in the second measurement coordinate system measured by the third measurement apparatus, to the position of the tool center point in the first measurement coordinate system in the state in which the third measurement apparatus measures the position of the tool center point,
the arithmetic unit calculates second position transformation information that is position transformation information in the processing coordinate system, as the position transformation information, based on the position of the measurement member in the first measurement coordinate system measured by the first measurement apparatus in the state in which the third measurement apparatus measures the position of the tool center point, based on the position of the tool center point in the first measurement coordinate system, and based on the second coordinate transformation information, and
the transmission unit transmits the second position transformation information to the processing control apparatus.

21. A measurement system comprising:
a first measurement apparatus that is configured to apply measurement light to a measurement member attached to a movable part of a processing apparatus configured to process a processing target, and that is configured to measure a position of the measurement member, wherein the movable part is different from a position corresponding to a tool center point of the processing apparatus;
a measurement control apparatus that is configured to control the first measurement apparatus; and
a third measurement apparatus that is configured to measure the position of the tool center point, wherein
the measurement control apparatus includes:
an arithmetic unit that transforms the position of the measurement member measured by the first measurement apparatus using the measurement light applied to the measurement member in a state in which the third measurement apparatus does not measure the position of the tool center point, to the position of the tool center point, based on the position of the measurement member measured by the first measurement apparatus using the measurement light applied to the measurement member in a state in which the third measurement apparatus measures the position of the tool center point, and based on the position of the tool center point measured by the third measurement apparatus; and
a transmission unit that transmits sixth position information indicating the transformed position of the tool center point, to a processing control apparatus configured to control a movement of the movable part.

22. The measurement system according to claim 21, wherein the measurement control apparatus acquires the position of the measurement member measured by the first measurement apparatus using the measurement light applied to the measurement member in the state in which the third measurement apparatus measures the position of the tool center point, and then acquires the position of the measurement member measured by the first measurement apparatus using the measurement light applied to the measurement member in the state in which the third measurement apparatus does not measure the position of the tool center point.

23. The measurement system according to claim 21 or 22, wherein
the arithmetic unit acquires coordinate transformation information for transforming between a first measurement coordinate system that is a coordinate system according to the first measurement apparatus and a processing coordinate system that is a coordinate system according to the processing apparatus,
the arithmetic unit transforms the position of the measurement member in the first measurement coordinate system measured by the first measurement apparatus using the measurement light applied to the measurement member, to the position of the measurement member in the processing coordinate system, based on the coordinate transformation information, and
the transmission unit transmits, to the processing control apparatus, third position information indicating the position of the measurement member in the processing coordinate system.

24. A measurement system comprising:
a first measurement apparatus that is configured to apply measurement light to a second reference member moving according to a position of a movable part of a processing apparatus configured to process a processing target, thereby measuring a position of a tool center point of the processing apparatus moving according to a movement of the movable part, and that is configured to apply measurement light to a measurement member attached to the movable part that is different from the position corresponding to the tool center point, thereby measuring a position of the measurement member; and
a measurement control apparatus that is configured to control the first measurement apparatus, wherein
the measurement control apparatus includes:
an arithmetic unit that calculates position transformation information, based on the position of the tool center point measured by the first measurement apparatus using the measurement light applied to the second reference member when a positional relation between the position of the measurement member and the position of the second reference member is a predetermined relation, and based on the position of the measurement member measured by the first measurement apparatus using the measurement light applied to the measurement member; and
a transmission unit that transmits, to a processing control apparatus configured to control the movement of the movable part, the position transformation information and third position information indicating the position of the measurement member measured by the first measurement apparatus using the measurement light applied to the measurement member when the positional relation is different from the predetermined relation.

25. The measurement system according to claim 24, wherein the measurement control apparatus acquires the position of the measurement member measured by the first measurement apparatus using the measurement light applied to the measurement member when the positional relation is the predetermined relation, and then acquires the position of the measurement member measured by the first measurement apparatus using the measurement light applied to the measurement member when the positional relation is different from the predetermined relation.

26. The measurement system according to claim 24 or 25, wherein the position transformation information is information for transforming the position of the measurement member measured by the first measurement apparatus using the measurement light applied to the measurement member when the positional relation is different from the predetermined relation, to the position of the tool center point.

27. The measurement system according to any one of claims 24 to 26, wherein the arithmetic unit calculates first position transformation information that is position transformation information in a first measurement coordinate system that is a coordinate system according to the first measurement apparatus, as the position transformation information, based on the position of the measurement member in the first measurement coordinate system, measured by the first measurement apparatus when the positional relation is the predetermined relation, and based on the position of the tool center point in the first measurement coordinate system.

28. The measurement system according to any one of claims 24 to 26, wherein
the arithmetic unit acquires coordinate transformation information for transforming between a first measurement coordinate system that is a coordinate system according to the first measurement apparatus and a processing coordinate system that is a coordinate system according to the processing apparatus,
the arithmetic unit calculates second position transformation information that is position transformation information in the processing coordinate system, as the position transformation information, based on the position of the measurement member in the first measurement coordinate system measured by the first measurement apparatus when the positional relation is the predetermined relation, based on the position of the tool center point in the first measurement coordinate system measured by the first measurement apparatus, and based on the coordinate transformation information, and
the transmission unit transmits the second position transformation information to the processing control apparatus.

29. A measurement system comprising:
a first measurement apparatus that is configured to apply measurement light to a second reference member moving according to a position of a movable part of a processing apparatus configured to process a processing target, thereby measuring a position of a tool center point moving according to a movement of the movable part, and that is configured to apply measurement light to a measurement member attached to the movable part that is different from the position corresponding to the tool center point, thereby measuring a position of the measurement member; and
a measurement control apparatus that is configured to control the first measurement apparatus, wherein
the measurement control apparatus includes:
an arithmetic unit that transforms the position of the measurement member measured by the first measurement apparatus using the measurement light applied to the measurement member when a positional relation between the position of the measurement member and a position of the second reference member and is not a predetermined relation, to a position of the tool center point, based on the position of the measurement member measured by the first measurement apparatus using the measurement light applied to the measurement member when the positional relation is the predetermined relation, and based on the position of the tool center point measured by the first measurement apparatus using the measurement light applied to the second reference member; and
a transmission unit that transmits sixth position information indicating the transformed position of the tool center point, to a processing control apparatus configured to control the movement of the movable part.

30. The measurement system according to claim 29, wherein the measurement control apparatus acquires the position of the measurement member measured by the first measurement apparatus using the measurement light applied to the measurement member when the positional relation is the predetermined relation, and then acquires the position of the measurement member measured by the first measurement apparatus using the measurement light applied to the measurement member when the positional relation is different from the predetermined relation.

31. The measurement system according to claim 29 or 30, wherein the first measurement apparatus is configured to apply the measurement light to a first reference member attached to at least one of the processing target and a jig for holding the processing target, and is configured to measure a position of the first reference member in a first measurement coordinate system that is a coordinate system according to the first measurement apparatus.

32. The measurement system according to claim 31, wherein
the arithmetic unit transforms the position of the measurement member in the first measurement coordinate system measured by the first measurement apparatus using the measurement light applied to the measurement member, to the position of the measurement member in a processing coordinate system, based on fourth position information indicating the position of the first reference member in the first measurement coordinate system measured by the first measurement apparatus using the measurement light applied to the first reference member, and based on fifth position information indicating the position of the first reference member in the processing coordinate system inputted via an input unit of the measurement control apparatus, and
the transmission unit transmits, to the processing control apparatus, third position information indicating the position of the measurement member in the processing coordinate system.

33. The measurement system according to any one of claims 1 to 9, wherein the measurement control apparatus acquires the second position information.

34. The measurement system measurement system according to claim 4, 13, 19 or 27, wherein the transmission unit transmits the first position transformation information to the processing control apparatus.

35. The measurement system according to any one of claims 1 to 9, 16 to 20, and 24 to 28, wherein
the arithmetic unit transforms the position of the measurement member in a first measurement coordinate system measured by the first measurement apparatus using the measurement light applied to the measurement member, to the position of the measurement member in a processing coordinate system, based on the second coordinate transformation information, and
the transmission unit transmits, to the processing control apparatus, the third position information indicating the position of the measurement member in the processing coordinate system.

36. The measurement system according to any one of claims 1 to 35, wherein the first measurement apparatus is configured to apply the measurement light to a first reference member attached to at least one of the processing target and a jig for holding the processing target, and is configured to measure a position of the first reference member in a first measurement coordinate system that is a coordinate system according to the first measurement apparatus.

37. The measurement system according to claim 36, wherein
the arithmetic unit transforms the position of the measurement member in the first measurement coordinate system measured by the first measurement apparatus using the measurement light applied to the measurement member, to the position of the measurement member in a processing coordinate system, based on fourth position information indicating the position of the first reference member in the first measurement coordinate system measured by the first measurement apparatus using the measurement light applied to the first reference member, and based on fifth position information indicating the position of the first reference member in the processing coordinate system inputted via an input unit of the measurement control apparatus, and
the transmission unit transmits, to the processing control apparatus, the third position information indicating the position of the measurement member in the processing coordinate system.

38. The measurement system according to claim 37, wherein
the processing control apparatus controls a plurality of processing apparatuses, each of which is configured to process the processing target, and
the arithmetic unit is configured to calculate the positions in the processing coordinate system of a plurality of the measurement member attached to each of the plurality of processing apparatuses.

39. The measurement system according to claim 37 or 38, wherein the arithmetic unit calculates second coordinate transformation information for transforming the position of the measurement member in the first measurement coordinate system measured by the first measurement apparatus using the measurement light applied to the measurement member, to the position of the measurement member in the processing coordinate system, based on the fourth position information and the fifth position information.

40. The measurement system according to claim 38, wherein
the arithmetic unit calculates second coordinate transformation information for transforming the position of the measurement member in the first measurement coordinate system measured by the first measurement apparatus using the measurement light applied to the measurement member, to the position of the measurement member in the processing coordinate system, based on the fourth position information and the fifth position information, and
the second coordinate transformation information is shared to calculate the positions of the plurality of the measurement members.

41. The measurement system according to claim 36, wherein
a plurality of measurement members are attached to each of a plurality of processing apparatuses configured to process the processing target,
the arithmetic unit calculates second coordinate transformation information for transforming the position of the measurement member in the first measurement coordinate system measured by the first measurement apparatus using the measurement light applied to the measurement member, to the position of the measurement member in the processing coordinate system, based on fourth position information indicating the position of the first reference member in the first measurement coordinate system measured by the first measurement apparatus using the measurement light applied to the first reference member, and based on fifth position information indicating the position of the first reference member in the processing coordinate system inputted via an input unit of the measurement control apparatus, and
the second coordinate transformation information is shared to calculate the positions of the plurality of the measurement members.

42. The measurement system according to any one of claims 1 to 41, wherein the measurement control apparatus includes a receiving unit that receives, from the processing control apparatus, a measurement start signal for causing the first measurement apparatus to start measurement.

43. The measurement system according to claim 42, wherein the measurement control apparatus changes an emission direction of the measurement light in the first measurement apparatus such that the measurement light is applied toward a target position, after receiving the measurement start signal and before the position of the measurement member attached to the processing apparatus is located at the target position.

44. The measurement system according to claim 42 or 43, wherein the receiving unit further receives, from the processing control apparatus, timing information indicating timing of starting the measurement.

45. The measurement system according to claim 44, wherein the measurement control apparatus changes the emission direction of the measurement light in the first measurement apparatus such that the measurement light is applied toward a target position, after receiving the timing information and before the position of the measurement member attached to the processing apparatus is located at the target position.

46. The measurement system according to any one of claims 1 to 45, wherein a reflector configured to reflect the measurement light is attached to the processing apparatus, as the measurement member.

47. The measurement system according to any one of claims 1 to 46, wherein
the measurement control apparatus includes an estimation unit configured to estimate the position of the measurement member moving with the movement of the movable part in operation of the processing apparatus, and
the measurement control apparatus changes an emission direction of the measurement light in the first measurement apparatus such that the measurement light is applied to the position estimated by the estimation unit.

48. The measurement system according to any one of claims 1 to 47, wherein the first measurement apparatus includes a tracking apparatus configured to track the measurement member moving with the movement of the movable part in operation of the processing apparatus.

49. The measurement system according to claim 48, wherein
the measurement control apparatus includes an estimation unit configured to estimate the position of the measurement member moving with the movement of the movable part in operation of the processing apparatus, and
the estimation unit corrects the estimated position, based on the estimated position and based on the position of the measurement member measured by the first measurement apparatus using the measurement light applied to the measurement member.

50. The measurement system according to any one of claims 36 to 41, wherein the first reference member includes at least three reflectors, each of which is configured to reflect the measurement light.

51. The measurement system according to any one of claims 1 to 50, wherein the measurement member includes at least three reflectors, each of which is configured to reflect the measurement light.

52. The measurement system according to any one of claims 1 to 51, wherein
the measuring device comprises an imaging apparatus that is configured to image the measurement member, and
the measurement control apparatus controls measurement of the measurement member by the first measurement apparatus, based on an imaging result by the imaging apparatus.

53. The measurement system according to any one of claims 1 to 52, wherein
the measurement system comprises a second measurement apparatus that is configured to measure the measurement member with accuracy coarser than that of the first measurement apparatus, and
the measurement control apparatus controls measurement of the measurement member by the first measurement apparatus, based on a measurement result of the measurement member by the second measurement apparatus.

54. The measurement system according to any one of claims 1 to 53, wherein
the processing control apparatus controls processing of the processing target by a plurality of processing apparatuses, and
the arithmetic unit is configured to calculate the position of the tool center point of each of the plurality of the processing apparatuses.

55. A processing system comprising:
the measurement system according to any one of claims 1 to 9 and 33 to 54;
the processing apparatus that is configured to process the processing target; and
the processing control apparatus that is configured to control the movement of the movable part of the processing apparatus, wherein
the processing control apparatus transforms the position of the measurement member indicated by the third position information to the position of the tool center point, based on the position transformation information, and controls the movement of the movable part, based on the transformed position of the tool center point, thereby moving the position of the tool center point.

56. The processing system according to claim 55, wherein
the arithmetic unit transforms the position of the measurement member in a first measurement coordinate system measured by the first measurement apparatus using the measurement light applied to the measurement member, to the position of the measurement member in a processing coordinate system, based on the second coordinate transformation information,
the transmission unit transmits, to the processing control apparatus, the third position information indicating the position of the measurement member in the processing coordinate system, and
the processing control apparatus calculates the position of the tool center point in the processing coordinate system, based on the position of the measurement member in the processing coordinate system indicated by the third position information, and based on the second position transformation information.

57. The processing system according to claim 55, wherein the processing control apparatus calculates the position of the tool center point in a processing coordinate system that is a coordinate system according to the processing apparatus, based on the position transformation information and based on the position of the measurement member indicated by the third position information.

58. The processing system according to claim 57, wherein the processing control apparatus calibrates the processing apparatus, based on the third position information.

59. The processing system according to any one of claims 55 to 59, wherein the processing control apparatus controls processing by the processing apparatus, based on the position transformation information and based on the position of the tool center point calculated based on the third position information and.

60. The processing system according to any one of claims 55 to 59, wherein
the processing control apparatus controls processing of the processing target by a plurality of processing apparatuses, and
the arithmetic unit is configured to calculate the position of the tool center point of each of the plurality of the processing apparatuses.

61. A processing system comprising:
the measurement system according to any one of claims 10 to 15, 34, and 36 to 54,
the processing apparatus that is configured to process the processing target; and
the processing control apparatus that is configured to control the movement of the movable part of the processing apparatus, wherein
the processing control apparatus controls the movement of the movable part, based on the position of the tool center point indicated by the sixth position information transmitted by the transmission unit, thereby moving the position of the tool center point.

62. The processing system according to claim 61, wherein
the transmission unit transmits the first position transformation information to the processing control apparatus, and
the processing control apparatus transforms the first position transformation information to second position transformation information that is position transformation information in a processing coordinate system.

63. The processing system according to claim 61, wherein
the arithmetic unit transforms the position of the measurement member in a first measurement coordinate system measured by the first measurement apparatus using the measurement light applied to the measurement member, to the position of the measurement member in a processing coordinate system, based on the second coordinate transformation information,
the transmission unit transmits, to the processing control apparatus, the third position information indicating the position of the measurement member in the processing coordinate system, and
the processing control apparatus calculates the position of the tool center point in the processing coordinate system, based on the position of the measurement member in the processing coordinate system indicated by the third position information, and based on transformation information in the processing coordinate system.

64. The processing system according to claim 61, wherein the processing control apparatus calculates the position of the tool center point in a processing coordinate system that is a coordinate system according to the processing apparatus, based on the position transformation information and the position of the measurement member measured by the first measurement apparatus using the measurement light applied to the measurement member in a second state in which the tool center point is located at a position that is different from the predetermined position.

65. The processing system according to claim 61, wherein
the arithmetic unit transforms the position of the measurement member in a first measurement coordinate system measured by the first measurement apparatus using the measurement light applied to the measurement member, to the position of the measurement member in a processing coordinate system, based on fourth position information indicating the position of the first reference member in the first measurement coordinate system measured by the first measurement apparatus using the measurement light applied to the first reference member, and based on fifth position information indicating the position of the first reference member in the processing coordinate system inputted via an input unit of the measurement control apparatus,
the transmission unit transmits, to the processing control apparatus, third position information indicating the position of the measurement member in the processing coordinate system, and
the processing control apparatus controls the processing apparatus in the processing coordinate system, based on the third position information.

66. The processing system according to claim 65, wherein the processing control apparatus calibrates the processing apparatus, based on third position information indicating the position of the measurement member in the processing coordinate system.

67. The processing system according to claim 65 or 66, wherein
the processing control apparatus controls a plurality of processing apparatuses, each of which is configured to process the processing target, and
the arithmetic unit is configured to calculate the positions in the processing coordinate system of a plurality of the measurement member attached to each of the plurality of processing apparatuses.

68. The processing system according to any one of claims 61 to 67, wherein the processing control apparatus controls processing by the processing apparatus, based on the position transformation information and based on the position of the tool center point calculated based on the position of the measurement member measured by the first measurement apparatus using the measurement light applied to the measurement member in a second state in which the tool center point is located at a position that is different from the predetermined position.

69. The processing system according to any one of claims 61 to 68, wherein
the processing control apparatus controls processing of the processing target by a plurality of processing apparatuses, and
the arithmetic unit is configured to calculate the position of the tool center point of each of the plurality of the processing apparatuses.

70. A processing system comprising:
the measurement system according to any one of claims 16 to 20 and 34 to 54;
the processing apparatus that is configured to process the processing target; and
the processing control apparatus that is configured to control the movement of the movable part of the processing apparatus, wherein
the processing control apparatus transforms the position of the measurement member indicated by the third position information to the position of the tool center point, based on the position transformation information, and controls the movement of the movable part, based on the transformed position of the tool center point, thereby moving the position of the tool center point.

71. The processing system according to claim 70, wherein
the transmission unit transmits the first position transformation information to the processing control apparatus, and
the processing control apparatus transforms the first position transformation information to transformation information in the processing coordinate system.

72. The processing system according to claim 70, wherein
the arithmetic unit transforms the position of the measurement member in a first measurement coordinate system measured by the first measurement apparatus using the measurement light applied to the measurement member, to the position of the measurement member in a processing coordinate system, based on the second coordinate transformation information,
the transmission unit transmits, to the processing control apparatus, third position information indicating the position of the measurement member in the processing coordinate system, and
the processing control apparatus calculates the position of the tool center point in the processing coordinate system, based on the third position information and the second position transformation information.

73. The processing system according to claim 70, wherein the processing control apparatus calculates the position of the tool center point in a processing coordinate system that is a coordinate system according to the processing apparatus, based on the position transformation information, and based on the position of the measurement member measured by the first measurement apparatus using the measurement light applied to the measurement member in a state in which the third measurement apparatus does not measure the position of the tool center point.

74. The processing system according to claim 70, wherein
the arithmetic unit transforms the position of the measurement member in a first measurement coordinate system measured by the first measurement apparatus using the measurement light applied to the measurement member, to the position of the measurement member in a processing coordinate system, based on fourth position information indicating the position of the first reference member in the first measurement coordinate system measured by the first measurement apparatus using the measurement light applied to the first reference member, and based on fifth position information indicating the position of the first reference member in the processing coordinate system inputted via an input unit of the measurement control apparatus,
the transmission unit transmits, to the processing control apparatus, third position information indicating the position of the measurement member in the processing coordinate system, and
the processing control apparatus controls the processing apparatus in the processing coordinate system, based on the third position information.

75. The processing system according to claim 74, wherein the processing control apparatus calibrates the processing apparatus, based on information indicating the position of the measurement member in the processing coordinate system.

76. The measurement system according to claim 74 or 75, wherein
the processing control apparatus controls a plurality of processing apparatuses, each of which is configured to process the processing target, and
the arithmetic unit is configured to calculate the positions in the processing coordinate system of a plurality of the measurement member attached to each of the plurality of processing apparatuses.

77. The processing system according to any one of claims 70 to 76, wherein the processing control apparatus controls processing by the processing apparatus, based on the position transformation information and based on the position of the tool center point calculated based on the position of the measurement member measured by the first measurement apparatus using the measurement light applied to the measurement member in a state in which the third measurement apparatus does not measure the position of the tool center point.

78. The processing system according to any one of claims 70 to 77, wherein
the processing control apparatus controls processing of the processing target by a plurality of processing apparatuses, and
the arithmetic unit is configured to calculate the position of the tool center point of each of the plurality of the processing apparatuses.

79. A processing system comprising:
the measurement system according to any one of claims 21 to 23 and 36 to 54;
the processing apparatus that is configured to process the processing target; and
the processing control apparatus that is configured to control the movement of the movable part of the processing apparatus, wherein
the processing control apparatus controls the movement of the movable part, based on the sixth position information, thereby moving the position of the tool center point.

80. The processing system according to claim 79, wherein
the arithmetic unit transforms the position of the measurement member in a first measurement coordinate system measured by the first measurement apparatus using the measurement light applied to the measurement member, to the position of the measurement member in a processing coordinate system, based on fourth position information indicating the position of the first reference member in the first measurement coordinate system measured by the first measurement apparatus using the measurement light applied to the first reference member, and based on fifth position information indicating the position of the first reference member in the processing coordinate system inputted via an input unit of the measurement control apparatus,
the transmission unit transmits, to the processing control apparatus, third position information indicating the position of the measurement member in the processing coordinate system, and
the processing control apparatus controls the processing apparatus in the processing coordinate system, based on the third position information.

81. The processing system according to claim 80, wherein the processing control apparatus calibrates the processing apparatus, based on the third position information.

82. The measurement system according to claim 80 or 81, wherein
the processing control apparatus controls a plurality of processing apparatuses, each of which is configured to process the processing target, and
the arithmetic unit is configured to calculate the positions in the processing coordinate system of a plurality of the measurement member attached to each of the plurality of processing apparatuses.

83. The processing system according to any one of claims 79 to 82, wherein the processing control apparatus controls processing by the processing apparatus, based on the position of the tool center point indicated by the sixth position information.

84. The processing system according to any one of claims 79 to 83, wherein
the processing control apparatus controls processing of the processing target by a plurality of processing apparatuses, and
the arithmetic unit is configured to calculate the position of the tool center point of each of the plurality of the processing apparatuses.

85. A processing system comprising:
the measurement system according to any one of claims 24 to 28 and 34 to 54;
the processing apparatus that is configured to process the processing target; and
the processing control apparatus that is configured to control the movement of the movable part of the processing apparatus, wherein
the processing control apparatus transforms the position of the measurement member indicated by the third position information to the position of the tool center point, based on the position transformation information, and moves the movable part, based on the transformed position of the tool center point, thereby moving the position of the tool center point.

86. The processing system according to claim 85, wherein
the arithmetic unit transforms the position of the measurement member in the first measurement coordinate system measured by the first measurement apparatus using the measurement light applied to the measurement member, to the position of the measurement member in the processing coordinate system, based on the coordinate transformation information,
the transmission unit transmits, to the processing control apparatus, third position information indicating the position of the measurement member in the processing coordinate system, and
the processing control apparatus calculates the position of the tool center point in the processing coordinate system, based on the third position information and the second position transformation information.

87. The processing system according to claim 85, wherein the processing control apparatus calculates the position of the tool center point in a processing coordinate system that is a coordinate system according to the processing apparatus, based on the position transformation information and based on the position of the measurement member measured by the first measurement apparatus using the measurement light applied to the measurement member when the positional relation is different from the predetermined relation.

88. The processing system according to claim 85, wherein
the arithmetic unit transforms the position of the measurement member in a first measurement coordinate system measured by the first measurement apparatus using the measurement light applied to the measurement member, to the position of the measurement member in a processing coordinate system, based on fourth position information indicating the position of the first reference member in the first measurement coordinate system measured by the first measurement apparatus using the measurement light applied to the first reference member, and based on fifth position information indicating the position of the first reference member in the processing coordinate system inputted via an input unit of the measurement control apparatus,
the transmission unit transmits, to the processing control apparatus, third position information indicating the position of the measurement member in the processing coordinate system, and
the processing control apparatus controls the processing apparatus in the processing coordinate system, based on the third position information.

89. The processing system according to claim 88, wherein the processing control apparatus calibrates the processing apparatus, based on the third position information.

90. The processing system according to claim 88 or 89, wherein
the processing control apparatus controls a plurality of processing apparatuses, each of which is configured to process the processing target, and
the arithmetic unit is configured to calculate the positions in the processing coordinate system of a plurality of the measurement member attached to each of the plurality of processing apparatuses.

91. The processing system according to any one of claims 85 to 90, wherein the processing control apparatus controls processing by the processing apparatus, based on the position transformation information and based on the position of the tool center point calculated based on the position of the measurement member measured by the first measurement apparatus using the measurement light when the positional relation is different from the predetermined relation.

92. The processing system according to any one of claims 85 to 91, wherein
the processing control apparatus controls processing of the processing target by a plurality of processing apparatuses, and
the arithmetic unit is configured to calculate the position of the tool center point of each of the plurality of the processing apparatuses.

93. A processing system comprising:
the measurement system according to any one of claims 29 to 32 and 36 to 54;
the processing apparatus that is configured to process the processing target; and
the processing control apparatus that is configured to control the movement of the movable part of the processing apparatus, wherein
the processing control apparatus controls the movement of the movable part, based on the position of the tool center point indicated by the sixth position information, thereby moving the position of the tool center point.

94. The processing system according to claim 93, wherein
the arithmetic unit transforms the position of the measurement member in a first measurement coordinate system measured by the first measurement apparatus using the measurement light applied to the measurement member, to the position of the measurement member in a processing coordinate system, based on fourth position information indicating the position of the first reference member in the first measurement coordinate system measured by the first measurement apparatus using the measurement light applied to the first reference member, and based on fifth position information indicating the position of the first reference member in the processing coordinate system inputted via an input unit of the measurement control apparatus,
the transmission unit transmits, to the processing control apparatus, third position information indicating the position of the measurement member in the processing coordinate system, and
the processing control apparatus controls the processing apparatus in the processing coordinate system, based on the third position information.

95. The processing system according to claim 94, wherein the processing control apparatus calibrates the processing apparatus, based on the third position information.

96. The measurement system according to claim 94 or 95, wherein
the processing control apparatus controls a plurality of processing apparatuses, each of which is configured to process the processing target, and
the arithmetic unit is configured to calculate the positions in the processing coordinate system of a plurality of the measurement member attached to each of the plurality of processing apparatuses.

97. The processing system according to any one of claims 93 to 96, wherein the processing control apparatus controls processing by the processing apparatus, based on the position of the tool center point indicated by the sixth position information.

98. The processing system according to any one of claims 93 to 97, wherein
the processing control apparatus controls processing of the processing target by a plurality of processing apparatuses, and
the arithmetic unit is configured to calculate the position of the tool center point of each of the plurality of the processing apparatuses.

99. A measurement method in a measurement system including: a first measurement apparatus that is configured to apply measurement light to a measurement member attached to a movable part of a processing apparatus configured to process a processing target, and that is configured to measure a position of the measurement member; and a measurement control apparatus that is configured to control the first measurement apparatus,
the measurement method comprising:
the measurement control apparatus calculating position transformation information, based on first position information indicating the position of the measurement member measured by the first measurement apparatus using the measurement light applied to the measurement member in a first state in which a tool center point of the processing apparatus is located at a predetermined position, and based on second position information indicating the predetermined position;
the measurement control apparatus transmitting the calculated position transformation information to a processing control apparatus configured to control a movement of the movable part of the processing apparatus; and
the measurement control apparatus transmitting, to the processing control apparatus, third position information indicating the position of the measurement member measured by the first measurement apparatus using the measurement light applied to the measurement member in a second state in which the tool center point is located at a position that is different from the predetermined position.

100. A measurement method in a measurement system including: a first measurement apparatus that is configured to apply measurement light to a measurement member attached to a movable part of a processing apparatus configured to process a processing target, and that is configured to measure a position of the measurement member; and a measurement control apparatus that is configured to control the first measurement apparatus,
the measurement method comprising:
the measurement control apparatus transforming the position of the measurement member measured by the first measurement apparatus using the measurement light applied to the measurement member, to a position of a tool center point of the processing apparatus, based on position transformation information;
the measurement control apparatus transmitting sixth position information indicating the position of the tool center point, to a processing control apparatus configured to control a movement of the movable part; and
the measurement control apparatus calculating the position transformation information, based on the position of the measurement member measured by the first measurement apparatus using the measurement light applied to the measurement member in a first state in which the tool center point is located at a predetermined position.

101. A measurement method in a measurement system including: a first measurement apparatus that is configured to apply measurement light to a measurement member attached to a movable part of a processing apparatus configured to process a processing target, and that is configured to measure a position of the measurement member, wherein the movable part is different from a position corresponding to a tool center point of the processing apparatus; a measurement control apparatus that is configured to control the first measurement apparatus; and a third measurement apparatus that is configured to measure the position of the tool center point,
the measurement method comprising:
the measurement control apparatus calculating position transformation information, based on the position of the measurement member measured by the first measurement apparatus using the measurement light applied to the measurement member in a state in which the third measurement apparatus measures the position of the tool center point, and based on the position of the tool center point measured by the third measurement apparatus; and
the measurement control apparatus transmitting, to a processing control apparatus configured to control a movement of the movable part, the position transformation information and third position information indicating the position of the measurement member measured by the first measurement apparatus using the measurement light applied to the measurement member in a state in which the third measurement apparatus does not measure the position of the tool center point.

102. A measurement method in a measurement system including: a first measurement apparatus that is configured to apply measurement light to a measurement member attached to a movable part of a processing apparatus configured to process a processing target, and that is configured to measure a position of the measurement member, wherein the movable part is different from a position corresponding to a tool center point of the processing apparatus; a measurement control apparatus that is configured to control the first measurement apparatus; and a third measurement apparatus that is configured to measure the position of the tool center point,
the measurement method comprising:
the measurement control apparatus transforming the position of the measurement member measured by the first measurement apparatus using the measurement light applied to the measurement member in a state in which the third measurement apparatus does not measure the position of the tool center point, to the position of the tool center point, based on the position of the measurement member measured by the first measurement apparatus using the measurement light applied to the measurement member in a state in which the third measurement apparatus measures the position of the tool center point, and based on the position of the tool center point measured by the third measurement apparatus; and
the measurement control apparatus transmitting sixth position information indicating the transformed position of the tool center point, to a processing control apparatus configured to control a movement of the movable part.

103. A measurement method in a measurement system including: a first measurement apparatus that is configured to apply measurement light to a second reference member moving according to a position of a movable part of a processing apparatus configured to process a processing target, thereby measuring a position of a tool center point of the processing apparatus moving according to a movement of the movable part, and that is configured to apply measurement light to a measurement member attached to the movable part that is different from the position corresponding to the tool center point, thereby measuring a position of the measurement member; and a measurement control apparatus that is configured to control the first measurement apparatus,
the measurement method comprising:
the measurement control apparatus calculating position transformation information, based on the position of the tool center point measured by the first measurement apparatus using the measurement light applied to the second reference member when a positional relation between the position of the measurement member and the position of the second reference member is a predetermined relation, and based on the position of the measurement member measured by the first measurement apparatus using the measurement light applied to the measurement member; and
the measurement control apparatus transmitting, to a processing control apparatus configured to control the movement of the movable part, the position transformation information and third position information indicating the position of the measurement member measured by the first measurement apparatus using the measurement light applied to the measurement member when the positional relation is different from the predetermined relation.

104. A measurement method in a measurement system including: a first measurement apparatus that is configured to apply measurement light to a second reference member moving according to a position of a movable part of a processing apparatus configured to process a processing target, thereby measuring a position of a tool center point moving according to a movement of the movable part, and that is configured to apply measurement light to a measurement member attached to the movable part that is different from the position corresponding to the tool center point, thereby measuring a position of the measurement member; and a measurement control apparatus that is configured to control the first measurement apparatus,
the measurement method comprising:
the measurement control apparatus transforming the position of the measurement member measured by the first measurement apparatus using the measurement light applied to the measurement member when a positional relation between the position of the measurement member and a position of the second reference member and is not a predetermined relation, to a position of the tool center point, based on the position of the measurement member measured by the first measurement apparatus using the measurement light applied to the measurement member when the positional relation is the predetermined relation, and based on the position of the tool center point measured by the first measurement apparatus using the measurement light applied to the second reference member; and
the measurement control apparatus transmitting sixth position information indicating the transformed position of the tool center point, to a processing control apparatus configured to control the movement of the movable part.

105. A processing system comprising:
a processing apparatus that is configured to process a processing target;
a first measurement apparatus that is configured to apply measurement light to a measurement member attached to the processing apparatus, and that is configured to measure a position of the measurement member;
a measurement control apparatus that is configured to control the first measurement apparatus; and
a processing control apparatus that is configured to control a movement of the processing apparatus, wherein
the processing control apparatus includes a transmission unit that transmits, to the measurement control apparatus, first start position information indicating a first measurement start position that is a position at which the first measurement apparatus should start to measure the measurement member, and
the measurement control apparatus changes an emission direction of the measurement light such that the measurement light is applied toward the first measurement start position indicated by the first start position information.

106. A processing system comprising:
a processing apparatus that is configured to process a processing target;
a first measurement apparatus that is configured to apply measurement light to a measurement member attached to the processing apparatus, and that is configured to measure a position of the measurement member;
a measurement control apparatus that is configured to control the first measurement apparatus; and
a processing control apparatus that is configured to control a movement of the processing apparatus, wherein
the processing control apparatus includes a transmission unit that transmits, to the measurement control apparatus, a measurement start signal for causing the first measurement apparatus to start to measure the position of the measurement member, and
the measurement control apparatus controls the first measurement apparatus to start to emit the measurement light, based on the measurement start signal.

107. A processing system comprising:
a processing apparatus that is configured to process a processing target;
a first measurement apparatus that is configured to apply measurement light to a measurement member attached to the processing apparatus, and that is configured to measure a position of the measurement member;
a measurement control apparatus that is configured to control the first measurement apparatus; and
a processing control apparatus that is configured to control a movement of the processing apparatus, wherein
the processing control apparatus includes a transmission unit that transmits, to the measurement control apparatus, timing information indicating timing in which the first measurement apparatus starts to measure the position of the measurement member, and
the measurement control apparatus controls emission timing of the measurement light emitted from the first measurement apparatus, based on the timing information.

108. The processing system according to claim 106 or 107, wherein
the transmission unit further transmits, to the measurement control apparatus, first start position information indicating a first measurement start position that is a position at which the first measurement apparatus should start to measure the measurement member of the processing apparatus, and
the measurement control apparatus changes an emission direction of the measurement light such that the measurement light is applied toward the first measurement start position indicated by the first start position information.

109. The processing system according to claim 105, wherein the transmission unit further transmits, to the measurement control apparatus, a measurement start signal for causing the first measurement apparatus to start to measure the position of the measurement member.

110. The processing system according to claim 109, wherein the measurement control apparatus changes the emission direction of the measurement light such that the measurement light is applied toward the first measurement start position, after receiving the measurement start signal and before the position of the measurement member moving with the movement of the processing apparatus is located at the first measurement start position indicated by the first start position information.

111. The processing system according to claim 105, wherein the transmission unit further transmits, to the measurement control apparatus, timing information indicating timing in which the first measurement apparatus starts to measure the position of the measurement member.

112. The processing system according to claim 111, wherein the measurement control apparatus changes the emission direction of the measurement light such that the measurement light is applied toward the first measurement start position, after receiving the timing information and before the position of the measurement member moving with the movement of the processing apparatus is located at the first measurement start position indicated by the first start position information.

113. The processing system according to any one of claims 105 to 112, wherein a reflector configured to reflect the measurement light is disposed at a predetermined position with respect to a reference part of the processing apparatus.

114. The processing system according to claim 113, wherein the reference portion is a tool center point of the processing apparatus.

115. The processing system according to any one of claims 105 to 114, wherein a reflector module including at least three reflectors is disposed at a predetermined position with respect to a reference part of the processing apparatus.

116. The processing system according to any one of claims 105 to 115, wherein
the measurement control apparatus includes an estimation unit configured to estimate the position of the measurement member moving with the movement of the processing apparatus in operation of the processing apparatus, and
the measurement control apparatus changes a direction of the measurement light such that the measurement light is applied to the position of the measurement member estimated by the estimation unit.

117. The processing system according to any one of claims 105 to 115, wherein the first measurement apparatus includes a tracking apparatus configured to track the position of the measurement member moving with the movement of the processing apparatus in operation of the processing apparatus.

118. The processing system according to claim 116, wherein the first measurement apparatus includes a tracking apparatus configured to track the position of the measurement member moving with the movement of the processing apparatus in operation of the processing apparatus.

119. The processing system according to claim 118, wherein the estimation unit corrects the position of the measurement member, based on the estimated position of the measurement member and based on the position of the measurement member measured by the first measurement apparatus.

120. The processing system according to any one of claims 105 to 119, wherein the measurement member includes at least three reflectors configured to reflect the measurement light.

121. A measurement system comprising:
a first measurement apparatus that is configured to measure a position of a measurement member attached to a processing apparatus configured to process a processing target; and
a measurement control apparatus that is configured to control the first measurement apparatus, wherein
the measurement control apparatus includes:
an arithmetic unit that calculates position transformation information for transforming the position of the measurement member to a position of a tool center point of the processing apparatus, based on the position of the measurement member measured by the first measurement apparatus; and
a transmission unit that transmits the position transformation information to a processing control apparatus configured to control the processing apparatus.

122. A measurement system comprising:
a first measurement apparatus that is configured to measure a position of a measurement member attached to a processing apparatus configured to process a processing target; and
a measurement control apparatus that is configured to control the first measurement apparatus, wherein
the measurement control apparatus includes:
an arithmetic unit that transforms the position of the measurement member to a position of a tool center point of the processing apparatus, based on the position of the measurement member measured by the first measurement apparatus; and
a transmission unit that transmits sixth position information indicating the transformed position of the tool center point, to a processing control apparatus configured to control the processing apparatus.

123. A measurement system comprising:
a first measurement apparatus that is configured to measure a position of a measurement member attached to a processing apparatus configured to process a processing target; and
a measurement control apparatus that is configured to control the first measurement apparatus, wherein
the measurement control apparatus controls the first measurement apparatus, based on information about measurement by the first measurement apparatus transmitted from a processing control apparatus configured to control the processing apparatus.
